# EUROPEAN PATENT APPLICATION

(11) **EP 3 706 202 A1**
(43) Date of publication of application: **09.09.2020**
(21) Application number: 18871992.6
(22) Date of filing: 29.10.2018
(51) Int. Cl.: H01M 2/26, H01M 10/04, H01M 10/0587

(54) **BATTERY AND METHOD FOR MANUFACTURING BATTERY**

(30) Priority: 30.10.2017 JP 2017209741; 30.10.2017 JP 2017209740; 23.01.2018 JP 2018008802
(71) Applicant: Kabushiki Kaisha Toshiba, Minato-ku Tokyo 105-0023 (JP)
(72) Inventor: SHINODA, Tatsuya, Kawasaki-shi Kanagawa 212-0013 (JP); MURATA, Masahiro, Kawasaki-shi Kanagawa 212-0013 (JP); MAMYODA, Hirokiyo, Kawasaki-shi Kanagawa 212-0013 (JP); NEGISHI, Nobuyasu, Kawasaki-shi Kanagawa 212-0013 (JP)
(74) Representative: Hoffmann Eitle
(86) International application number: PCT/JP2018/040201
(87) International publication number: WO 2019/088053

(57) **Abstract**

According to an embodiment, an electrode assembly of a battery includes a casing, a terminal, an electrode assembly, a collector, and a joint. The joint joins laminated fringes of the electrode assembly. The collector includes a cut part including the fringes. The cut part includes the joint. The electrode assembly includes a turnback pair formed by folding back the electrodes from one of an extension pair to the other. The collector includes a connection electrically connected to the terminal, including part of the extension pair, and not including at least one of the turnback pair.

## Description

### TECHNICAL FIELD

Embodiments of the present invention relate generally to a battery and a manufacturing method of a battery.

### BACKGROUND ART

Conventionally, batteries are known, which include an electrode assembly including an electrode pair of a sheet-form and a separator located between the electrode pair, the electrode pair and the separator laminated and wound around; and a collector located in the electrode assembly including multiple parts of the electrodes placed on the top of each other.

### CITATION LIST

### Patent Literature

Patent Literature 1: Japanese Patent No. 4515373
Patent Literature 2: Japanese Laid-open Patent Application Publication No. 2013-37816
Patent Literature 3: Japanese Laid-open Patent Application Publication No. 2013-8559
Patent Literature 4: Japanese Laid-open Patent Application Publication No. 2015-141847

### SUMMARY OF INVENTION

### PROBLEM TO BE SOLVED BY THE INVENTION

It is preferable to provide such batteries of a new configuration with improved vibration resistance, for example.

### MEANS FOR SOLVING PROBLEM

According to one embodiment, a battery includes a casing, a terminal, an electrode assembly, a collector, and a joint. The terminal is supported by the casing. The electrode assembly is housed in the casing and includes an electrode pair of a sheet form having different polarities from each other and a separator located between the electrode pair, the electrode pair and the separator laminated and wound around an axis. The collector is located at an axial end of the electrode assembly, electrically connected to the terminal, and includes a plurality of collector tabs. The collector tabs are part of one of the electrodes and laminated on each other with no other electrode and no separator placed in-between. The joint joins fringes of the laminated collector tabs.

### BRIEF DESCRIPTION OF DRAWINGS

FIG. 1 is a schematic illustrative perspective view of a battery in a first embodiment;
FIG. 2 is a schematic illustrative front view of a cover assembly in the first embodiment;
FIG. 3 is a partial schematic illustrative perspective view of the cover assembly in the first embodiment;
FIG. 4 is a partial schematic illustrative perspective view of the cover assembly in the first embodiment as viewed from a line of sight different from that in FIG. 3;
FIG. 5 is a partial schematic illustrative plan view of the cover assembly in the first embodiment;
FIG. 6 is a partial schematic illustrative left-side view of the cover assembly in the first embodiment;
FIG. 7 is a partial schematic illustrative right-side view of the cover assembly in the first embodiment;
FIG. 8 is a schematic illustrative exploded perspective view of a base material of an electrode assembly in the first embodiment and illustrates the base material partially developed;
FIG. 9 is a schematic illustrative diagram of a collector in the first embodiment as viewed from a line of sight in the direction of the axis;
FIG. 10 is a partial schematic illustrative cross-sectional view of the electrode assembly in the first embodiment;
FIG. 11 is a partial schematic illustrative cross-sectional view of the electrode assembly in the first embodiment;
FIG. 12 is a partial schematic illustrative cross-sectional view of the electrode assembly in the first embodiment;
FIG. 13 is a schematic illustrative perspective view of the electrode assembly during a manufacturing process in the first embodiment;
FIG. 14 is a schematic illustrative front view of the electrode assembly during a manufacturing process in the first embodiment;
FIG. 15 is a schematic illustrative plan view of the electrode assembly during a manufacturing process in the first embodiment;
FIG. 16 is a schematic illustrative side view of the electrode assembly during a manufacturing process in the first embodiment;
FIG. 17 is a schematic illustrative perspective view of the electrode assembly during a manufacturing process in the first embodiment;
FIG. 18 is a schematic illustrative front view of the electrode assembly during a manufacturing process in the first embodiment;
FIG. 19 is a schematic illustrative perspective view of the electrode assembly during a manufacturing process in the first embodiment;
FIG. 20 is a schematic illustrative front view of the electrode assembly during a manufacturing process in the first embodiment;
FIG. 21 is a schematic illustrative perspective view of the electrode assembly during a manufacturing process in the first embodiment;
FIG. 22 is a schematic illustrative front view of the electrode assembly during a manufacturing process in the first embodiment;
FIG. 23 is a schematic illustrative perspective view of the electrode assembly during a manufacturing process in a second embodiment;
FIG. 24 is a schematic illustrative front view of the electrode assembly during a manufacturing process in the second embodiment;
FIG. 25 is a partial schematic illustrative perspective view of the cover assembly in a third embodiment;
FIG. 26 is a partial schematic illustrative perspective view of the cover assembly in the third embodiment as viewed from a line of sight different from that in FIG. 25;
FIG. 27 is a partial schematic illustrative front view of the cover assembly in the third embodiment;
FIG. 28 is a partial schematic illustrative plan view of the cover assembly in the third embodiment;
FIG. 29 is a partial schematic illustrative left-side view of the cover assembly in the third embodiment;
FIG. 30 is a partial schematic illustrative right-side view of the cover assembly in the third embodiment;
FIG. 31 is a schematic illustrative perspective view of the electrode assembly during a manufacturing process in the third embodiment;
FIG. 32 is a schematic illustrative front view of the electrode assembly during a manufacturing process in the third embodiment;
FIG. 33 is a schematic illustrative perspective view of the electrode assembly during a manufacturing process in the third embodiment;
FIG. 34 is a schematic illustrative front view of the electrode assembly during a manufacturing process in the third embodiment;
FIG. 35 is a partial schematic illustrative perspective view of the cover assembly in a fourth embodiment;
FIG. 36 is a partial schematic illustrative perspective view of the cover assembly in the fourth embodiment as viewed from a line of sight different from that in FIG. 35;
FIG. 37 is a partial schematic illustrative front view of the cover assembly in the fourth embodiment;
FIG. 38 is a partial schematic illustrative plan view of the cover assembly in the fourth embodiment;
FIG. 39 is a partial schematic illustrative left-side view of the cover assembly in the fourth embodiment;
FIG. 40 is a schematic illustrative perspective view of the electrode assembly during a manufacturing process in the fourth embodiment;
FIG. 41 is a schematic illustrative front view of the electrode assembly during a manufacturing process in the fourth embodiment;
FIG. 42 is a schematic illustrative perspective view of the electrode assembly during a manufacturing process in a fifth embodiment;
FIG. 43 is a schematic illustrative front view of the electrode assembly during a manufacturing process in the fifth embodiment;
FIG. 44 is a schematic illustrative perspective view of the electrode assembly during a manufacturing process in a sixth embodiment;
FIG. 45 is a schematic illustrative front view of the electrode assembly during a manufacturing process in the sixth embodiment;
FIG. 46 is a schematic illustrative perspective view of the electrode assembly during a manufacturing process in a seventh embodiment;
FIG. 47 is a schematic illustrative front view of the electrode assembly during a manufacturing process in the seventh embodiment;
FIG. 48 is a schematic illustrative front view of the electrode assembly during a manufacturing process in an eighth embodiment;
FIG. 49 is a schematic illustrative perspective view of the electrode assembly during a manufacturing process in a ninth embodiment;
FIG. 50 is a schematic illustrative front view of the electrode assembly during a manufacturing process in the ninth embodiment;
FIG. 51 is a schematic illustrative perspective view of the electrode assembly during a manufacturing process in a tenth embodiment;
FIG. 52 is a schematic illustrative front view of the electrode assembly during a manufacturing process in the tenth embodiment;
FIG. 53 is a schematic illustrative perspective view of the electrode assembly during a manufacturing process in an eleventh embodiment;
FIG. 54 is a schematic illustrative rear view of the electrode assembly during a manufacturing process in the eleventh embodiment;
FIG. 55 is a schematic illustrative plan view of the electrode assembly during a manufacturing process in the eleventh embodiment;
FIG. 56 is a schematic illustrative perspective view of the electrode assembly during a manufacturing process in a twelfth embodiment;
FIG. 57 is a schematic illustrative plan view of the electrode assembly during a manufacturing process in the twelfth embodiment;
FIG. 58 is a schematic illustrative perspective view of the electrode assembly during a manufacturing process in a thirteenth embodiment;
FIG. 59 is a schematic illustrative front view of the electrode assembly during a manufacturing process in the thirteenth embodiment;
FIG. 60 is a schematic illustrative plan view of the electrode assembly during a manufacturing process in the thirteenth embodiment;
FIG. 61 is a schematic illustrative perspective view of the electrode assembly during a manufacturing process in a fourteenth embodiment;
FIG. 62 is a schematic illustrative front view of the electrode assembly during a manufacturing process in the fourteenth embodiment;
FIG. 63 is a schematic illustrative plan view of the electrode assembly during a manufacturing process in the fourteenth embodiment;
FIG. 64 is a schematic illustrative perspective view of the electrode assembly during a manufacturing process in a fifteenth embodiment;
FIG. 65 is a schematic illustrative front view of the electrode assembly during a manufacturing process in the fifteenth embodiment;
FIG. 66 is a schematic illustrative plan view of the electrode assembly during a manufacturing process in the fifteenth embodiment;
FIG. 67 is a schematic illustrative perspective view of the electrode assembly during a manufacturing process in a sixteenth embodiment;
FIG. 68 is a schematic illustrative front view of the electrode assembly during a manufacturing process in the sixteenth embodiment;
FIG. 69 is a schematic illustrative front view of the electrode assembly during a manufacturing process in a seventeenth embodiment;
FIG. 70 is a schematic illustrative perspective view of a part including the electrode assembly of the battery in an eighteenth embodiment;
FIG. 71 is a schematic illustrative plan view of the electrode assembly during a manufacturing process in a nineteenth embodiment;
FIG. 72 is a schematic illustrative plan view of the electrode assembly during a manufacturing process in a twentieth embodiment;
FIG. 73 is a schematic illustrative perspective view of the electrode assembly during a manufacturing process in a twenty-first embodiment;
FIG. 74 is a schematic illustrative plan view of the electrode assembly during a manufacturing process in the twenty-first embodiment;
FIG. 75 is a schematic illustrative front view of the cover assembly in a twenty-second embodiment;
FIG. 76 is a schematic illustrative side view of the cover assembly in the twenty-second embodiment;
FIG. 77 is a schematic illustrative exploded perspective view of the cover assembly in the twenty-second embodiment;
FIG. 78 is a partial schematic illustrative side view of the cover assembly in the twenty-second embodiment;
FIG. 79 is a schematic illustrative perspective view of the electrode assembly during a manufacturing process in the twenty-second embodiment;
FIG. 80 is a diagram for explaining a manufacturing method of a battery in the twenty-second embodiment;
FIG. 81 is a schematic illustrative exploded front view of the cover assembly in the battery in a twenty-third embodiment;
FIG. 82 is a partial schematic illustrative side view of the cover assembly in the twenty-third embodiment;
FIG. 83 is a diagram for explaining a manufacturing method of a battery in the twenty-third embodiment;
FIG. 84 is a schematic illustrative exploded perspective view of the cover assembly of the battery in a twenty-fourth embodiment;
FIG. 85 is a schematic illustrative cross-sectional view of the battery in a twenty-fifth embodiment;
FIG. 86 is a schematic illustrative perspective view of the cover assembly in the twenty-fifth embodiment;
FIG. 87 is a partial schematic illustrative exploded perspective view of the cover assembly in the twenty-fifth embodiment;
FIG. 88 is a schematic illustrative exploded perspective view of the base material of the electrode assembly in the twenty-fifth embodiment and illustrates the base material partially developed;
FIG. 89 is a schematic illustrative exploded perspective view of the electrode assembly in the twenty-fifth embodiment and illustrates a state before the connection of the collector is folded;
FIG. 90 is a diagram for explaining a manufacturing method of a battery in the twenty-fifth embodiment;
FIG. 91 is a diagram for explaining the battery in the twenty-fifth embodiment;
FIG. 92 is a diagram for explaining the battery in the twenty-fifth embodiment;
FIG. 93 is a diagram for explaining the battery in the twenty-fifth embodiment;
FIG. 94 is a diagram for explaining the battery in the twenty-fifth embodiment;
FIG. 95 is a diagram for explaining the battery in the twenty-fifth embodiment;
FIG. 96 is a schematic illustrative cross-sectional view of the electrode assembly of the battery in a twenty-sixth embodiment and illustrates a state before the connection of the collector is folded;
FIG. 97 is a schematic illustrative cross-sectional view of the electrode assembly of the battery in a twenty-seventh embodiment and illustrates a state before the connection of the collector is folded;
FIG. 98 is a schematic illustrative plan view of the electrode assembly of the battery in the twenty-seventh embodiment and illustrates a state before the connection of the collector is folded;
FIG. 99 is a schematic illustrative front view of the electrode assembly of the battery in a twenty-eighth embodiment;
FIG. 100 is a schematic illustrative side view of the electrode assembly of the battery in the twenty-eighth embodiment;
FIG. 101 is a schematic illustrative front view of the electrode assembly of the battery in a twenty-ninth embodiment;
FIG. 102 is a schematic illustrative side view of the electrode assembly of the battery in the twenty-ninth embodiment;
FIG. 103 is a schematic illustrative front view of the electrode assembly of the battery in a thirtieth embodiment; and
FIG. 104 is a schematic illustrative side view of the electrode assembly of the battery in the thirtieth embodiment.

### DETAILED DESCRIPTION

Embodiments will be described below with reference to the drawings. Exemplary embodiments below include same or similar elements. Hereinafter, same or similar elements are denoted by common reference numerals and an overlapping description thereof is omitted.

In the respective drawings, directions are defined for the sake of convenience. X direction is along the short side (thickness) of a casing 20 of a battery 10, Y direction is along the long side (width) of the casing 20, and Z direction is along the vertical side (height) of the casing 20. The X direction, the Y direction, and the Z direction are orthogonal to one another. In the following, the extending direction of an axis Ax is simply referred to as axial direction. In this specification, ordinal numbers are assigned for the sake of distinguishing members (or parts) and locations and are not intended to indicate priority or order.

The elements (technical features) of the following embodiments and the operation and effects achieved by the elements are merely exemplary. The present invention can be implemented by other elements than the elements disclosed below and can attain at least one of various effects attained by basic elements.

### <First Embodiment>

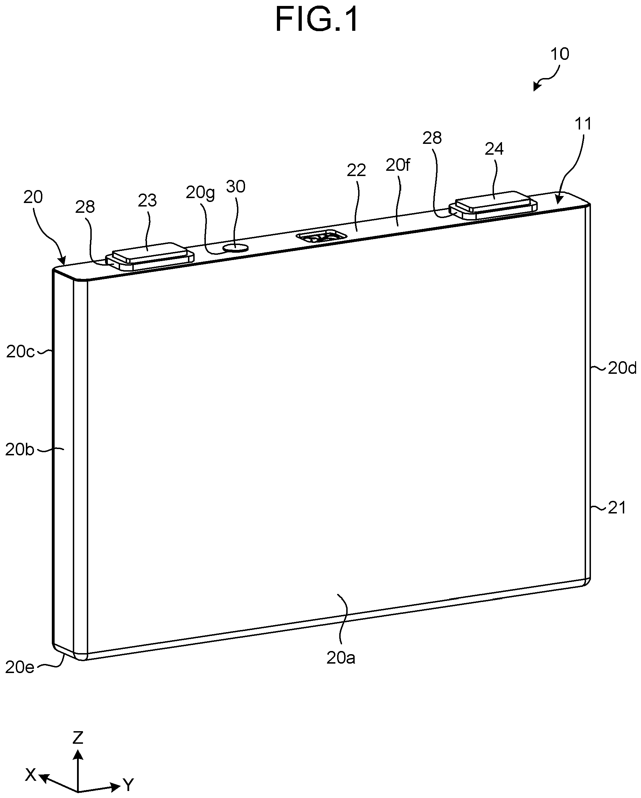

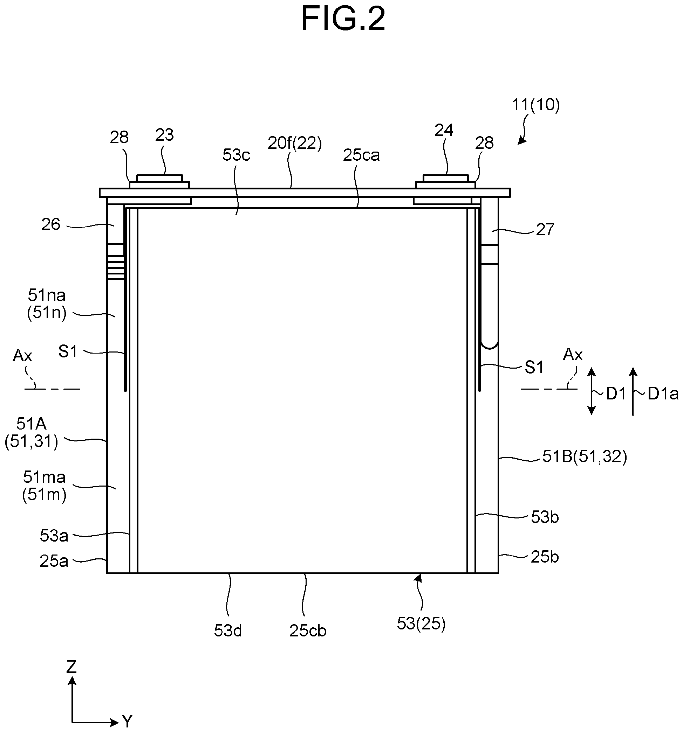

FIG. 1 is a schematic illustrative perspective view of a battery 10 in a first embodiment. FIG. 2 is a schematic illustrative front view of a cover assembly 11 in the first embodiment. As illustrated in FIGS. 1 and 2, the battery 10 includes a casing 20, a positive electrode terminal 23, a negative electrode terminal 24, an electrode assembly 25, a positive electrode lead 26, and a negative electrode lead 27. The battery 10 represents, for example, a lithium-ion secondary battery. The positive electrode terminal 23 and the negative electrode terminal 24 are exposed to the outside of the casing 20 and supported by the casing 20. The electrode assembly 25, the positive electrode lead 26, and the negative electrode lead 27 are housed in the casing 20. The positive electrode terminal 23 and the negative electrode terminal 24 are exemplary terminals. The positive electrode lead 26 and the negative electrode lead 27 are exemplary leads. The positive electrode terminal 23 and the negative electrode terminal 24 are also referred to as an electrode terminal.

### [Casing 20]

As illustrated in FIG. 1, the casing 20 has a flat, thin rectangular parallelepiped shape in the X direction. The casing 20 includes a plurality of walls 20a to 20f. Both of the wall 20a and the wall 20c extend in a direction (in the present embodiment, for example, orthogonal direction, YZ plane) intersecting the thickness (X direction) of the casing 20. The wall 20a and the wall 20c are spaced apart from each other in parallel along the thickness (X direction) of the casing 20. Both of the wall 20b and the wall 20d extend in a direction (in the present embodiment, for example, orthogonal direction, XZ plane) intersecting the width (Y direction) of the casing 20. The wall 20b and the wall 20d are spaced apart from each other in parallel along the width (Y direction) of the casing 20. The walls 20a to 20d are also referred to as sidewalls, for example. The walls 20a and 20c are exemplary long sides of the sidewalls, and the walls 20b and 20d are exemplary short sides of the sidewalls. Both of the wall 20e and the wall 20f extend in a direction (in the present embodiment, for example, orthogonal direction, XY plane) intersecting the vertical direction (Z direction) in the casing 20. The wall 20e and the wall 20f are spaced apart from each other in parallel in the vertical direction (Z direction) in the casing 20. The wall 20e is also referred to as a lower wall or a bottom wall, for example. The wall 20f is also referred to as an upper wall or a top wall, for example. The casing 20 is also referred to as an outer casing or a case.

As illustrated in FIGS. 1 and 2, the casing 20 may be an assembly of a plurality of parts (divided elements). Specifically, in the present embodiment, the casing 20 includes an accommodating member 21 including at least the walls 20a to 20e and a cover member 22 including at least the wall 20f. Inside the accommodating member 21 is a hollow to accommodate the electrode assembly 25, the positive electrode lead 26, and the negative electrode lead 27. That is, the accommodating member 21 has a rectangular parallelepiped box shape with an opening at one end (top end). The cover member 22 has a quadrangular (rectangular) plate shape and is coupled (joined) to the accommodating member 21 with the opening of the accommodating member 21 closed. The accommodating member 21 and the cover member 22 are coupled together in an air-tight and liquid-tight manner, for example, by welding. The accommodating member 21 and the cover member 22 are formed of, for example, a metal material (such as aluminum, aluminum alloy, stainless steel). An insulating member may be attached to the inner surface of the walls 20a to 20e, to insulate the accommodating member 21 from the elements inside, such as the positive electrode lead 26 and the negative electrode lead 27. The insulating member may include, for example, an insulating sheet or a molded product. The accommodating member 21 and the cover member 22 are also referred to as a casing member.

### [Cover Assembly 11]

As illustrated in FIG. 2, the positive electrode terminal 23, the negative electrode terminal 24, the electrode assembly 25, the positive electrode lead 26, and the negative electrode lead 27 are attached to the cover member 22. The cover member 22, the positive electrode terminal 23, the negative electrode terminal 24, the electrode assembly 25, the positive electrode lead 26, and the negative electrode lead 27 constitute a cover assembly 11.

### [Positive Electrode Terminal 23, Negative Electrode Terminal 24, and Seal Member 28]

As illustrated in FIGS. 1 and 2, the positive electrode terminal 23 and the negative electrode terminal 24 are attached to the cover member 22 (wall 20f). Specifically, the positive electrode terminal 23 is located at one longitudinal end of the cover member 22 (Y direction, along the width of the casing 20). The negative electrode terminal 24 is located on the other longitudinal end of the cover member 22 (Y direction, along the width of the casing 20). The positive electrode terminal 23 is supported by the wall 20f (casing 20), passing through the wall 20f, and is coupled to the positive electrode lead 26 inside the casing 20. That is, the positive electrode terminal 23 is electrically connected to the positive electrode lead 26. The negative electrode terminal 24 is supported by the wall 20f (casing 20), passing through the wall 20f, and is coupled to the negative electrode lead 27 inside the wall 20f (casing 20). That is, the negative electrode terminal 24 is electrically connected to the negative electrode lead 27.

Seal members 28 (gasket, interposer) extend between the positive electrode terminal 23 and the wall 20f and between the negative electrode terminal 24 and the wall 20f. The seal members 28 are formed of an insulator such as a synthetic resin material and glass. The seal members 28 air-tightly and liquid-tightly seal in-between the wall 20f, and the positive electrode terminal 23 and the negative electrode terminal 24 for electrical insulation. The wall 20f is provided with a liquid inlet 20g (through hole) in-between the positive electrode terminal 23 and the negative electrode terminal 24. An electrolyte is injected into the casing 20 through the liquid inlet 20g. The liquid inlet is closed with a cover 30.

### [Electrode Assembly 25]

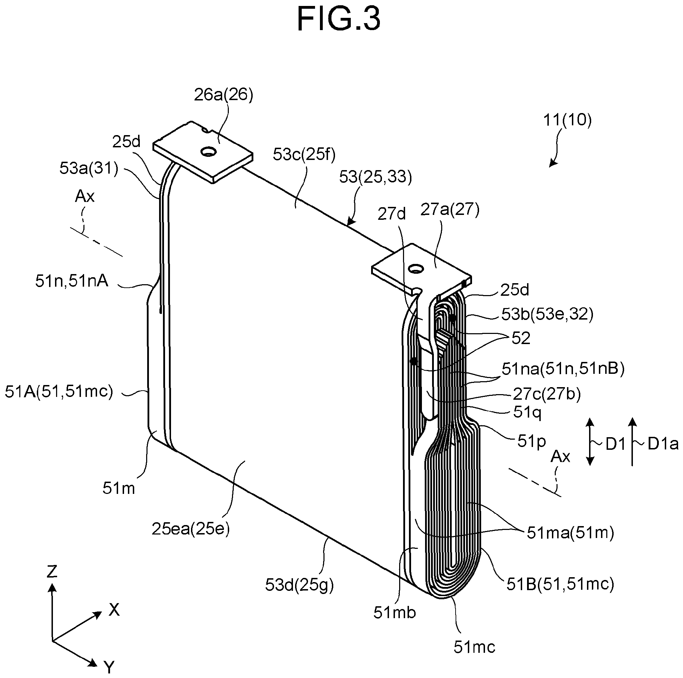

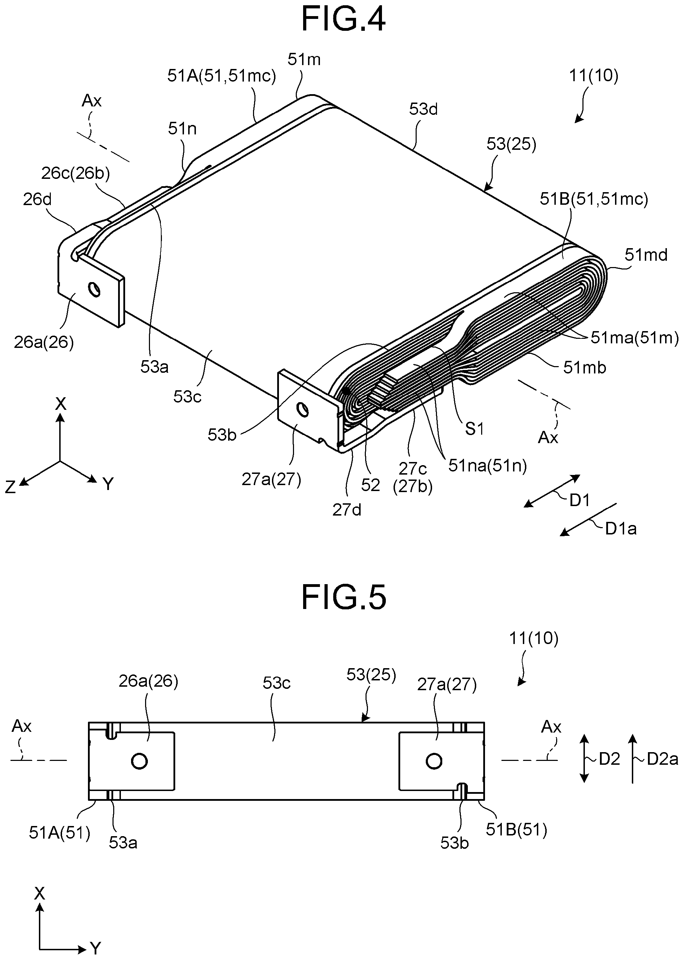

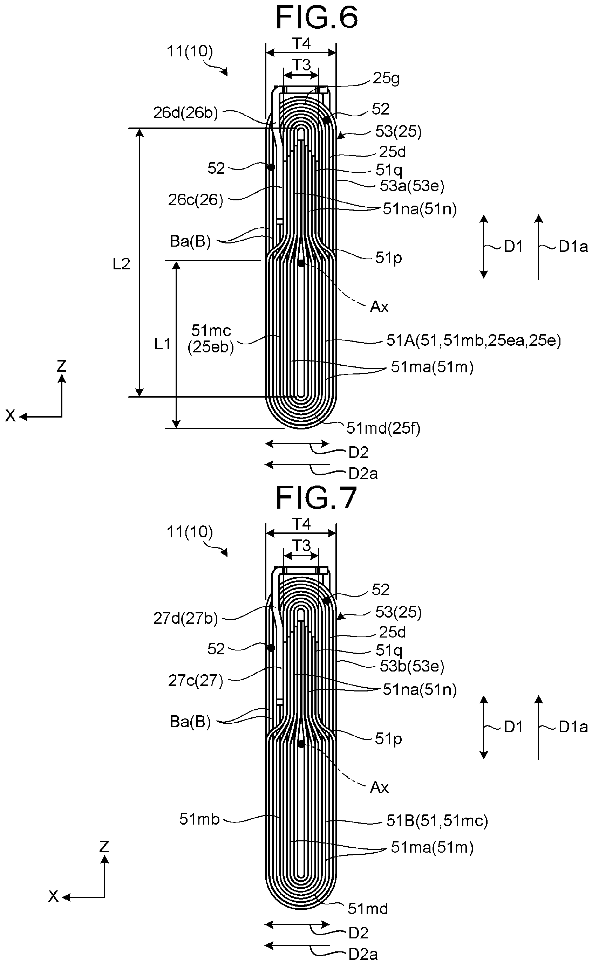

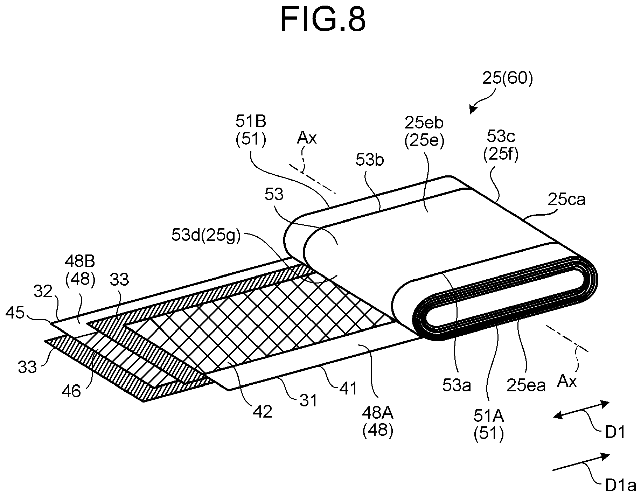

FIG. 3 is a partial schematic illustrative perspective view of the cover assembly 11 in the first embodiment. FIG. 4 is a partial schematic illustrative perspective view of the cover assembly 11 in the first embodiment as viewed from a line of sight different from that in FIG. 3. FIG. 5 is a partial schematic illustrative plan view of the cover assembly 11 in the first embodiment. FIG. 6 is a partial schematic illustrative left-side view of the cover assembly 11 in the first embodiment. FIG. 7 is a partial schematic illustrative right-side view of the cover assembly 11 in the first embodiment. FIG. 8 is a schematic illustrative exploded perspective view of a base material 60 of the electrode assembly 25 in the first embodiment, with the base material 60 partially expanded.

As illustrated in FIGS. 3 to 7, the electrode assembly 25 is made of the base material 60. That is, the base material 60 includes the electrode assembly 25. The electrode assembly 25 (base material 60) includes a positive electrode of a sheet form 31, a negative electrode of a sheet form 32, and a plurality of separators of a sheet form 33. The electrode assembly 25 functions as a power generator element.

In the electrode assembly 25 the positive electrode 31, the negative electrode 32, and the separators 33 extending between the positive electrode 31 and the negative electrode 32 are placed on the top of each other and wound around, and the electrode assembly 25 has a flat appearance. That is, the positive electrode 31 and the negative electrode 32 are laminated with the separator 33 in-between them. The number of windings of the positive electrode 31, the negative electrode 32, and the separators 33 are, for example, 38. The number of windings of the positive electrode 31, the negative electrode 32, and the separators 33 are not limited to 38. The positive electrode 31 and the negative electrode 32 are separated from each other by the separator 33. The positive electrode 31 is located between two separators 33. The electrode assembly 25 has axial ends 25a and 25b and opposite ends 25ca and 25cb in a first intersecting direction D1 intersecting (orthogonal to) the axial direction. The first intersecting direction D1 is parallel to the top to bottom (Z direction) of the casing 20. Hereinafter, an upward first intersecting direction D1 is also referred to as a first direction D1a. The first direction D1a is along the top to bottom (Z direction) of the casing 20. In other words, the first direction D1a is parallel to the first intersecting direction D1. The end 25ca is an end of the electrode assembly 25in the first direction D1a, and the end 25cb is an end thereof in a direction opposite to the first direction D1a.

The positive electrode 31, the negative electrode 32, and the separators 33 are laminated, spirally wound around the axis Ax, and pressed into a flat form, thereby forming the electrode assembly 25. The electrode assembly 25 is accommodated in the casing 20 in such a posture that the axis Ax is along the width (Y direction) of the casing 20. That is, the direction of the axis Ax is along the width (Y direction) of the casing 20. The axis Ax is also referred to as a center line or winding center line.

Specifically, the electrode assembly 25 includes a flat winding 53 and collectors 51 at opposite ends 53a and 53b along the axis Ax of the winding 53. The collector 51 located at one end 53a of the winding 53 is a positive collector 51A, and the collector 51 located at the other end 53b of the winding 53 is a negative collector 51B. The electrode assembly 25 is made of a plurality of members. Specifically, as illustrated in FIG. 8, the electrode assembly 25 includes the sheet-like positive electrode 31, the sheet-like negative electrode 32, and a plurality of sheet-like separators 33. In FIG. 8, the separator 33 is indicated by hatching for the sake of better understanding. The electrode assembly 25 functions as a power generator element. The positive electrode 31 and the negative electrode 32 are an exemplary electrode pair having different polarities from each other. The electrode assembly 25 is also referred to as an electrode group or a wound element.

As illustrated in FIGS. 3 and 8, the winding 53 is a spirally wound element of the positive electrode 31, the negative electrode 32, and the separator 33 placed between the positive electrode 31 and the negative electrode 32 around the axis Ax. That is, the positive electrode 31 and the negative electrode 32 are laminated, placing the separator 33 in--between. In the winding 53, at least one of the positive electrode 31 and the negative electrode 32 is spirally wound around the axis Ax. The positive electrode 31 and the negative electrode 32 are separated from each other through the separator 33. The positive electrode 31 is located between two separators 33. The electrode assembly 25 (winding 53) is housed in the casing 20 in such a posture that the axis Ax is along the width (Y direction) of the casing 20. That is, the direction of the axis Ax is along the width (Y direction) of the casing 20.

As illustrated in FIGS. 1, 3, and 4, the winding 53 has opposite ends 53a and 53b in the axial direction and opposite ends 53c and 53d in the first intersecting direction D1 intersecting (orthogonal to) the axial direction. The end 53c is an upside (top) end of the winding 53 in the first intersecting direction D1, that is, in the first direction D1a. The end 53d is a downside (bottom) end of the wounding 53 in the first intersecting direction D1, that is, in the opposite direction to the first direction D1a. The end 53a is covered with the wall 20b of the casing 20, the end 53b is covered with the wall 20d of the casing 20, the end 53c is covered with the wall 20f of the casing 20, and the end 53d is covered with the wall 20e of the casing 20. In the present embodiment, as an example, the winding 53 does not include the separator 33 in at least a part including an axial end surface of the opposite ends 53a and 53b.

As illustrated in FIGS. 3, 4, 6, and 7, each collector 51 includes a base group 51m and a collector-tab group 51n extending from the base group 51m. A pair of collector-tab groups 51n is a collector-tab group 51nA and a collector-tab group 51nB.

The base group 51m includes a plurality of bases 51ma placed on the top of each other. The bases 51ma of the base group 51m of the positive collector 51A are a part of the positive electrode 31, extending axially from the end 53a of the winding 53. The bases 51ma of the base group 51m of the negative collector 51B are a part of the negative electrode 32, extending axially from the end 53b of the winding 53. That is, the bases 51ma of the base group 51m of the positive collector 51A and the bases 51ma of the base group 51m of the negative collector 51B extend in the opposite directions from the winding 53.

Each base 51ma is a turnback of the positive electrode 31 or the negative electrode 32. That is, the bases 51ma of the positive collector 51A and the negative collector 51B are U-shaped, and the base groups 51m are also U-shaped. Specifically, the base group 51m includes an extension pair 51mb and 51mc in which the positive electrode 31 or the negative electrode 32 extends in the first intersecting direction D1 and a turnback 51md. The extension pair 51mb and 51mc are aligned in a second intersecting direction D2 intersecting (orthogonal to) the axial direction and the first intersecting direction D1. The second intersecting direction D2 is parallel to the X direction. Hereinafter, the second intersecting direction D2 is also referred to as a second direction D2a. The second direction D2a is parallel to the X direction. In other words, the second direction D2a is parallel to the second intersecting direction D2. The second direction D2a intersects (is orthogonal to) the axial direction and the first direction D1a. The turnback 51md connects the ends (bottom ends) of the extension pair 51mb and 51mc in the opposite direction to the Z direction. In the turnback 51md, the positive electrode 31 or the negative electrode 32 is folded back from one of the extension pair 51mb and 51mc to the other. The turnback 51md is also referred to as an R-shaped part.

The collector-tab group 51n includes a plurality of collector tabs 51na placed on the top of each other. The collector tabs 51na of the positive collector 51A are part of the positive electrode 31. The collector tabs 51na of the positive collector 51A extend in the first intersecting direction D1 (to the end 53c of the winding 53), that is, in the first direction D1a from the bases 51ma of the extension pair 51mb and 51mc in the base group 51m of the positive collector 51A. The collector tabs 51na of the collector-tab group 51n of the negative collector 51B are part of the negative electrode 32. The collector tabs 51na of the negative collector 51B extend in the first intersecting direction D1 (to the end 53c of the winding 53), that is, in the first direction D1a from the bases 51ma of the extension pair 51mb and 51mc in the base group 51m of the negative collector 51B. That is, the collector tabs 51na of the positive collector 51A and the collector tabs 51na of the negative collector 51B extend in the same direction from the bases 51ma.

As illustrated in FIG. 2 and other drawings, there is a slit S1 between the collector tabs 51na of each collector-tab group 51n and the ends 53a and 53b of the winding 53 to separate the collector tabs 51na from the winding 53. In FIG. 2 and other drawings, the slit S1 is depicted by a line for the sake of convenience. In the present embodiment, as an example, the slit S1 works to separate all of the collector tabs 51na of the collector-tab group 51n from the winding 53. The collector-tab group 51n axially faces the end 53a and 53b of the winding 53.

As illustrated in FIGS. 3, 6, and 7, the collector-tab group 51n includes a width-varying part 51p connected to the base group 51m and a collector connection 51q connected to the width-varying part 51p. The width-varying part 51p extends in the first intersecting direction D1 (first direction D1a) from the extension pair 51mb and 51mc of the base group 51m. In the second intersecting direction D2 intersecting the axial direction and the first intersecting direction D1, the width-varying part 51p decreases in width from the extension pair 51mb and 51mc toward the tip end of the collector-tab group 51n.

As illustrated in FIGS. 6 and 7, the collector connection 51q extends in the first intersecting direction D1 from the end of the width-varying part 51p opposite to the base group 51m. In the second intersecting direction D2 the maximum width T3 (width) of the collector connection 51q is smaller than the maximum width T4 of the winding 53. In the axial direction, the collector connection 51q is located inside an outer periphery 53e of the winding 53. In the collector connection 51q, the collector tabs 51na are joined together. The collector connection 51q is juxtaposed to and electrically connected to the positive electrode lead 26 or the negative electrode lead 27 in the second intersecting direction D2. The collector connection 51q is joined (welded) to the positive electrode lead 26 or the negative electrode lead 27, for example, by ultrasonic welding.

As illustrated in FIG. 6, in each collector 51, the length L1 of the part connected to the winding 53, that is, the base group 51m is, for example, 10% or more of the length L2 of the innermost periphery of the winding 53 in the first intersecting direction D1.

The number of the bases 51ma and the collector tabs 51na is equal to or greater than the number of windings of the positive electrode 31 (negative electrode 32) of the winding 53. For example, when the number of windings of the positive electrode 31 (negative electrode 32) of the winding 53 is 38, the number of the bases 51ma and the collector tabs 51na is, for example, 76, that is, twice 38.

As illustrated in FIGS. 3, 6, and 8, the electrode assembly 25 includes a substrate 25e and a turnback pair 25f and 25g. The substrate 25e and the turnback pair 25f and 25g each include the positive electrode 31, the negative electrode 32, and the separator 33. The substrate 25e includes the extension pair 25ea and 25eb of the positive electrode 31, the negative electrode 32, and the separator 33 in the first intersecting direction D1. Each of the extension pair 25ea and 25eb extends between opposite ends 53c and 53d of the winding 53 in the first intersecting direction D1 (between opposite ends 25ca and 25cb of the electrode assembly 25 in the first intersecting direction D1). The axis Ax is located between the extension pair 25ea and 25eb. In each of the extension pair 25ea and 25eb, the positive electrode 31, the negative electrode 32, and the separator 33 extend in the first intersecting direction D1, and are not folded back. The substrate 25e is also referred to as a linear part or an intermediate part, and the turnbacks 25f and 25g are also referred to as an R-shaped part.

The turnback pair 25f and 25g is located at opposite ends 53c and 53d of the winding 53 in the first intersecting direction D1 (opposite ends 25ca and 25cb of the electrode assembly 25 in the first intersecting direction D1). In each of the turnbacks 25f and 25g, the positive electrode 31, the negative electrode 32, and the separator 33 are folded back from one of the extension pair 25ea and 25eb to the other. That is, the turnback pair 25f and 25g is connected to opposite ends of the substrate 25e in the first intersecting direction D1 (the end in the first direction D1a and the end in the opposite direction to the first direction D1a). The turnback pair 25f and 25g is connected via the substrate 25e. That is, the substrate 25e extends between the turnback pair 25f and 25g.

In the present embodiment, the winding 53 includes part of the substrate 25e, the turnback 25f, and part of the turnback 25g, and the collector 51 includes another part of the substrate 25e and another part of the turnback 25g. Specifically, another part of the substrate 25e constitutes the extension pair 51mb and 51mc of the collector 51, and another part of the turnback 25g constitutes the turnback 51md of the collector 51. As is understood from above, in the present embodiment, the positive electrode 31 and the negative electrode 32 are folded back at a part other than the collector-tab group 51n in the electrode assembly 25. That is, each collector-tab group 51n (collector tabs 51na) is not folded back.

As illustrated in FIGS. 3, 6, and 7, the electrode assembly 25 includes cut parts 25d. The cut parts 25d are located at the ends 53a and 53b of the winding 53 and the collectors 51 (collector-tab group 51n). The cut parts 25d are formed by melting and cutting a given removal part of the collector 51 in the base material 60 (FIG. 8) of the electrode assembly 25, for example, by irradiation of laser light during the manufacturing of the electrode assembly 25. The cut parts 25d are also referred to as cut locations or cut surfaces.

### [Positive Electrode 31 and Negative Electrode 32]

As illustrated in FIG. 8, the positive electrode 31 includes a positive collector 41 and a positive active-material-containing layer 42. In FIG. 8, for the sake of better understanding, the positive active-material-containing layer 42 is indicated by hatching. The positive collector 41 is an exemplary collector, and the positive active-material-containing layer 42 is an exemplary active material-containing layer. The positive collector 41 is also referred to as a substrate, a sheet, or a conductor.

The positive collector 41 is formed of a metal foil such as an aluminum foil or an aluminum alloy. That is, the positive collector 41 contains aluminum. The positive collector 41 is of an approximately rectangular (quadrangular) sheet (strip) form. The positive collector 41 may be formed of any other material or may have any other shape.

The positive active-material-containing layer 42 is placed on both surfaces (front surface and back surface) of the positive collector 41. The positive active-material-containing layer 42 may be placed on either surface of the positive collector 41. The positive active-material-containing layer 42 partially covers both surfaces of the positive collector 41. That is, the positive active-material-containing layer 42 is laminated on part of the positive collector 41. In the lengthwise direction, the positive active-material-containing layer 42 is substantially the same in length as the positive collector 41. In the lateral direction the positive active-material-containing layer 42 is shorter in length (width) than the positive collector 41.

The positive collector 41 includes a positive non-layered part 48A. The positive non-layered part 48A corresponds to part of the positive collector 41 on which the positive active-material-containing layer 42 is not laminated. The positive non-layered part 48A is located at one width end of the strip-like positive collector 41. The other width end of the positive collector 41 is covered with the positive active-material-containing layer 42. The positive non-layered part 48A extends in parallel to the positive collector 41 and the positive active-material-containing layer 42. The positive non-layered part 48A is an exemplary non-layered part. The positive non-layered part 48A is also referred to as a non-coated part.

The positive active-material-containing layer 42 contains a positive electrode active material, a conductive agent, and a binder (binding agent). The positive active-material-containing layer 42 is formed by, for example, suspending a positive electrode active material, a conductive agent, and a binder in a solvent and applying, drying, and pressing the suspension (slurry) on the positive collector 41.

The positive electrode active material represents, for example, a variety of oxides or sulfides. Examples of the positive electrode active material includes manganese dioxide (MnO₂), iron oxide, copper oxide, nickel oxide, a lithium manganese composite oxide (such as LiₓMn₂O₄ or LiₓMnO₂), a lithium nickel composite oxide (such as LiₓNiO₂), a lithium cobalt composite oxide (LiₓCoO₂), a lithium nickel cobalt composite oxide (for example, LiₓNi_{1-y-z}Co_{y}M_{z}O₂ where M is at least one of Al, Cr, and Fe group and 0 ≤ y ≤ 0.5, 0 ≤ z ≤ 0.1), a lithium nickel cobalt manganese composite oxide (for example, LiₐNiₓCo_{y}Mn_{z}O₂ where 0.7 ≤ a ≤ 1.3, 0 ≤ x ≤ 1, 0 ≤ y ≤ 1, 0 ≤ z ≤ 1), a lithium manganese cobalt composite oxide (such as LiₓMn_{1-y-z}Co_{y}M_{z}O₂ where M is at least one of a Al, Cr, and Fe group where 0 ≤ y ≤ 0.5, 0 ≤ z ≤ 0.1), a lithium manganese nickel composite compound (for example, LiₓMn_{y}Ni_{y}M_{1-2y}O₂ such as LiₓMn_{1/3}Ni_{1/3}Co_{1/3}O₂ and LiₓMn_{1/2}Ni_{1/2}O₂ where M is at least one of a Co, Cr, Al, and Fe group and 1/3 ≤ y ≤ 1/2), a spinel-type lithium manganese nickel composite oxide (for example, LiₓMn_{2-y}Ni_{y}O₄), a lithium phosphate having the olivine structure (for example, LiₓFePO₄, LiₓFe_{1-y}Mn_{y}PO₄, LiₓCoPO₄), iron sulfate (for example, Fe₂(SO₄)₃), or vanadium oxide (for example, V₂O₅). The positive electrode active material may be a conductive polymer material such as polyaniline and polypyrrole, a disulfide-based polymer material, sulfur (S), and an organic material such as carbon fluoride and an inorganic material. Regarding x, y, and z whose preferable range is not specified, they are preferably in the range of 0 or above to 1 or less.

The positive electrode active material is, for example, a variety of oxides or sulfides. The positive electrode active material is, for example, manganese dioxide (MnO₂), iron oxide, copper oxide, nickel oxide, a lithium manganese composite oxide (for example, LiₓMn₂O₄ or LiₓMnO₂), a lithium nickel composite oxide (for example, LiₓNiO₂), a lithium cobalt composite oxide (LiₓCoO₂), a lithium nickel cobalt composite oxide (for example, LiₓNi_{1-y-z}Co_{y}M_{z}O₂ M is at least one of a Al, Cr, and Fe group where 0 ≤ y ≤ 0.5, 0 ≤ z ≤ 0.1), a lithium manganese cobalt composite oxide (for example, LiₓMn_{1-y-z}Co_{y}M_{z}O₂. M is at least one of a Al, Cr, and Fe group where 0 ≤ y ≤ 0.5, 0 ≤ z ≤ 0.1), a lithium manganese nickel composite compound (for example, LiₓMn_{y}Ni_{y}M_{1-2y}O₂ such as LiₓMn_{1/3}Ni_{1/3}Co_{1/3}O₂ and LiₓMn_{1/2}Ni_{1/2}O₂ where M is at least one of a Co, Cr, Al, and Fe group and 1/3 ≤ y ≤ 1/2), a spinel-type lithium manganese nickel composite oxide (for example, LiₓMn_{2-y}Ni_{y}O₄), a lithium phosphate having the olivine structure (for example, LiₓFePO₄, LiₓFe_{1-y}Mn_{y}PO₄, LiₓCoPO₄), iron sulfate (for example, Fe₂(SO₄)₃), or vanadium oxide (for example, V₂O₅). The positive electrode active material may be a conductive polymer material such as polyaniline and polypyrrole, a disulfide-based polymer material, sulfur (S), and an organic material such as carbon fluoride and an inorganic material. Regarding x, y, and z whose preferable range is not specified, they are preferably in the range of 0 or above to 1 or less.

Examples of the more preferable positive electrode active material include lithium manganese composite oxides, lithium nickel composite oxides, lithium cobalt composite oxides, lithium nickel cobalt composite oxides, lithium manganese nickel composite compounds, spinel-type lithium manganese nickel composite oxides, lithium manganese cobalt composite oxides, and lithium iron phosphates. The battery 10 containing these positive electrode active materials provides a high voltage.

Examples of The conductive agent include one or two or more of acetylene black, carbon black, graphite, coke, carbon fibers, and, graphene. Examples of the binder include polytetrafluoroethylene (PTFE), polyvinylidene fluoride (PVDF), fluoro rubber, styrene-butadiene rubber, ethylene-butadiene rubber (SBR), polypropylene (PP), polyethylene (PE), carboxymethylcellulose (CMC), polyimide (PI), polyacrylic-imide (PAI), a modified PVDF in which at least one of hydrogen and fluorine of PVDF is substituted with another substituent, a vinylidene fluoride-hexafluoropropylene copolymer, a polyvinylidene fluoride-tetrafluoroethylene-hexafluoropropylene terpolymer, and acrylic resin. One or two or more binders can be used.

As illustrated in FIG. 8, the negative electrode 32 includes a negative collector 45 and a negative active-material-containing layer 46. In FIG. 8, for the sake of better understanding, the negative active-material-containing layer 46 is indicated by hatching. The negative collector 45 is an exemplary collector, and the negative active-material-containing layer 46 is an exemplary active material-containing layer. The negative collector 45, for example, is also referred to as a substrate, a sheet, or a conductor.

The negative collector 45 is formed of, for example, a metal foil such as a copper foil, an aluminum foil, and an aluminum alloy foil. That is, the negative collector 45 made of an aluminum foil or an aluminum alloy foil contains aluminum. The negative collector 45 is of an approximately rectangular (quadrangular) sheet (strip) form. The negative collector 45 may be formed of any other material or may have any other shape.

The negative active-material-containing layer 46 is located on both surfaces of the negative collector 45. That is, the negative active-material-containing layer 46 is laminated on part of the negative collector 45. The negative active-material-containing layer 46 may be laminated on either surface of the negative collector 45. However, the negative active-material-containing layer 46 is to be laminated on the surface facing the positive active-material-containing layer 42. The negative active-material-containing layer 46 partially covers a surface of the negative collector 45. That is, the negative active-material-containing layer 46 is laminated on part of the negative collector 45. In the lengthwise direction, the negative active-material-containing layer 46 is substantially the same in length as the negative collector 45. In the lateral direction, the negative active-material-containing layer 46 is shorter in length (width) than the negative collector 45.

The negative collector 45 includes a negative non-layered part 48B. The negative non-layered part 48B corresponds to part of the negative collector 45 on which the negative active-material-containing layer 46 is not laminated. The negative non-layered part 48B is located at one width end of the strip-like negative collector 45. The other width end of the negative collector 45 is covered with the negative active-material-containing layer 46. The negative non-layered part 48B extends in parallel to the negative collector 45 and the negative active-material-containing layer 46. The negative non-layered part 48B is an exemplary non-layered part. The negative non-layered part 48B is also referred to as a non-coated part.

The negative active-material-containing layer 46 contains a negative active material, a conductive agent, and a binder (binding agent). The negative active-material-containing layer 46 is formed by, for example, suspending a powdery negative active material, a conductive agent, and a binder in a solvent and applying, drying, and pressing the suspension (slurry) on the negative collector 45. Electrical contact between the negative active material and the negative collector 45 is increased through pressing.

The negative active material is not limited to particular kinds. Examples of the negative active material includes a lithium titanium composite oxide (lithium titanate). The lithium titanium composite oxide is a spinel-type lithium titanate represented by Li₄₊ₓTi₅O₁₂ (x varies in the range of -1 ≤ x ≤ 3 due to charge/discharge reactions), a Ramsdellite-type Li₂₊ₓTi₃O₇ (x varies in the range of -1 ≤ x ≤ 3 due to charge/discharge reactions), or a metal composite oxide containing Ti and at least one of a P, V, Sn, Cu, Ni, and Fe group. Examples of the metal composite oxide containing Ti and at least one of a P, V, Sn, Cu, Ni, and Fe group include TiO₂-P₂O₅, TiO₂-V₂O₅, TiO₂-P₂O₅-SnO₂, TiO₂-P_{2O5}-MeO (Me is at least one of a Cu, Ni, and Fe group), and TiO₂-P₂O-MO (where M is at least one of a Cu, Ni, and Fe group). Preferably, this metal composite oxide has low crystallinity and a microstructure of coexisting crystal phase and amorphous phase or an amorphous phase alone. Such a metal composite oxide having a microstructure can significantly improve cycle performance. These metal composite oxides change to a lithium titanium composite oxide when lithium is inserted through charging. Of the lithium titanium composite oxides, spinel-type lithium titanate is preferable because of excellent cycle characteristics. Preferably, the lithium titanium composite oxide (for example, spinel-type lithium titanate) includes one or more substances of a silicon and tin group.

The negative active-material-containing layer 46 may include another negative active material such as a graphitic material, a carbonaceous material, or a metal compound. The graphitic material is, for example, graphite (natural graphite, artificial graphite). Examples of The carbonaceous material include coke, carbon fibers (vapor deposition carbon fibers, mesophase pitch-based carbon fiber), spherical carbon, pyrolytic vapor deposition carbonaceous material, or resin baked carbon. More preferable carbonaceous materials are vapor deposition carbon fibers, mesophase pitch-based carbon fibers, and spherical carbon.

The metal compound represents, for example, metal sulfide or metal nitride. Examples of the metal sulfide includes titanium sulfide such as TiS₂, molybdenum sulfide such as MoS₂, or iron sulfide such as FeS, FeS₂, and LiₓFeS₂. The metal nitride is, for example, lithium cobalt nitride (for example, LiₛCoₜN where 0 < s < 4, 0 < t < 0.5). Other examples of the negative active material include chalcogen compounds (for example, titanium disulfide, molybdenum disulfide, niobium selenide) and light metal (for example, aluminum, aluminum alloy, magnesium alloy, lithium, lithium alloy).

Examples of the conductive agent include one or two or more of acetylene black, carbon black, graphite, coke, carbon fibers, and graphene. Examples of the binder include polytetrafluoroethylene (PTFE), polyvinylidene fluoride (PVDF), fluoro rubber, styrene-butadiene rubber, ethylene-butadiene rubber (SBR), polypropylene (PP), polyethylene (PE), carboxymethylcellulose (CMC), polyimide (PI), polyacrylic-imide (PAI), a modified PVDF in which at least one of hydrogen and fluorine of PVDF is substituted with another substituent, a vinylidene fluoride-hexafluoropropylene copolymer, a polyvinylidene fluoride-tetrafluoroethylene-hexafluoropropylene terpolymer, and acrylic resin. One or two or more binders can be used.

The positive non-layered part 48A and the negative non-layered part 48B protrude oppositely. That is, the positive non-layered part 48A protrudes from one end of the laminated and wound positive electrode 31, negative electrode 32, and separators 33 in the axial direction (the opposite direction to the Y direction), and the negative non-layered part 48B protrudes from the other end in the opposite direction (Y direction) of the axial direction. That is, the positive electrode 31 and the negative electrode 32 are laminated with offset. Hereinafter, the positive non-layered part 48A and the negative non-layered part 48B may be collectively referred to as a non-layered part 48.

The positive non-layered part 48A constitutes the positive collector 51A. That is, the positive collector 51A includes a part of the positive collector 41 on which the positive active-material-containing layer 42 is not laminated (positive non-layered part 48A). As is understood from the above, the positive collector 51A includes the positive electrode 31.

The negative non-layered part 48B forms the negative collector 51B. That is, the negative collector 51B includes a part of the negative collector 45 on which the negative active-material-containing layer 46 is not laminated (negative non-layered part 48B). As is understood from the above, the negative collector 51B includes the negative electrode 32.

The winding 53 includes at least part of the positive collector 41 having the positive active-material-containing layer 42 laminated thereon, the positive active-material-containing layer 42, at least part of the negative collector 45 having the negative active-material-containing layer 46 laminated thereon, the negative active-material-containing layer 46, and the separator 33. That is, the winding 53 includes the positive active-material-containing layer 42 and the negative active-material-containing layer 46.

### [Joint 52]

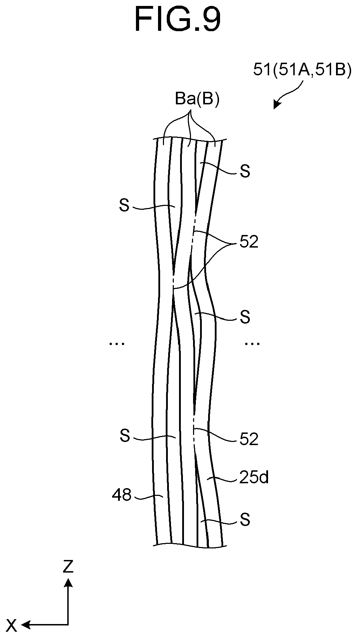

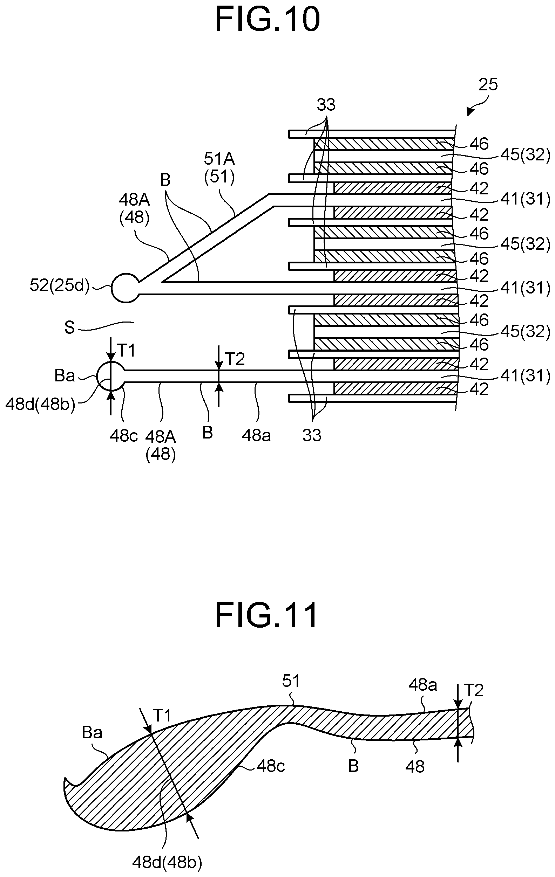

FIG. 9 is a schematic illustrative diagram of the collector 51 in the first embodiment as viewed from a line of sight in the axial direction. FIG. 10 is a partial schematic illustrative cross-sectional view of the electrode assembly 25 in the first embodiment.

As illustrated in FIGS. 3, 4, 9, and 10, the electrode assembly 25 is provided with a joint 52. FIGS. 9 and 10 illustrate the joint 52 of the cut part 25d in the end 53a of the winding 53. However, the joint 52 can be located, for example in the collector-tab group 51n of the collector 51. In FIGS. 9 and 10, a gap S between the laminated parts B of the adjacent electrodes (the positive electrode 31 and the negative electrode 32) of the electrode assembly 25 are exaggeratedly depicted for the sake of better understanding. The joint 52 is formed by melting and solidifying the fringes Ba of the laminated parts B at the time of melt-cutting the base material 60 (FIG. 8) of the electrode assembly 25 by irradiation of laser light, for example. That is, the joint 52 is included in the cut part 25d. The fringe Ba of the laminated part B is an exemplary fringe of the non-layered part 48.

In the present embodiment, the positive electrode 31 and the negative electrode 32 both includes a plurality of joints 52. The joints 52 are located between the fringes Ba of the laminated parts B of the positive electrode 31 or the negative electrode 32, to join the fringes Ba. In the present embodiment, the joints 52 are spaced apart from each other, and each joint 52 partially joins the fringes Ba of the laminated parts B. That is, the cut part 25d includes the joints 52 separately. The number and location of the joints 52 illustrated in FIG. 9 are merely exemplary and are not limited thereto. The number of the joint 52 may be one.

### [Non-layered part 48]

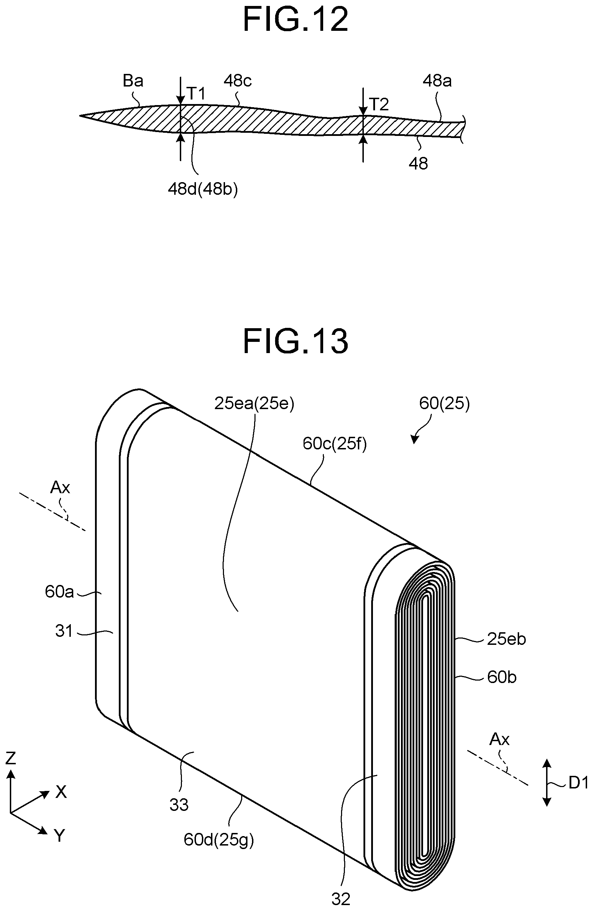

FIG. 11 is a partial schematic illustrative cross-sectional view of the electrode assembly 25 in the first embodiment. FIG. 12 is a partial schematic illustrative cross-sectional view of the electrode assembly 25 in the first embodiment.

As illustrated in FIGS. 10 and 11, each non-layered part 48 includes a first part 48a and a second part 48b. FIG. 10 illustrates the first part 48a and the second part 48b of the positive non-layered part 48A.

The first part 48a extends from the positive active-material-containing layer 42 or the negative active-material-containing layer 46. The first part 48a constitutes part of the laminated part B. The second part 48b is connected to the first part 48a and constitutes another part of the laminated part B. The second part 48b includes the fringe Ba, a thickness-varying part 48c, and a thick-thickness part 48d. The thickness-varying part 48c increases in thickness as further away from the first part 48a. The thick-thickness part 48d is thickest in the non-layered part 48 and in the laminated part B. The thick-thickness part 48d is, for example, 1.2 times or more larger in thickness (maximum thickness) than the first part 48a. In FIGS. 10 and 11, the thickness of the thick-thickness part 48d is denoted by T1, and the thickness (the maximum thickness) of the first part 48a is denoted by T2. In the example in FIG. 11, the thickness T1 of the thick-thickness part 48d is set to 67 µm, and the thickness T2 of the first part 48a is set to 20 µm, for example. FIG. 12 illustrates a laminated part B different from the laminated part B of the non-layered part 48 illustrated in FIG. 11. In the example in FIG. 12, the thickness T1 of the thick-thickness part 48d is set to 20 µm, and the thickness T2 of the first part 48a is set to 13 µm, for example. The thickness T1 of the thick-thickness part 48d and thickness T2 of the first part 48a are not limited to such examples. The first part 48a is also referred to as a thin-thickness part.

### [Separator 33]

The separator 33 illustrated in FIG. 8 and other drawings has insulating properties and is of an approximately rectangular (quadrangular) sheet (strip) form. In the lateral direction, the separator 33 is shorter than in length (width) than the positive collector 41 and the negative collector 45. The dimension of the separator 33 is not limited thereto.

The separator 33 represents a porous film or nonwoven fabric made of, for example, a polymer such as polyolefin such as polyethylene and polypropylene, cellulose, polyethylene terephthalate, polyester, polyvinyl alcohol, polyimide, polyamide, polyamide-imide, polytetrafluoroethylene, and vinylon. In terms of thinness and mechanical strength, the separator 33 is preferably nonwoven fabric including cellulose fibers, for example. The separator 33 may be made of one material or a combination of two or more materials.

### [Electrolyte]

The electrolyte can be, for example, a nonaqueous electrolyte. The nonaqueous electrolyte may be, for example, of a liquid form prepared by dissolving an electrolyte in an organic solvent or of a gel form being a composite of a liquid electrolyte and a polymer material.

The liquid nonaqueous electrolyte is preferably the one prepared by dissolving an electrolyte in an organic solvent at a concentration of 0.5 mol/L or more to 2.5 mol/L or less.

Examples of the electrolyte dissolved in an organic solvent include lithium salts such as lithium perchlorate (LiClO₄), lithium hexafluorophosphate (LiPF₆), lithium tetrafluoroborate (LiBF₄), lithium hexafluoroarsenate (LiAsF₆), lithium trifluorometasulfonate (LiCF₃SO₃), and lithium bistrifluoromethylsulfonylimide (LiN(CF₃SO₂)₂), and mixtures thereof. The electrolyte is preferably difficult to be oxidized at a high potential, and LiPF₆ is most preferable.

Examples of the organic solvent include cyclic carbonates such as propylene carbonate (PC), ethylene carbonate (EC), and vinylene carbonate, chain carbonates such as diethyl carbonate (DEC), dimethyl carbonate (DMC), and ethyl methyl carbonate (EMC), cyclic ether such as tetrahydrofuran (THF), 2-methyl tetrahydrofuran (2-MeTHF), and dioxolane (DOX), chain ether such as dimethoxyethane (DME) and diethoxyethane (DEE), propionic acid ester such as propionic acid methyl (MP) and propionic acid ethyl (EP), γ-butyrolactone (GBL), acetonitrile (AN), and sulfolane (SL). These organic solvents can be used individually or as a solvent mixture.

### [Positive Electrode Lead 26, Negative Electrode Lead 27]

As illustrated in FIG. 2, the positive electrode lead 26 extends between the positive collector 51A of the electrode assembly 25 and the positive electrode terminal 23 to electrically connect the positive collector 51A and the positive electrode terminal 23.

As illustrated in FIGS. 3 to 6, the positive electrode lead 26 includes a wall 26a and an extension 26b. The positive electrode lead 26 can be created by folding and molding a metal sheet. The wall 26a stands along the inner surface of the cover member 22 and is coupled to the positive electrode terminal 23. The extension 26b is connected to the wall 26a and extends vertically (Z direction) in the casing 20. The extension 26b includes a lead connection 26c and a connection 26d. In the present embodiment, the number of the lead connections 26c is one. The lead connection 26c is located on one side of the collector connection 51q of the positive collector 51A and juxtaposed to the collector connection 51q in the second intersecting direction D2. The lead connection 26c is joined to the collector connection 51q. In the axial direction (FIG. 6), the lead connection 26c is located inside the outer periphery 53e of the winding 53. The connection 26d connects the lead connection 26c and the wall 26a. The positive electrode lead 26 is formed of a conductive material such as a metal material.

As illustrated in FIG. 2, the negative electrode lead 27 extends between the negative collector 51B of the electrode assembly 25 and the negative electrode terminal 24 to electrically connect the negative collector 51B and the negative electrode terminal 24.

As illustrated in FIGS. 3 to 5 and 7, the negative electrode lead 27 includes a wall 27a and an extension 27b. The negative electrode lead 27 can be formed by folding and molding a metal sheet. The wall 27a stands along the inner surface of the cover member 22 and is coupled to the negative electrode terminal 24. The extension 27b is connected to the wall 27a and extends vertically (Z direction) in the casing 20. The extension 27b includes a lead connection 27c and a connection 27d. In the present embodiment, the number of the lead connections 27c is one. The lead connection 27c is located on the other side of the collector connection 51q and juxtaposed to the negative collector 51B in the second intersecting direction D2. The lead connection 27c is joined to the collector connection 51q. In the axial direction (FIG. 7), the lead connection 27c is located inside the outer periphery 53e of the winding 53. The connection 27d connects the lead connection 27c and the wall 27a. The negative electrode lead 27 is formed of a conductive material such as a metal material.

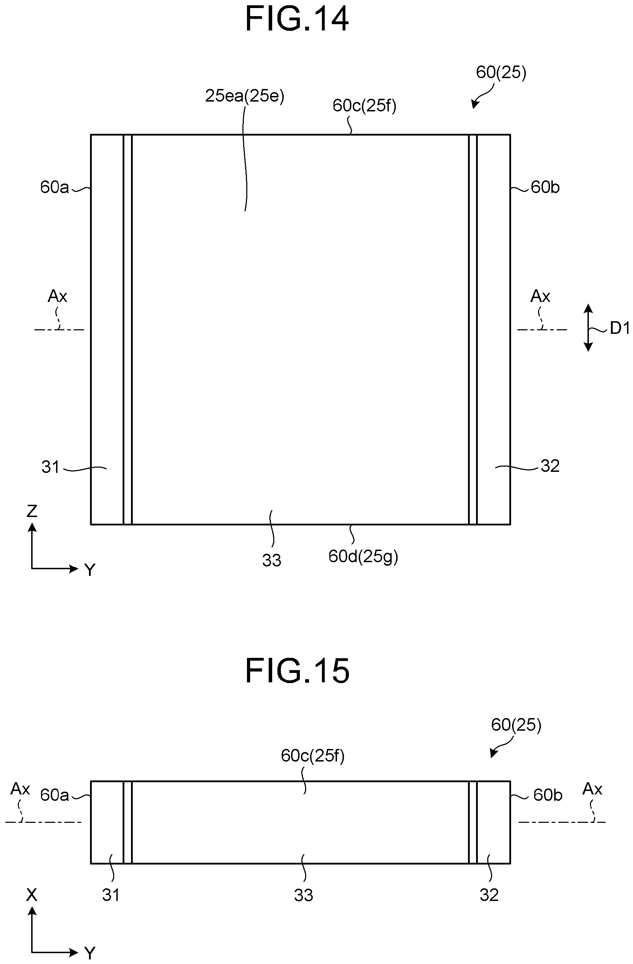

A manufacturing method of the battery 10 will now be described with reference to FIGS. 8 and 13 to 22. FIGS. 13 to 22 are schematic illustrative diagrams of the electrode assembly 25 during manufacturing in the first embodiment.

As illustrated in FIGS. 8 and 13 to 16, the positive electrode 31, the negative electrode 32, and the separator 33 located between the positive electrode 31 and the negative electrode 32 are laminated and wound around the axis Ax and flatly pressed to create the base material 60 including the electrode assembly 25. The base material 60 has opposite ends 60a and 60b in the axial direction and opposite ends 60c and 60d in the first intersecting direction D1. The end 60c is one end in the first direction D1a, and the end 60d is an opposite end in the first direction D1a. The base material 60 has four corners. The four corners are a first corner between the end 60a and the end 60c, a second corner between the end 60b and the end 60c, a third corner between the end 60a and the end 60d, and a fourth corner between the end 60b and the end 60d. Hereinafter, the first corner and the second corner may be each referred to as a top corner, and the third corner and the fourth corner may be each referred to as a bottom corner. The base material 60 includes a substrate 25e having the extension pair 25ea and 25eb and a turnback pair 25f and 25g. In the base material 60, the turnbacks 25f and 25g extends between the axial opposite ends 60a and 60b of the base material 60.

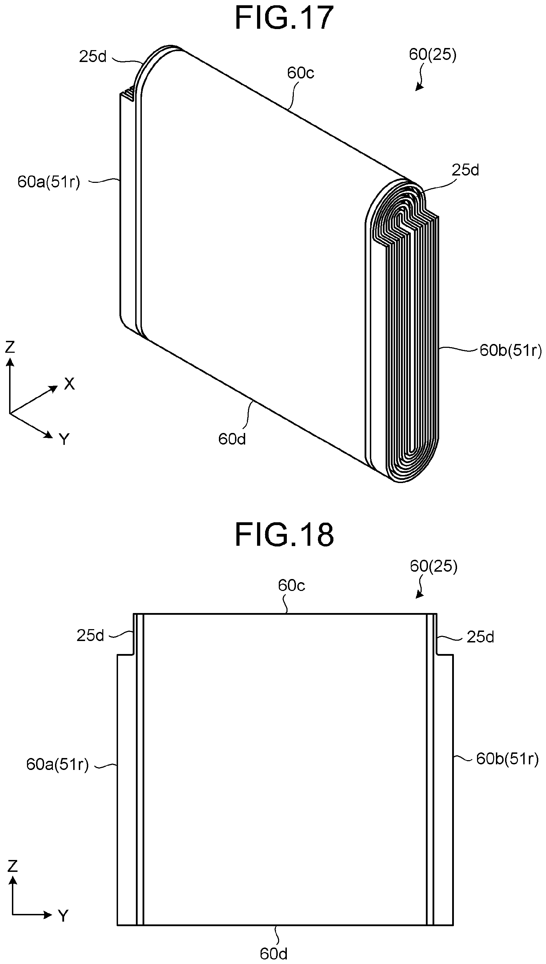

Next, as illustrated in FIGS. 17 and 18, a given part (removal part) is cut from the base material 60a with a cutter (not illustrated). Specifically, given parts of two top corners of the four corners of the base material 60 are cut off. This forms two cut parts 25d in the base material 60 and protrusions 51r at the axial opposite ends 60a and 60b of the base material 60. Each protrusion 51r includes part of each of the extension pair 25ea and 25eb and part of the turnback 25g, and does not include the turnback 25f. As described in detail later, the protrusion 51r is processed to form the collector 51 of a shape illustrated in FIG. 3 and others. The base material 60 is thermally cut (melt-cut). For example, a laser emitting device serves as a cutter to irradiate the base material 60 with laser light and heat and melt-cut the base material 60. By melt-cutting, the joint 52 (FIG. 9) is formed in the cut part 25d. In the present embodiment, thus, the laminated parts B (FIG. 9) are melted by laser light and solidified, for example, to form the joint 52. FIG. 17 and others omit depicting the joint 52.

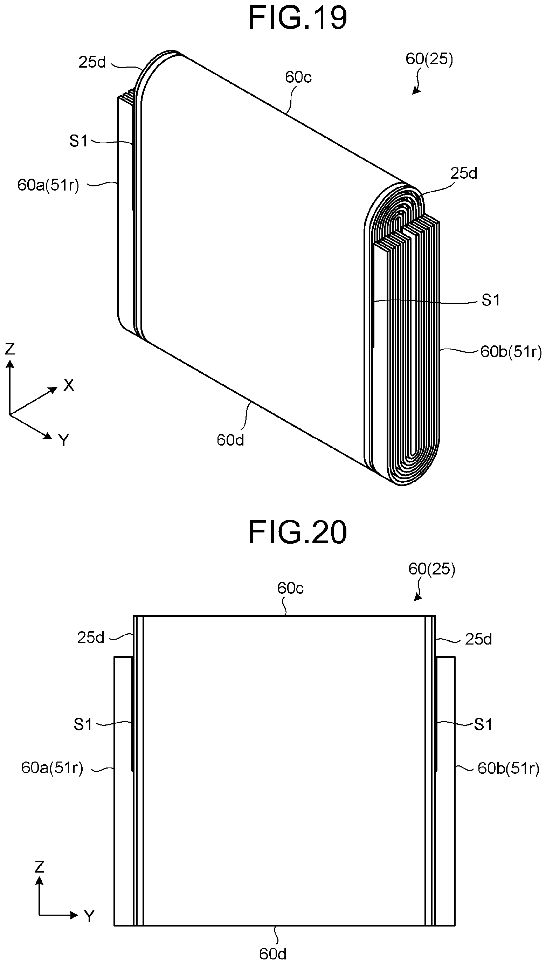

As illustrated in FIGS. 19 and 20, a slit S1 is next formed in the protrusion 51r. The slit S1 is formed by thermally cutting (melt-cutting) the base material 60. For example, a laser emitting device serves as a cutter to irradiate the base material 60 with laser light and heat and melt-cut the base material 60. The part of the base material 60 (electrode assembly 25) facing the slit S1 serves as the cut part 25d.

For use in cutting a given part (removal part) of the base material 60 and forming the slit S1, the laser light may be, for example, single-mode fiber laser or multi-mode fiber laser. The single-mode fiber laser is relatively small in optical diameter and high in energy density, therefore, it can efficiently cut the laminated parts B at a desired position. The single-mode fiber laser is relatively small in optical diameter or cut width, forming a relatively small-size joint 52. In contrast, the multi-mode fiber laser is relatively large in optical diameter or cut width, forming a relatively large-size joint 52. The laser light may be separately emitted multiple times. This can reduce the output of the laser irradiation device per emission. Thus, it is possible to reduce energy loss or the influences of heat on the cut part 51d.

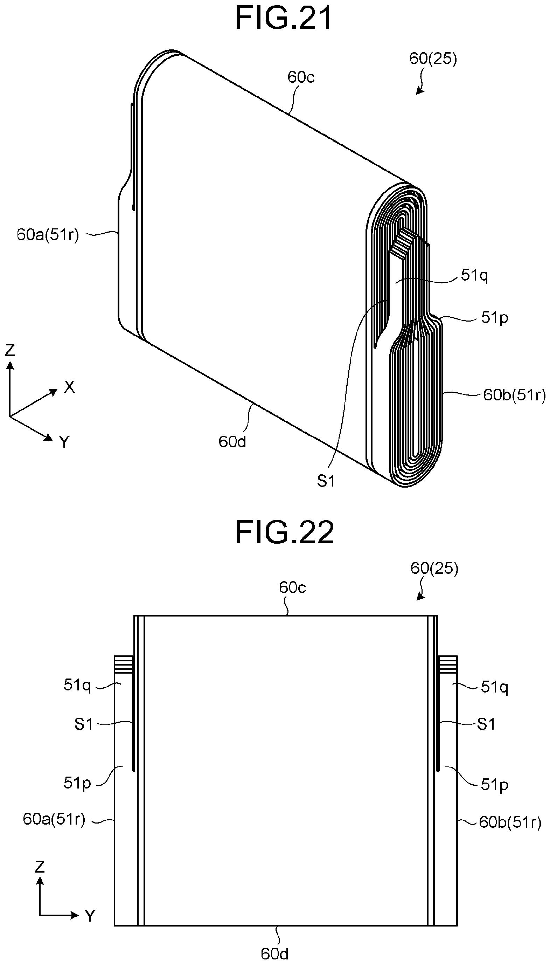

As illustrated in FIGS. 21 and 22, the protrusion 51r (collector connection 51q) is then partially pressed. This narrows the width of the collector connection 51q to form the width-varying part 51p.

Next, as illustrated in FIGS. 3, 4, 6, and 7, the collector connection 51q of the positive collector 51A and the collector connection 51q of the negative collector 51B as well as the lead connection 26c of the positive electrode lead 26 and the lead connection 27c of the negative electrode lead 27 coupled to the cover member 22 are held by the head of an ultrasonic welding device and subjected to pressing and welding by ultrasonic vibration (ultrasonic welding). The head includes a horn and an anvil. The collector tabs 51na of the collector connection 51q are also welded together.

Next, the positive electrode lead 26, the negative electrode lead 27, and the electrode assembly 25 united with the cover member 22 are inserted into the accommodating member 21. Then, the cover member 22 is coupled to the accommodating member 21 so as to close the opening (top end opening) of the accommodating member 21. A given amount of electrolyte is injected into the casing 20 through the liquid inlet of the cover member 22. The given amount is, for example, an amount sufficient to soak the electrode assembly 25 in the casing 20. The liquid inlet is then sealed.

The following will describe a method of measuring thickness T1 (FIG. 11) of the thick-thickness part 48d of the non-layered part 48 and thickness T2 (FIG. 11) of the first part 48a. First, before measurement, the surface (outer face) of the non-layered part 48 including the fringes Ba (cut part 25d) is subjected to polishing. In polishing process, the surface of the non-layered part 48 is mechanically polished and the processed layer of the surface is removed by chemical polishing such as ion milling. In the polishing process, the surface of the non-layered part 48 may be mechanically polished and undergo a chemical process, for example, with aqueous sodium hydroxide. A scanning electron microscope is used in measurement, for example to image the non-layered part 48 at an observation magnification of 500 x, for example. Then, the thickness of each location of the non-layered part 48 is measured from a result of the imaging. The observation magnification is not limited to such an example.

As described above, in the present embodiment, the joint 52 serves to join the laminated fringes Ba of the electrode assembly 25. Owing to such a structure, for example, vibration applied to the battery 10 is unlikely to cause the fringes Ba of the electrode assembly 25 to be misaligned. This can prevent the electrode assembly 25 from being deformed. Hence, compared with the electrode assembly 25 including the laminated fringes Ba not joined, the electrode assembly 25 can be enhanced in strength and rigidity, and thus improved in vibration resistance.

Conventionally, batteries are known, which include a wound element including an electrode pair and a separator located between the electrode pair, the electrode pair and the separator laminated and wound around; and a collector located at an end of the wound element with a slit in-between them, and a lead connected to the collector. It is preferable to provide a battery of a novel configuration which can reduce the width of a connection between the collector and the lead.

In this respect, in the present embodiment, the base group 51m of the collector 51 includes the bases 51ma being part of the positive electrode 31 or the negative electrode 32 (electrode) and extending from the ends 53a and 53b of the winding 53 axially and laminated on each other. The collector-tab group 51n of the collector 51 includes the collector tabs 51na being part of the positive electrode 31 or the negative electrode 32 and extending from the base 51ma in the first intersecting direction D1 intersecting the axial direction and laminated on each other, and at least one or more of the collector tabs 51na are separated from the winding 53. The collector connection 51q of the collector-tab group 51n is juxtaposed to and electrically connected to the positive electrode lead 26 or the negative electrode lead 27 in the second intersecting direction D2 intersecting the axial direction and the first intersecting direction D1. In the second intersecting direction D2, the maximum width T3 of the collector connection 51q is smaller than the maximum width T4 of the winding 53. The positive electrode 31 and the negative electrode 32 are folded back at a part other than the collector-tab group 51n in the electrode assembly 25. That is, in the collector-tab group 51n, the positive electrode 31 or the negative electrode 32 is not folded back. With such a structure, compared with the positive electrode or the negative electrode folded back in the collector-tab group, the collector-tab group 51n connected to the lead in the collector 51 can be decreased in width in the second intersecting direction D2. The battery 10 can be reduced in size.

In the present embodiment, the overall collector tabs 51na are separated from the winding 53. This makes it easier to align the axial fringes of the collector tabs 51na united as the collector-tab group 51n. This can decrease the collector-tab group 51 in the maximum width in the first intersecting direction D1. That is, the electrode assembly 25 can be shortened in axial length, which enables increase in the energy density of the battery 10. By contrast, in the case of the collectors all connected to the winding, the axial fringes of the collector tabs united as the collector-tab group 51n are misaligned, causing steps. In this case, the maximum width of the collector-tab group direction is likely to increase in the first intersecting direction.

In the present embodiment, the joint 52 works to join the fringes Ba of the laminated parts B in the electrode assembly 25. Owing to such a structure, for example, vibration to the battery 10 is less likely to cause the laminated parts B to be misaligned. The electrode assembly 25 can be prevented from being deformed. Hence, compared with the electrode assembly including the laminated parts B with the fringes Ba not joined, the electrode assembly 25 can be enhanced in strength and rigidity, and thus improved in vibration resistance.

In the present embodiment, the joint 52 partially joins the fringes Ba of the laminated parts B. Owing to such a structure, for example, gas, when occurs between the positive active-material-containing layer 42 and the negative active-material-containing layer 46 in the electrode assembly 25 (winding 53), can be discharged to the outside of the electrode assembly 25 (winding 53) from the gap S between the laminated parts B with no joint 52.

In the present embodiment, the fringes Ba of the laminated parts B are provided with the thick-thickness part 48d thickest in the non-layered part 48. in such a structure, the thick-thickness part 48d of a relatively high strength can increase the strength of the fringes Ba, which works to improve the vibration resistance of the electrode assembly 25.

The present embodiment has described the example that all of the collector tabs 51na of the collector-tab group 51n are separated from the winding 53. However, it is not limited to such an example. Part of the collector tabs 51na of the collector-tab group 51n may be separated from the winding 53. In such a case, for example, in the manufacturing method of the battery 10, a laser-blocking shield plate (not illustrated) is inserted in a given position of the base material 60 to cut the base material 60 (FIG. 8) with a laser emitting device. Such a shield plate can adjust the number of sheets cut by laser light. The shield plate may be formed of, for example, a metal material. The metal material may be, for example, tungsten. Tungsten has the highest melting point among metal materials and thus enables a higher output of laser light. The shield plate may be used to cut respective locations of the base material 60 in the other embodiments.

The present embodiment has described the example that the positive electrode lead 26 and the negative electrode lead 27 are joined to the collectors 51 by ultrasonic welding. However, it is not limited thereto. The positive electrode lead 26 and the negative electrode lead 27 may be joined to the collectors 51 by electric resistance welding or friction stir welding.

The present embodiment has described the example that the base material 60 of the electrode assembly 25 is cut and the slit S1 is formed by means of laser light. However, it is not limited thereto. For example, the base material 60 may be cut and the slit S1 may be formed by ultrasonic cutting.

### <Other Embodiments>

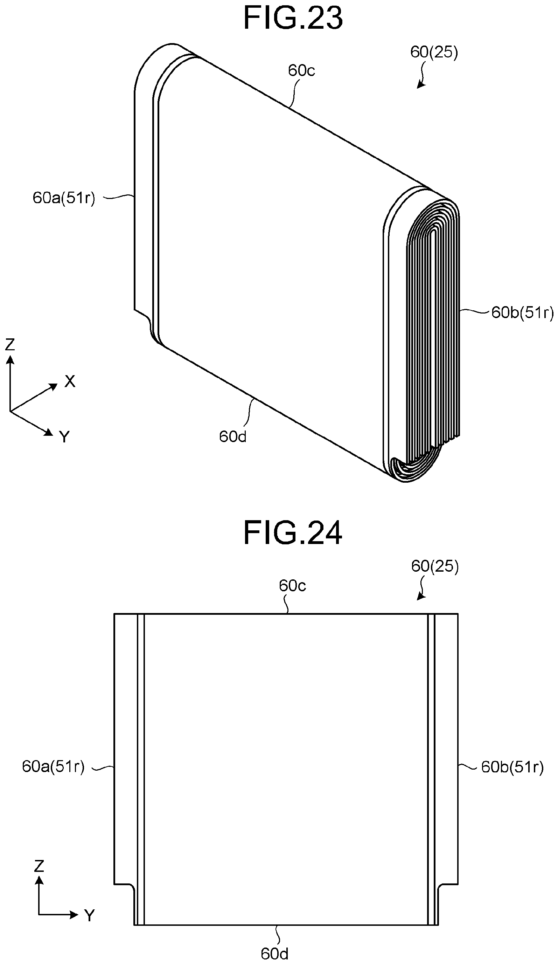

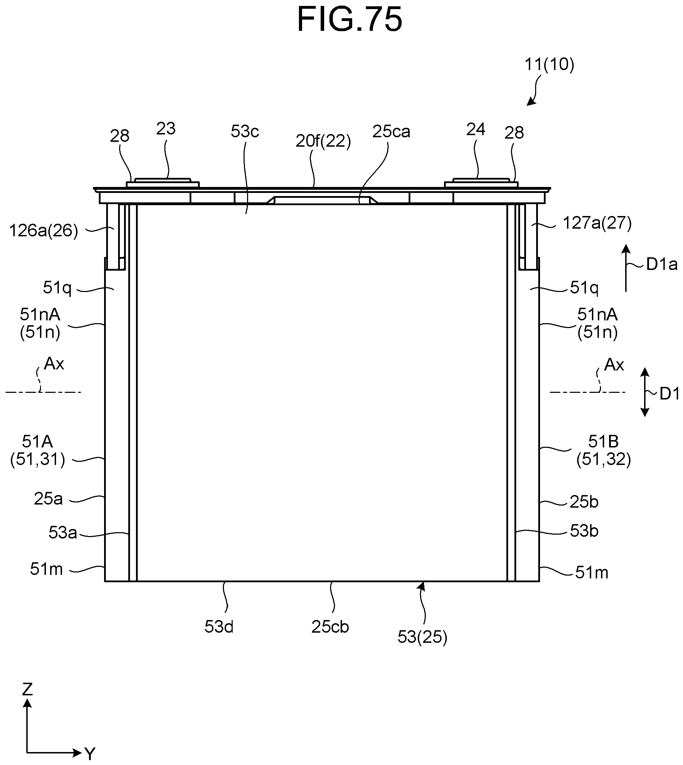

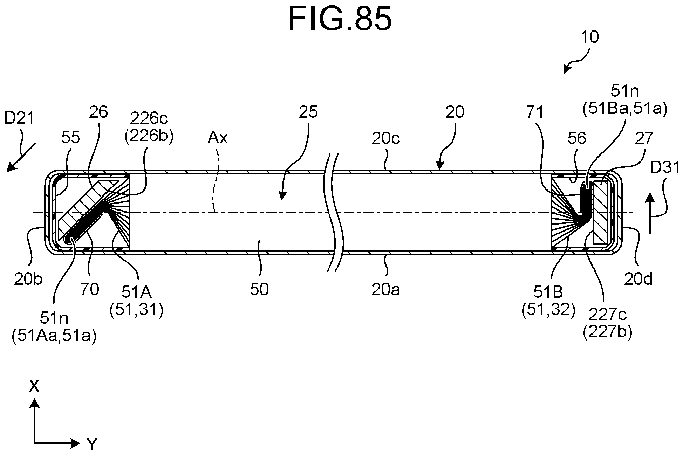

Second to twenty-first embodiments illustrated in FIGS. 23 to 74, twenty-second to twenty-fourth embodiments illustrated in FIGS. 75 to 84, and twenty-fifth to thirtieth embodiments illustrated in FIGS. 85 to 104 will now be described. The battery 10 in the second to thirtieth embodiments has a similar configuration to the battery 10 in the first embodiment. The second to thirtieth embodiments, therefore, achieve similar effects based on a similar configuration to the first embodiment. However, the second to thirtieth embodiments mainly differ from the first embodiment in the shape of the collector tab 51na and others. The detail of the second to thirtieth embodiments will be described below, mainly focusing on the points different from the first embodiment.

### <Second Embodiment>

FIG. 23 is a schematic illustrative perspective view of the electrode assembly 25 during a manufacturing process in the second embodiment. FIG. 24 is a schematic illustrative front view of the electrode assembly 25 during a manufacturing process in the second embodiment. In the present embodiment, the collector 51 is shaped reversely to that in the first embodiment in the first intersecting direction D1 (top-bottom direction). More specifically, the base group 51m includes the turnback 25f, and the collector-tab group 51n extends from the base group 51m to the other side in the first intersecting direction D1 (to the end 53d side of the winding 53, downward). In manufacturing the electrode assembly 25 having such a structure, as illustrated in FIGS. 23 and 24, two bottom corners of the corners are cut from the base material 60.

### <Third Embodiment>

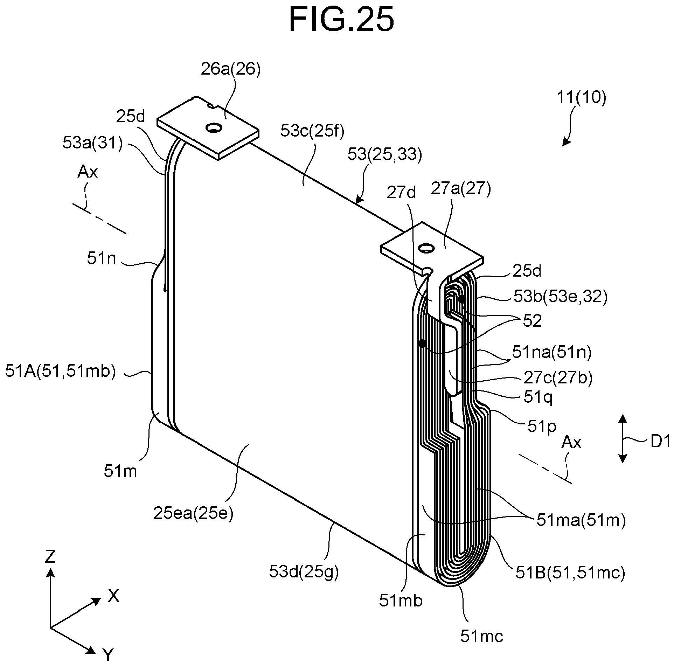

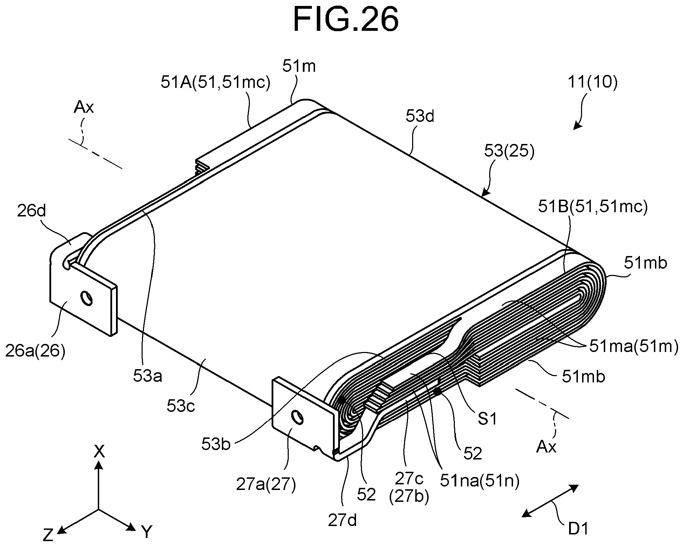

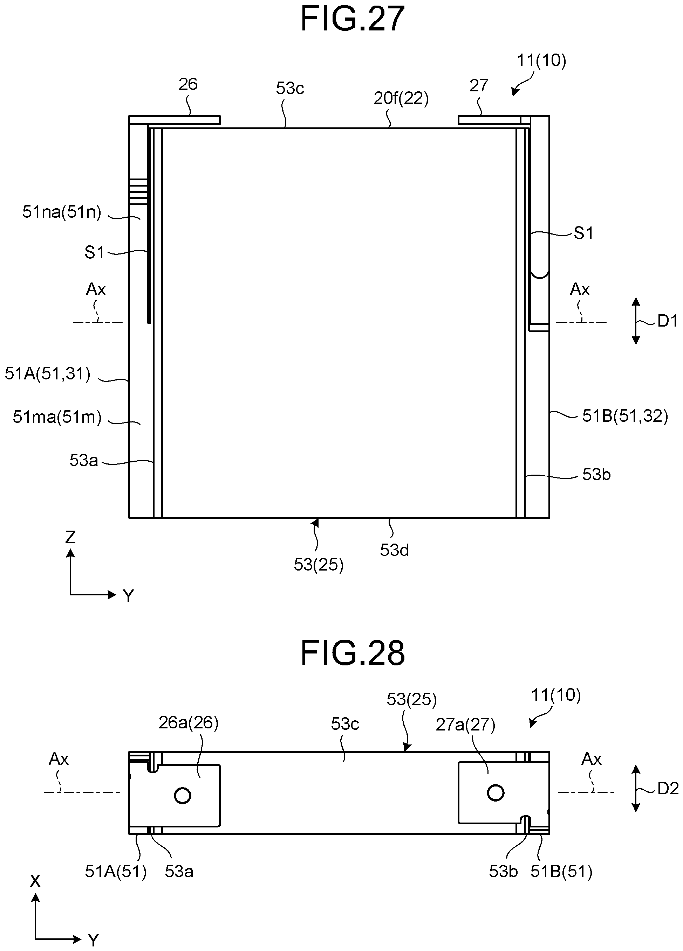

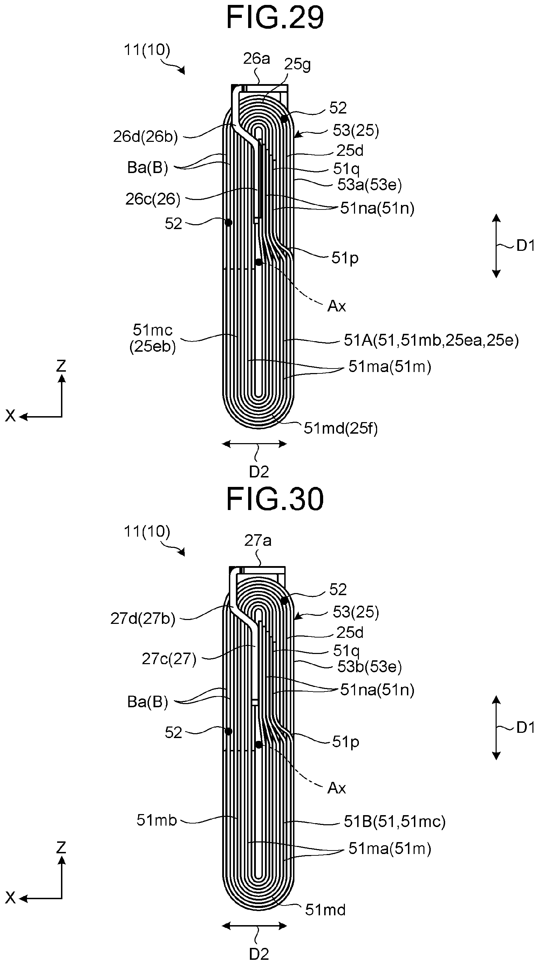

FIG. 25 is a partial schematic illustrative perspective view of the cover assembly 11 in the third embodiment. FIG. 26 is a partial schematic illustrative perspective view of the cover assembly 11 in the third embodiment as viewed from a line of sight different from that in FIG. 25. FIG. 27 is a partial schematic illustrative front view of the cover assembly 11 in the third embodiment. FIG. 28 is a partial schematic illustrative plan view of the cover assembly 11 in the third embodiment. FIG. 29 is a partial schematic illustrative left-side view of the cover assembly 11 in the third embodiment. FIG. 30 is a partial schematic illustrative right-side view of the cover assembly 11 in the third embodiment.

As illustrated in FIG. 25 to FIG. 29, in the present embodiment, the collector tabs 51na of the positive collector 51A extend from the bases 51ma of one (for example, extension 51mb) of the extension pair 51mb and 51mc in the base group 51m of the positive collector 51A in the first intersecting direction D1 (the end 53c side of the winding 53). That is, the collector-tab group 51n of the positive collector 51A is connected to the other (for example, the extension 51mb) of the extension pair 51mb and 51mc in the base group 51m of the positive collector 51A.

As illustrated in FIGS. 25 to 28 and 30, the collector tabs 51na of the collector-tab group 51n of the negative collector 51B extend from the bases 51ma of the other (for example, the extension 51mc) of the extension pair 51mb and 51mc in the base group 51m of the negative collector 51B in the first intersecting direction D1 (the end 53c side of the winding 53). That is, the collector-tab group 51n of the negative collector 51B is connected to one (for example, the extension 51mcb) of the extension pair 51mb and 51mc in the base group 51m of the negative collector 51B.

The lead connection 26c of the positive electrode lead 26 and the lead connection 27c of the negative electrode lead 27 are each located in the inner periphery of the winding 53 In the axial direction (FIGS. 29 and 30) and placed on the collector connection 51q in the second intersecting direction D2.

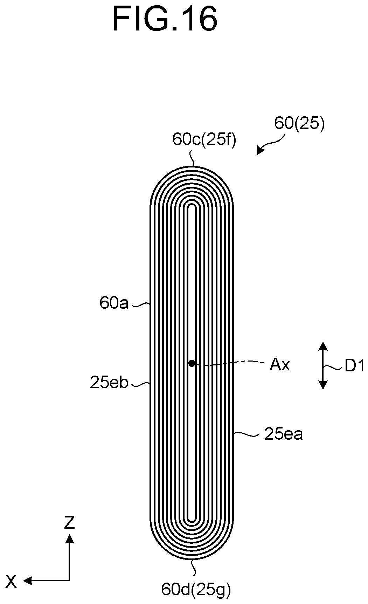

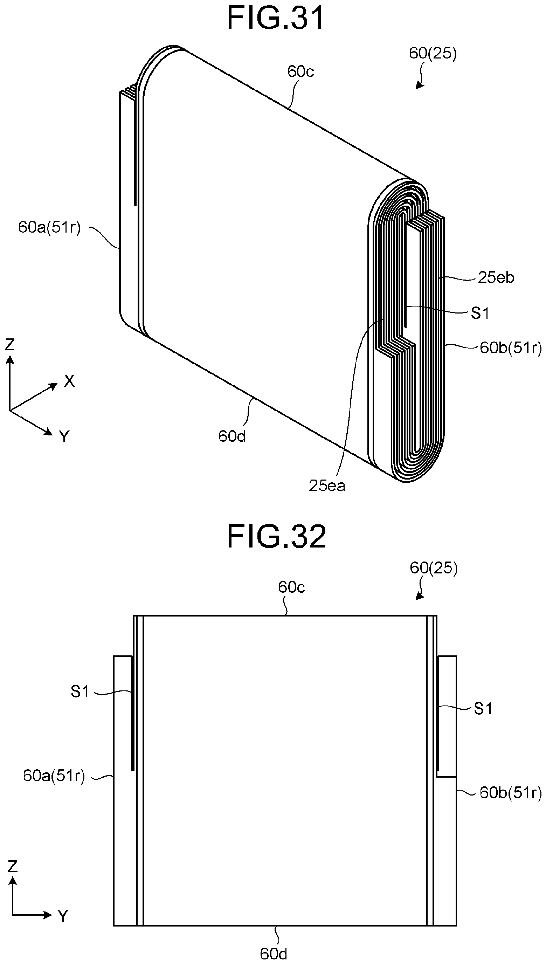

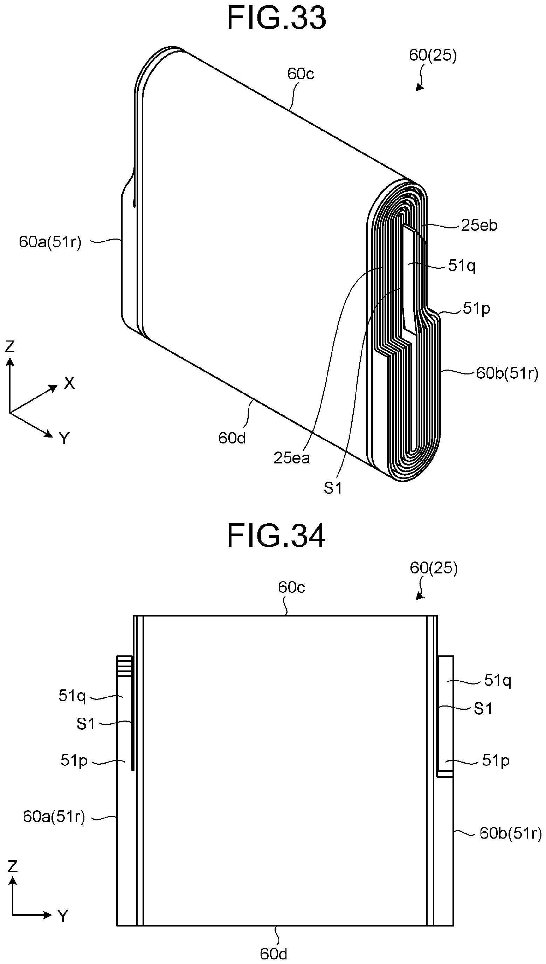

FIGS. 31 to 34 are schematic illustrative diagrams of the electrode assembly 25 during a manufacturing process in the third embodiment. The battery 10 of the present embodiment is manufactured through the same process as in the first embodiment. However, in the present embodiment, as illustrated in FIG. 31, in addition to two top corners of the base material 60, part of the extension 25eb (FIG. 16) in the end 60a and part of the extension 25ea (FIG. 33) in the end 60b that are continuous to the top corner are cut by a cutter. Subsequently, the slit S1 is formed. Next, as illustrated in FIGS. 33 to 34, part of the protrusion 51r (collector connection 51q) is pressed. The same process as in the first embodiment then follows.

### <Fourth Embodiment>

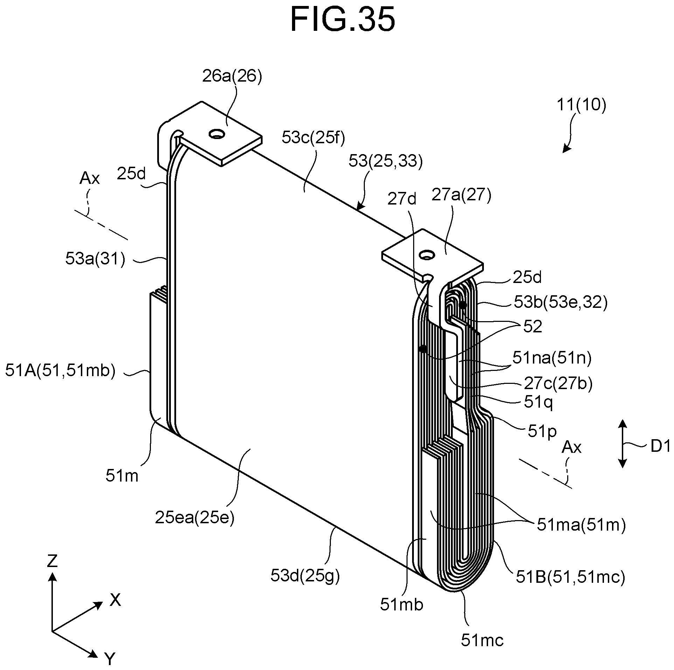

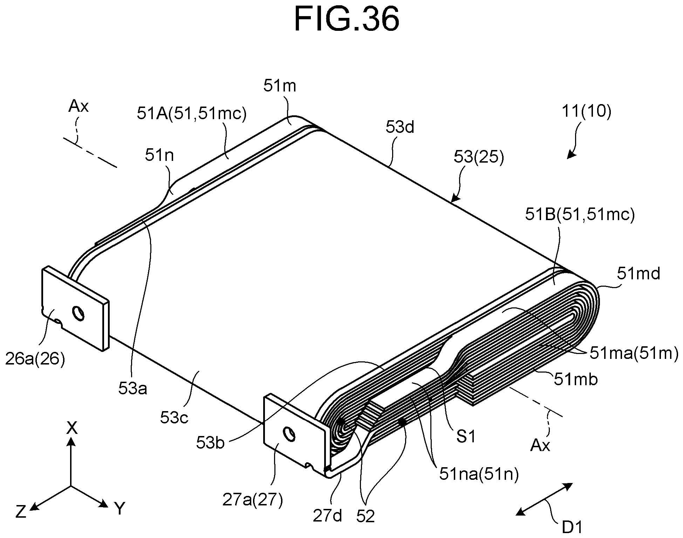

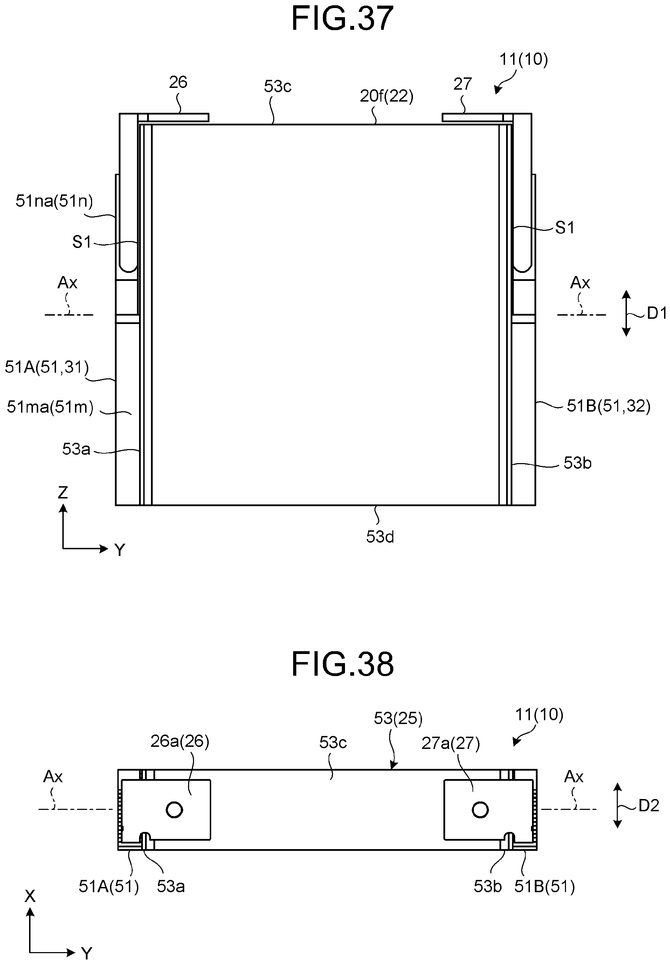

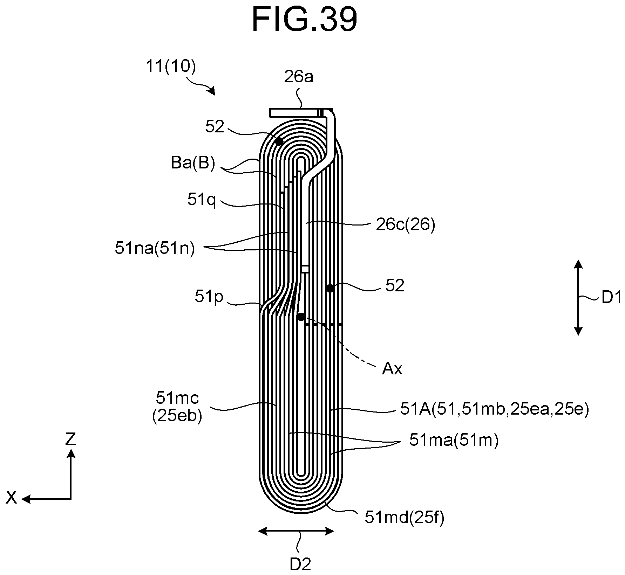

FIG. 35 is a partial schematic illustrative perspective view of the cover assembly 11 in the fourth embodiment. FIG. 36 is a partial schematic illustrative perspective view of the cover assembly 11 in the fourth embodiment as viewed from a line of sight different from that in FIG. 35. FIG. 37 is a partial schematic illustrative front view of the cover assembly 11 in the fourth embodiment. FIG. 38 is a partial schematic illustrative plan view of the cover assembly 11 in the fourth embodiment. FIG. 39 is a schematic illustrative left-side view of the cover assembly 11 in the fourth embodiment.

As illustrated in FIGS. 35 to 39, in the present embodiment, the collector tabs 51na of the positive collector 51A extend from the bases 51ma of one of the extension pair 51mb and 51mc (for example, the extension 51mb) in the base group 51m of the positive collector 51A in the first intersecting direction D1 (the end 53c side of the winding 53). That is, the collector-tab group 51n of the positive collector 51A is connected to one (for example, the extension 51mb) of the extension pair 51mb and 51mc in the base group 51m of the positive collector 51A.

As illustrated in FIGS. 35 to 38, the collector tabs 51na of the collector-tab group 51n of the negative collector 51B extend from the bases 51ma of one (for example, the extension 51mc) of the extension pair 51mb and 51mc in the base group 51m of the negative collector 51B in the first intersecting direction D1 (the end 53c side of the winding 53), as in the third embodiment. That is, the collector-tab group 51n of the negative collector 51B is connected to one (for example, the extension 51mc) of the extension pair 51mb and 51mc in the base group 51m of the negative collector 51B.

The lead connection 26c of the positive electrode lead 26 is located in the inner periphery of the winding 53 in the axial direction (FIG. 39) and placed on the collector connection 51q in the second intersecting direction D2. The lead connection 27c of the negative electrode lead 27 is located in the inner periphery of the winding 53 in the axial direction and placed on the collector connection 51q in the second intersecting direction D2, as in the third embodiment (FIG. 30).

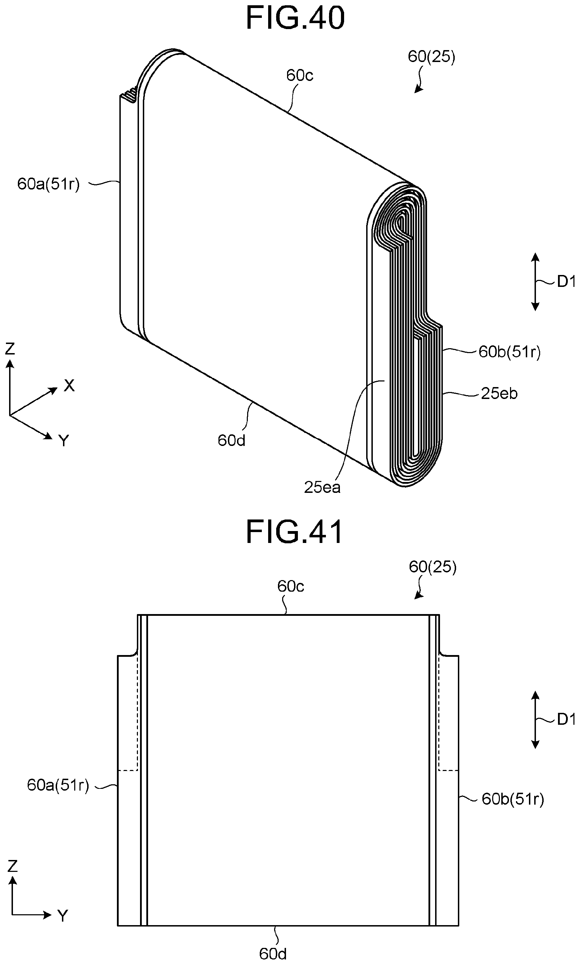

FIGS. 40 and 41 are schematic illustrative diagrams of the electrode assembly 25 during a manufacturing process in the fourth embodiment. The battery 10 of the present embodiment is manufactured through the same process as in the first embodiment. However, in the present embodiment, as illustrated in FIGS. 40 and 41, in addition to two top corners of the base material 60, part of the extension pair 25eb in the ends 60a and 60b that are continuous to the top corner are cut by a cutter. Subsequently, the slit S1 is formed. The same process as in the first and second embodiments then follows.

### <Fifth Embodiment>

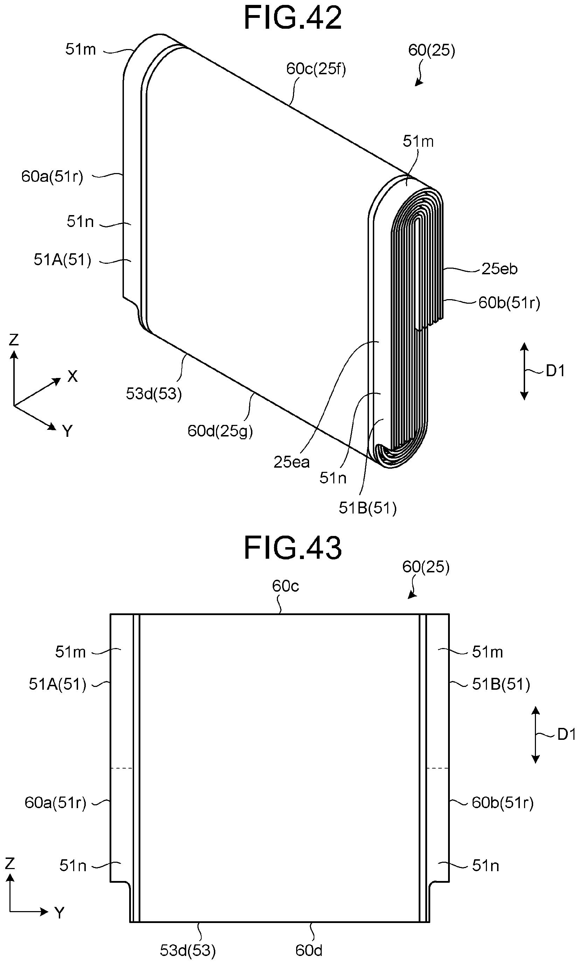

FIG. 42 is a schematic illustrative perspective view of the electrode assembly 25 during a manufacturing process in the fifth embodiment. FIG. 43 is a schematic illustrative front view of the electrode assembly 25 during a manufacturing process in the fifth embodiment. As can be understood from FIGS. 42 and 43, in the present embodiment, the collector 51 is shaped reversely to that in the fourth embodiment in the first intersecting direction D1. In the present embodiment, the base group 51m of the collector 51 includes the turnback 25f and does not include the turnback 25g. Then, the collector-tab group 51n of each collector 51 extends from the base group 51m of the collector 51 to the end 53d of the winding 53.

### <Sixth Embodiment>

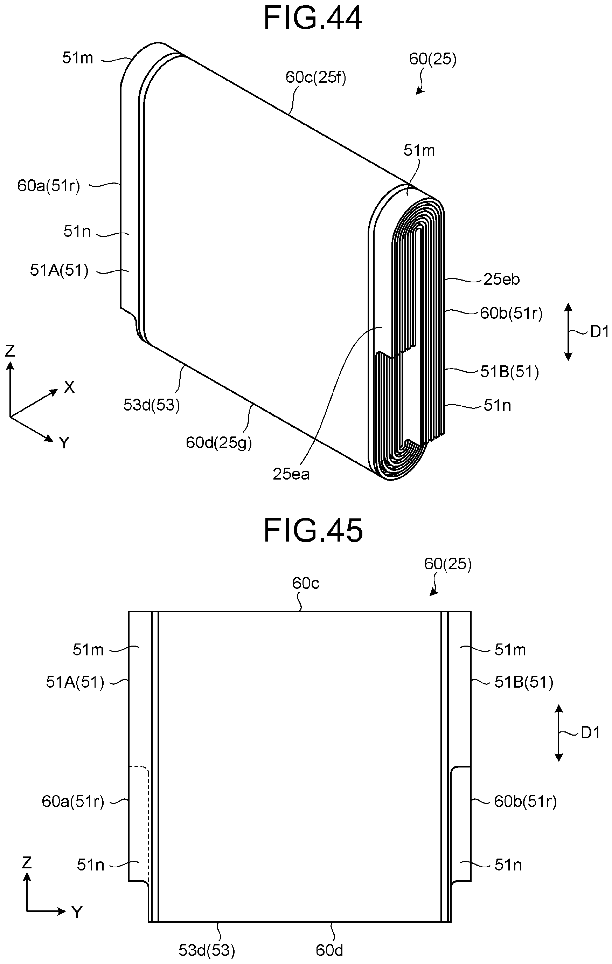

FIG. 44 is a schematic illustrative perspective view of the electrode assembly 25 during a manufacturing process in the sixth embodiment. FIG. 45 is a schematic illustrative front view of the electrode assembly 25 during a manufacturing process in the sixth embodiment. As illustrated in FIGS. 44 and 45, the present embodiment mainly differs from the third embodiment in the shape of the collector 51 of the electrode assembly 25. Specifically, the collector 51 is shaped reversely to that in the third embodiment in the first intersecting direction D1. In the present embodiment, the base group 51m of the collector 51 includes the turnback 25f and does not include the turnback 25g. Then, the collector-tab group 51n of each collector 51 extends from the base group 51m of the collector 51 to the end 53d of the winding 53.

The collector tabs 51na of the collector-tab group 51n of the negative collector 51B extend from the bases 51ma of the other (for example, the extension 51mc) of the extension pair 51mb and 51mc in the base group 51m of the negative collector 51B in the first intersecting direction D1 (the end 53d side of the winding 53).

### <Seventh Embodiment>

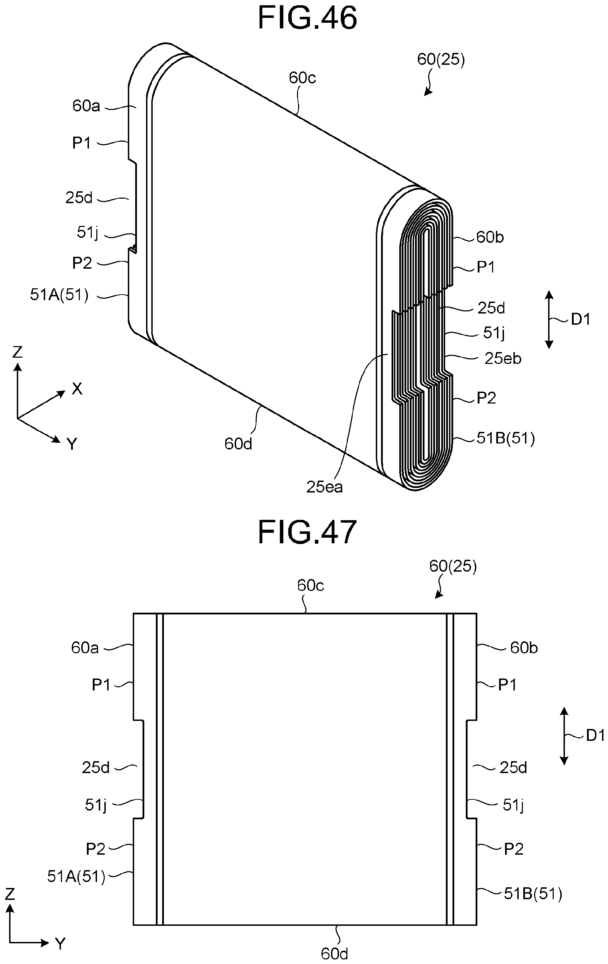

FIG. 46 is a schematic illustrative perspective view of the electrode assembly 25 during a manufacturing process in the seventh embodiment. FIG. 47 is a schematic illustrative front view of the electrode assembly 25 during a manufacturing process in the seventh embodiment. As can be understood from FIGS. 46 and 47, the present embodiment mainly differs from the third embodiment in the shape of the collector 51 of the electrode assembly 25. In the present embodiment, during a manufacturing process of the electrode assembly 25, cut parts 25d concave toward the axial center of the base material 60 (electrode assembly 25) are formed at intermediate parts in the first intersecting direction D1 of opposite ends 60a and 60b (collectors 51) in the axial direction of the base material 60. A depression 51j surrounded by the cut part 25d is thus formed in the base material 60. The cut part 25d extends between the extension pair 25ea and 25eb of the base material 60. The collector 51 is located on either of both sides P1 and P2 (for example, the lower side P2) of the cut part 25d in the first intersecting direction D1. The collector 51 has a shape, for example, in shorter length than the collector 51 illustrated in FIG. 3 in the first intersecting direction D1. The collector 51 may be located on the upper side P1 of the cut part 25d in FIGS. 46 and 47. The depression 51j is also referred to as a concave part.

### <Eighth Embodiment>

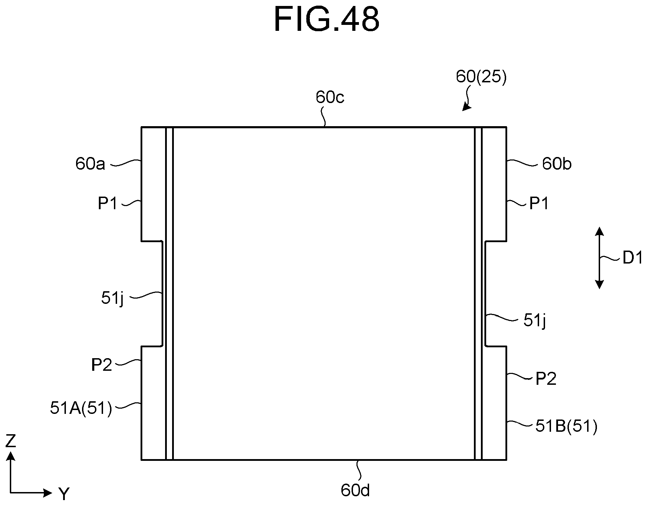

FIG. 48 is a schematic illustrative front view of the electrode assembly 25 during a manufacturing process in the eighth embodiment. In the present embodiment, cut parts 25d concave toward the axial center of the base material 60 (electrode assembly 25) are formed at intermediate parts in the first intersecting direction D1 of opposite ends 60a and 60b (collectors 51) in the axial direction of the base material 60, as in the seventh embodiment. However, in the present embodiment, the depth (the amount of concave) of the cut part 25d is greater than that in the seventh embodiment. The shape of the collector 51 is similar to that in the seventh embodiment.

### <Ninth Embodiment>

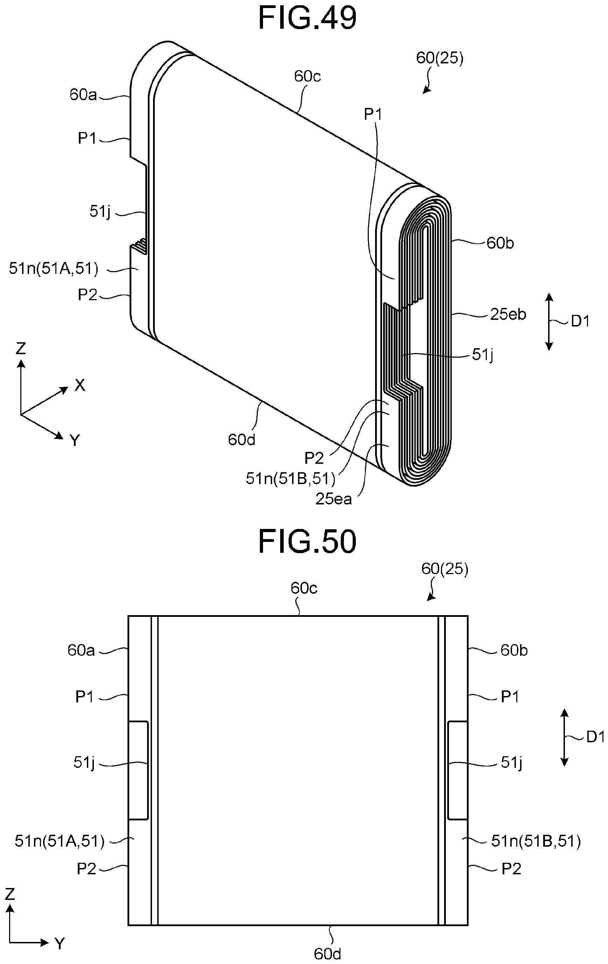

FIG. 49 is a schematic illustrative perspective view of the electrode assembly 25 during a manufacturing process in the ninth embodiment. FIG. 50 is a schematic illustrative front view of the electrode assembly 25 during a manufacturing process in the ninth embodiment. As illustrated in FIGS. 49 and 50, in the present embodiment, during a manufacturing process of the electrode assembly 25, cut parts 25d concave toward the axial center of the base material 60 (electrode assembly 25) are formed at intermediate parts in the first intersecting direction D1 of opposite ends 60a and 60b (collectors 51) in the axial direction of the base material 60, as in the eighth embodiment. However, in the present embodiment, the cut part 25d is located at either (for example, 25ea) of the extension pair 25ea and 25eb of the base material 60. The collector-tab group 51n (collector 51) is located at either one (for example, the lower-side part P2 in FIGS. 49 and 50) of the parts P1 and P2 on both sides in the first intersecting direction of the cut part 25d.

### <Tenth Embodiment>

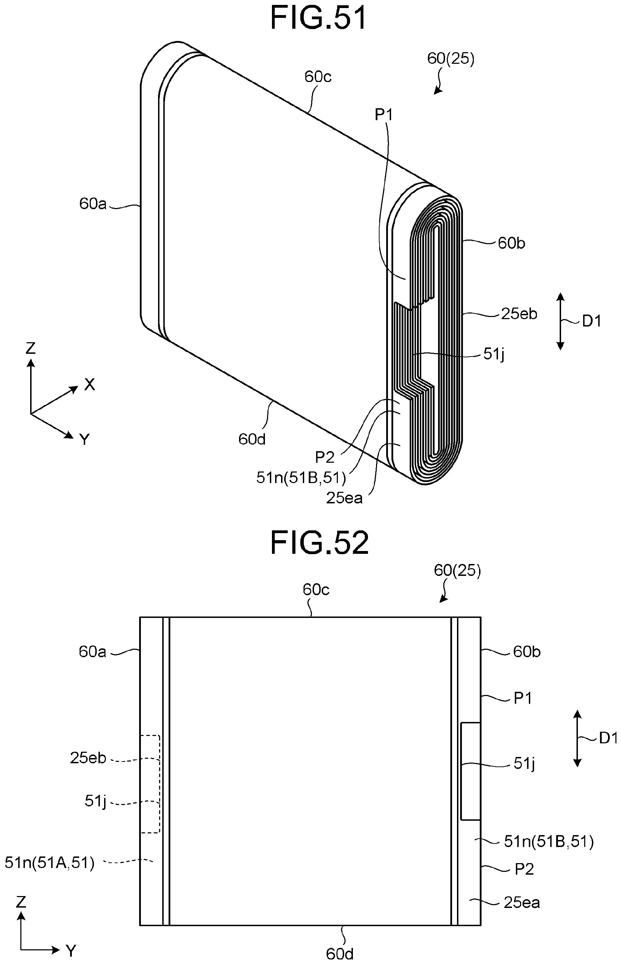

FIG. 51 is a schematic illustrative perspective view of the electrode assembly 25 during a manufacturing process in the tenth embodiment. FIG. 52 is a schematic illustrative front view of the electrode assembly 25 during a manufacturing process in the tenth embodiment. As illustrated in FIGS. 51 and 52, in the present embodiment, during a manufacturing process of the electrode assembly 25, cut parts 25d concave toward the axial center of the base material 60 (electrode assembly 25) are formed at intermediate parts in the first intersecting direction D1 of opposite ends 60a and 60b (collectors 51) in the axial direction of the base material 60, as in the eighth embodiment. However, in the present embodiment, the cut part 25d of the positive collector 51A is located at either (for example, 25eb) of the extension pair 25ea and 25eb of the base material 60, and the cut part 25d of the negative collector 51B is located at the other (for example, 25ea) of the extension pair 25ea and 25eb of the base material 60. The collector-tab group 51n (collector 51) is located at either one (for example, the lower-side part P2 in FIG. 52) of the parts P1 and P2 on both sides in the first intersecting direction of the cut part 25d.

### <Eleventh Embodiment>

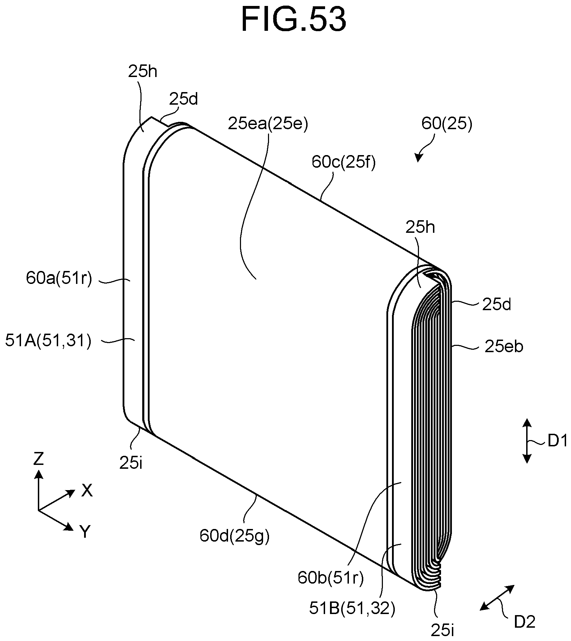

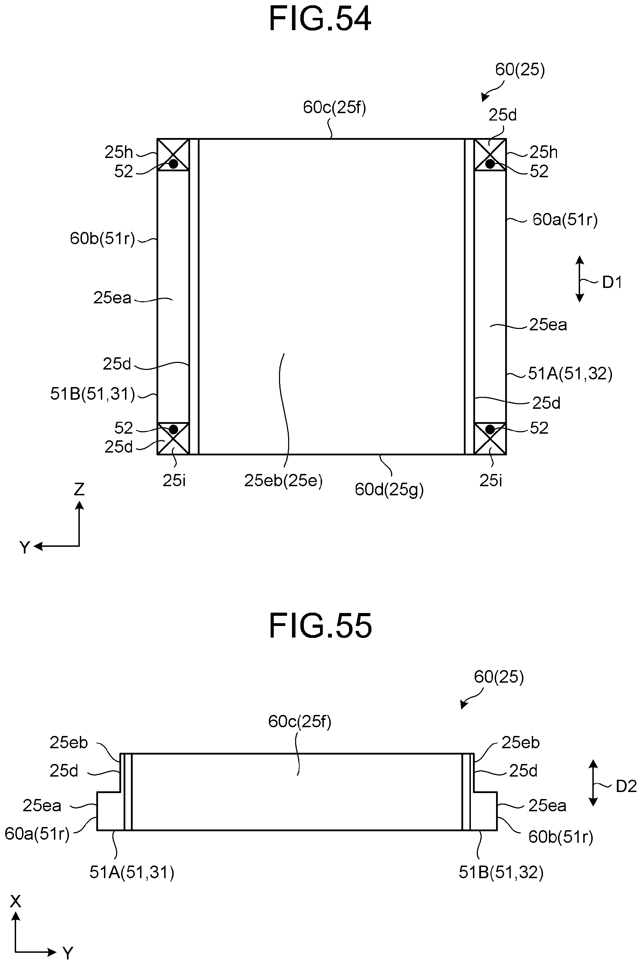

FIG. 53 is a schematic illustrative perspective view of the electrode assembly 25 during a manufacturing process in the eleventh embodiment. FIG. 54 is a schematic illustrative rear view of the electrode assembly 25 during a manufacturing process in the eleventh embodiment. FIG. 55 is a schematic illustrative plan view of the electrode assembly 25 during a manufacturing process in the eleventh embodiment.

As illustrated in FIGS. 53 to 55, in the present embodiment, protrusions 51r are located each in a half region in the second intersecting direction D2 in the base material 60 when viewed from the axial direction, in opposite ends 60a and 60b in the axial direction of the base material 60. The protrusion 51r is formed by cutting the other half region in the second intersecting direction D2 in the base material 60, as viewed from the axial direction. Cut parts 25d are formed in the base material 60 by this cutting.

A pair of protrusions 51r extend in opposite directions from the same end surface (end) of the base material 60 in the second intersecting direction D2. In the example in FIGS. 53 to 55, the pair of protrusions 51r extend oppositely from the end surface of the base material 60 in the X direction. The protrusion 51r includes part of one (extension 25ea) of the extension pair 25ea and 25eb and a pair of curve parts 25h and 25i, and does not include the turnbacks 25f or 25g. The curve parts 25h and 25i are formed such that the positive electrode 31 or the negative electrode 32 are curved along the turnbacks 25f and 25g in the range of about 90 degrees from the ends in the first intersecting direction D1 of the extension 25ea. That is, in the curve parts 25h and 25i, the positive electrode 31 or the negative electrode 32 is not folded back. The curve parts 25h and 25i extend in the axial direction from the turnbacks 25f and 25g.

In the present embodiment, for example, the slit S1 is located at a given region along the first intersecting direction D1 from the end 60a or the end 60b of the protrusion 51r, whereby the collector 51 is formed.

### <Twelfth Embodiment>

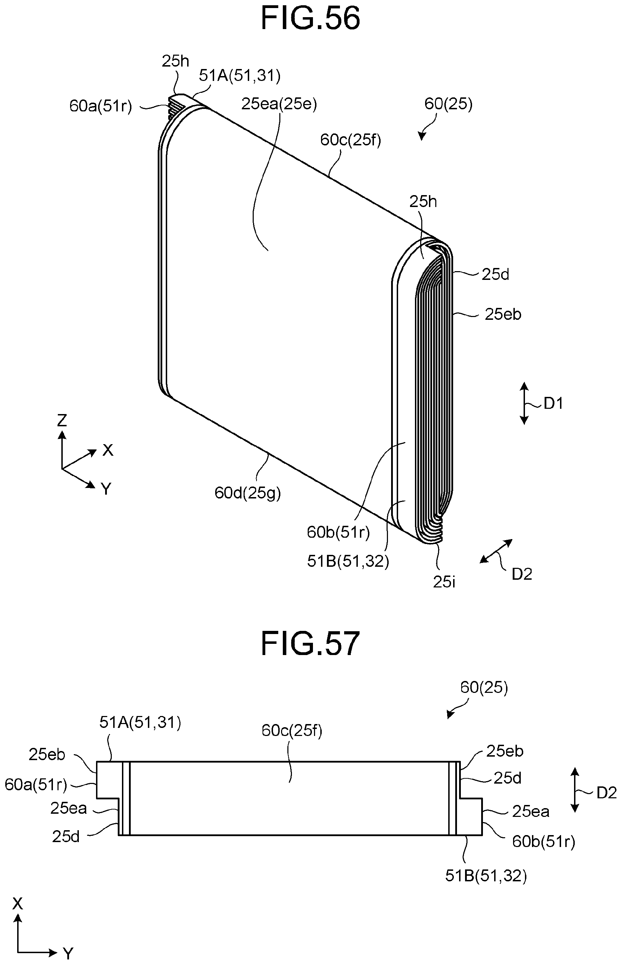

FIG. 56 is a schematic illustrative perspective view of the electrode assembly 25 during a manufacturing process in the twelfth embodiment. FIG. 57 is a schematic illustrative plan view of the electrode assembly 25 during a manufacturing process in the twelfth embodiment.

As illustrated in FIGS. 56 and 57, in the present embodiment, protrusions 51r are located at opposite ends 60a and 60b in the axial direction of the base material 60, as in the eleventh embodiment. However, in the present embodiment, a pair of protrusions 51r extend in different directions from different end surfaces (ends) in the second intersecting direction D2 of the base material 60. That is, a pair of protrusions 51r are misaligned with each other in the second intersecting direction D2. In the example in FIGS. 56 and 57, one of the protrusions 51r extends from the end surface in the X direction of the base material 60, and the other protrusion extends from the end surface in the opposite direction to the X direction of the base material 60. The protrusion 51r located at the end 60b includes part of one (extension 25ea) of the extension pair 25ea and 25eb, as in the eleventh embodiment. On the other hand, the protrusion 51r located at the end 60a includes part of the other (extension 25eb) of the extension pair 25ea and 25eb.

Also in the present embodiment, for example, the slit S1 is located at a given region along the first intersecting direction D1 from the end 60a or the end 60b of the protrusion 51r, whereby the collector 51 is formed, as in the eleventh embodiment.

### <Thirteenth Embodiment>

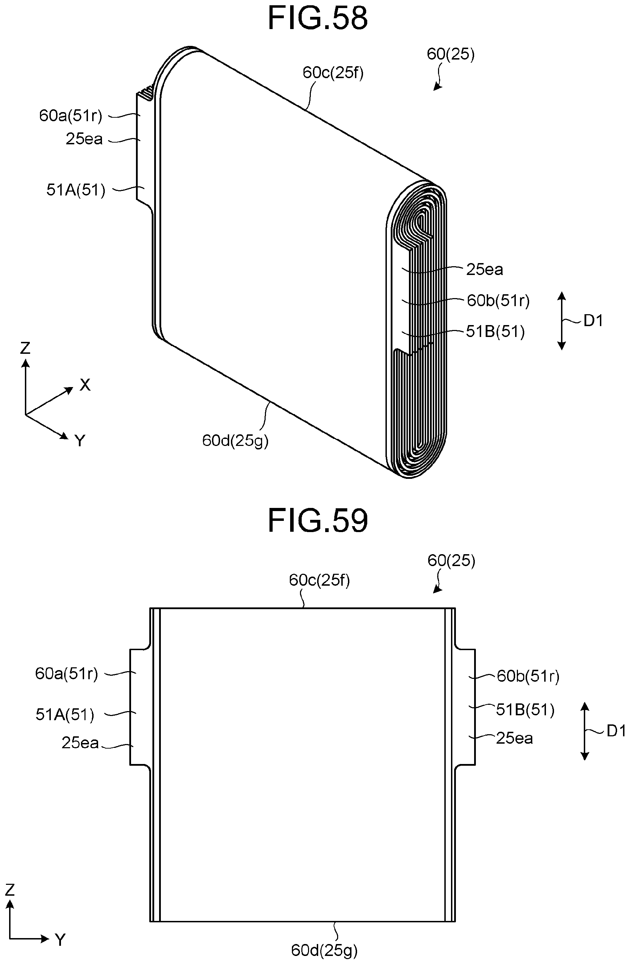

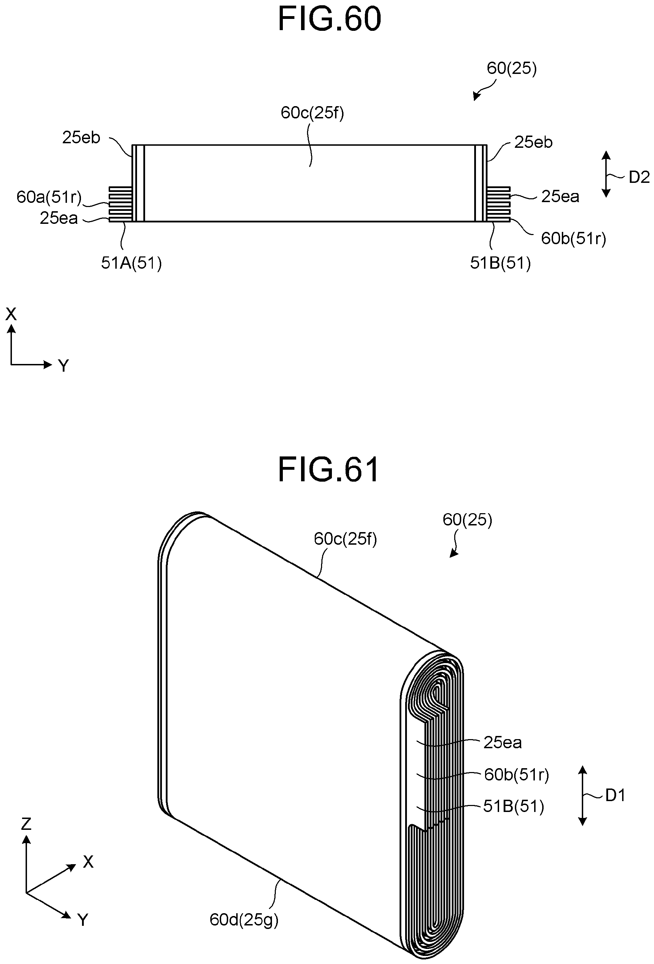

FIG. 58 is a schematic illustrative perspective view of the electrode assembly 25 during a manufacturing process in the thirteenth embodiment. FIG. 59 is a schematic illustrative front view of the electrode assembly 25 during a manufacturing process in the thirteenth embodiment. FIG. 60 is a schematic illustrative plan view of the electrode assembly 25 during a manufacturing process in the thirteenth embodiment.

As illustrated in FIGS. 58 to 60, in the present embodiment, protrusions 51r are located at opposite ends 60a and 60b in the axial direction of the base material 60, as in the eleventh embodiment. However, the protrusions 51r in the present embodiment are made of part of the extension 25ea. The positions of a pair of such protrusions 51r are the same in the second intersecting direction D2.

In the present embodiment, for example, the slit S1 is located at a given region along the first intersecting direction D1 from one end (the upper-side end or the lower-side end in FIG. 59) in the first intersecting direction D1 of the protrusion 51r, whereby the collector 51 is formed.

### <Fourteenth Embodiment>

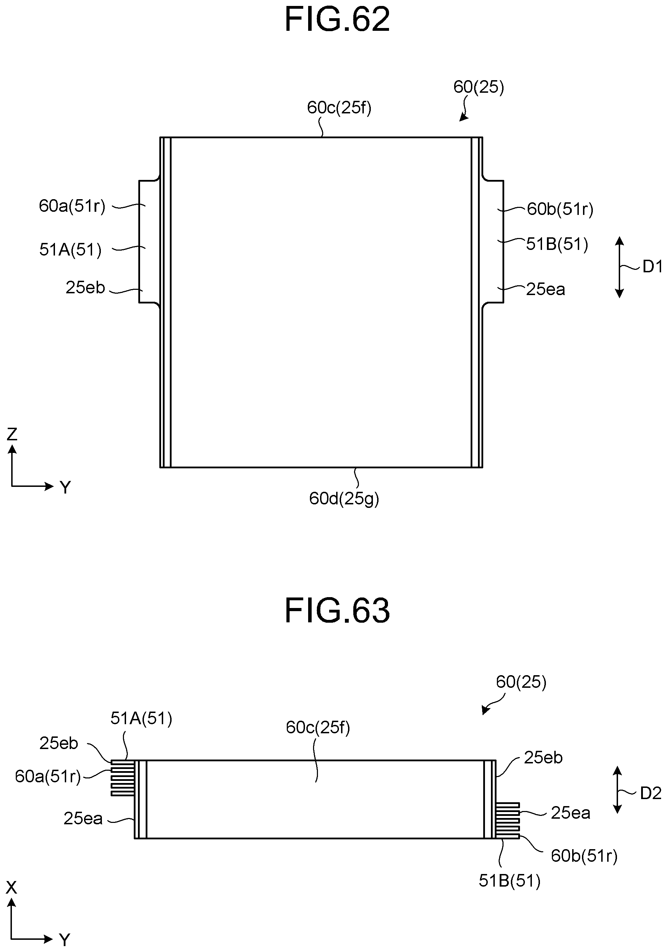

FIG. 61 is a schematic illustrative perspective view of the electrode assembly 25 during a manufacturing process in the fourteenth embodiment. FIG. 62 is a schematic illustrative front view of the electrode assembly 25 during a manufacturing process in the fourteenth embodiment. FIG. 63 is a schematic illustrative plan view of the electrode assembly 25 during a manufacturing process in the fourteenth embodiment.

As illustrated in FIGS. 61 to 63, in the present embodiment, protrusions 51r are located at opposite ends 60a and 60b in the axial direction of the base material 60, as in the thirteenth embodiment. However, in the present embodiment, one of the protrusions 51r is made of part of the extension 25eb, and the other protrusion 51r is made of the extension 25ea. The positions of a pair of such protrusions 51r are misaligned with each other in the second intersecting direction D2.

In the present embodiment, for example, the slit S1 is located at a given region along the first intersecting direction D1 from one end (the upper-side end or the lower-side end in FIG. 62) in the first intersecting direction D1 of the protrusion 51r, whereby the collector 51 is formed, as in the thirteenth embodiment.

### <Fifteenth Embodiment>

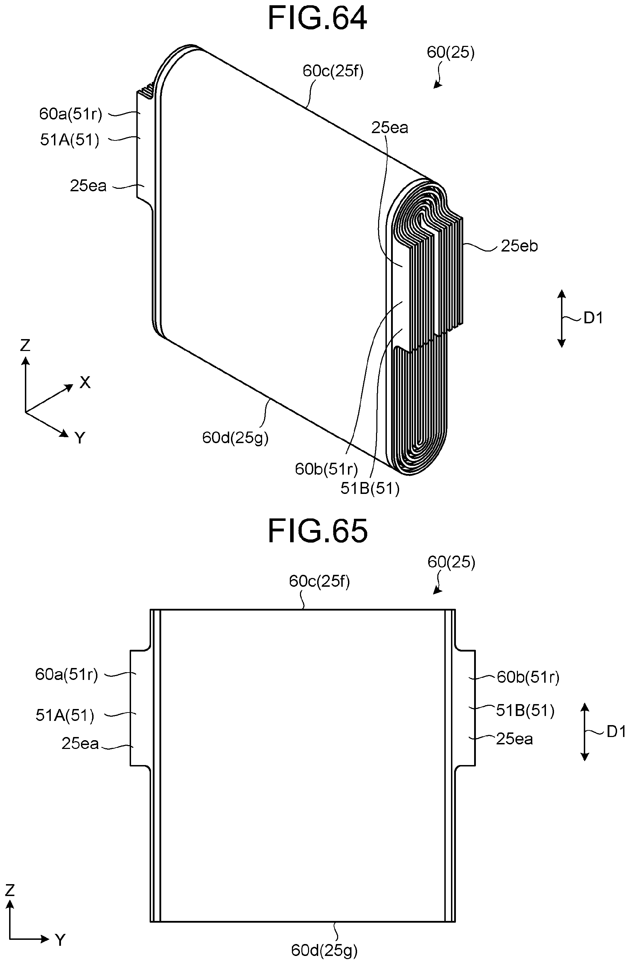

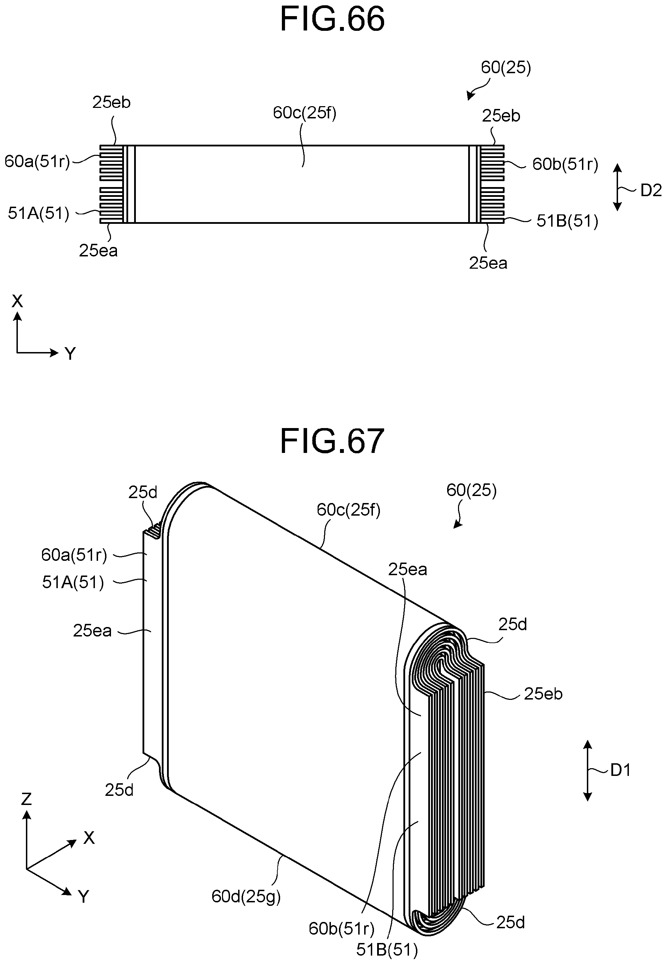

FIG. 64 is a schematic illustrative perspective view of the electrode assembly 25 during a manufacturing process in the fifteenth embodiment. FIG. 65 is a schematic illustrative front view of the electrode assembly 25 during a manufacturing process in the fifteenth embodiment. FIG. 66 is a schematic illustrative plan view of the electrode assembly 25 during a manufacturing process in the fifteenth embodiment.

As illustrated in FIGS. 64 to 66, in the present embodiment, protrusions 51r are located at opposite ends 60a and 60b in the axial direction of the base material 60, as in the thirteenth embodiment. However, in the present embodiment, each protrusion 51r is made of part of the extension 25ea and part of the extension 25eb.

In the present embodiment, for example, the slit S1 is located at a given region along the first intersecting direction D1 from one end (the upper-side end or the lower end in FIG. 65) in the first intersecting direction D1 of the protrusion 51r, whereby the collector 51 is formed as in the thirteenth embodiment.

### <Sixteenth Embodiment>

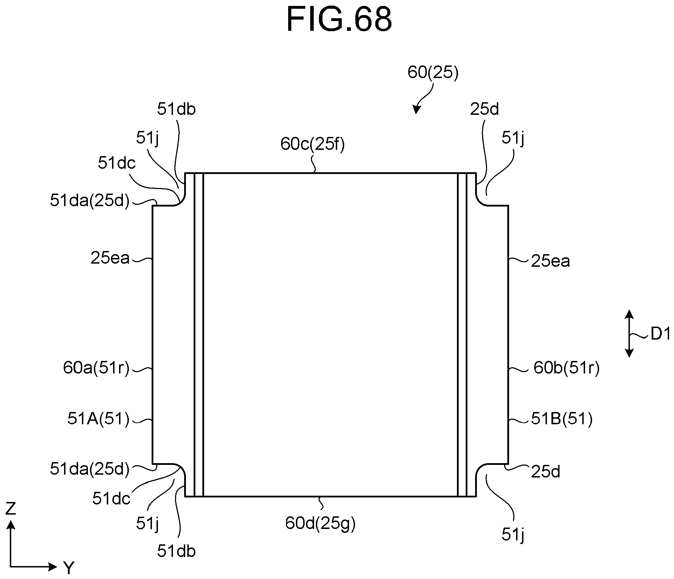

FIG. 67 is a schematic illustrative perspective view of the electrode assembly 25 during a manufacturing process in the sixteenth embodiment. FIG. 68 is a schematic illustrative front view of the electrode assembly 25 during a manufacturing process in the sixteenth embodiment. As illustrated in FIGS. 67 and 68, in the present embodiment, respective given parts of four corners of the base material 60 are cut off. Four cut parts 25d are thus formed in the base material 60, and protrusions 51r are formed at opposite ends 60a and 60b in the axial direction of the base material 60. As illustrated in FIG. 68, the cut part 25d includes a first extension 51da extending in the axial direction, a second extension 51db extending in the first intersecting direction D1, and a connection 51dc connecting the first extension 51da and the second extension 51db. The connection 51dc has a curved shape. The collector 51 is formed through a similar process to that in the first embodiment. The connection 51dc is also referred to as a corner.

### <Seventeenth Embodiment>

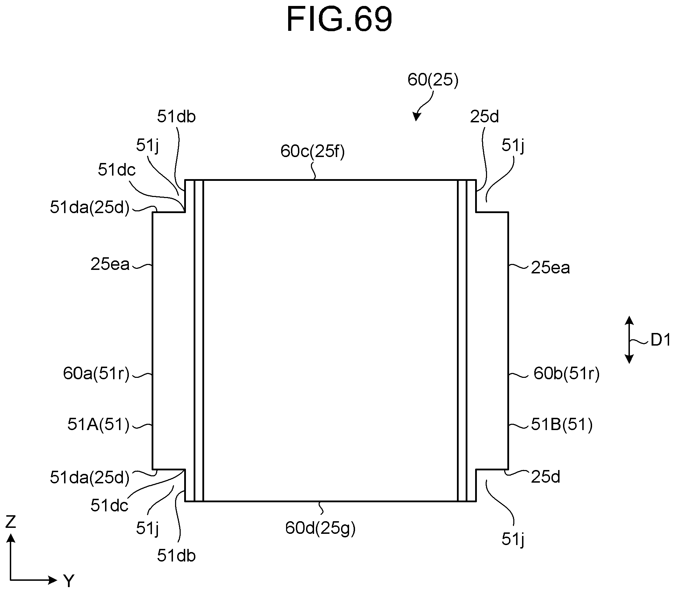

FIG. 69 is a schematic illustrative front view of the electrode assembly 25 during a manufacturing process in the seventeenth embodiment. As illustrated in FIG. 69, in the present embodiment, respective given parts of four corners of the base material 60 are cut off to form four cut parts 25d, as in the sixteenth embodiment. However, in the present embodiment, the connection 51dc between the first extension 51da and the second extension 51db is formed approximately at the right angle.

### <Eighteenth Embodiment>

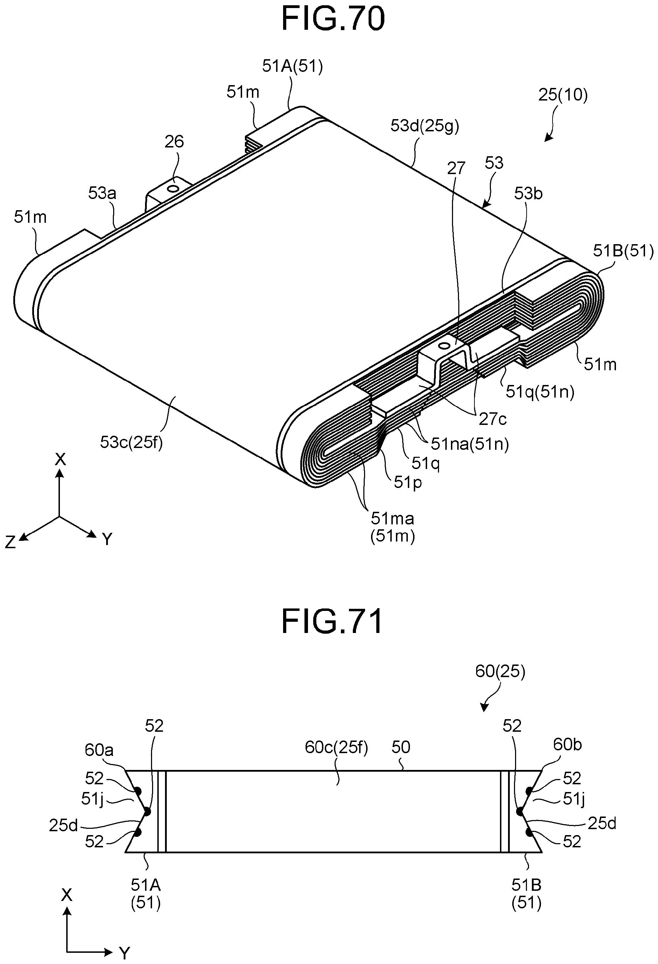

FIG. 70 is a schematic illustrative perspective view of a part including the electrode assembly 25 of the battery 10 in the eighteenth embodiment. As illustrated in FIG. 70, in the present embodiment, each collector 51 includes two base groups 51m and two collector-tab groups 51n. One of the base groups 51m includes one turnback 25f, and the other base group 51m includes the other turnback 25g. The collector-tab group 51n is provided for each base group 51m. Two collector-tab groups 51n extend from the base groups 51m to approach each other.

The positive electrode lead 26 and the negative electrode lead 27 in the present embodiment each have two lead connections 26c, 27c (in FIG. 70, the lead connections 26c are not illustrated). The two lead connections 26c, 27c of each of the positive electrode lead 26 and the negative electrode lead 27 are connected to the collector connections 51q of two collector-tab groups 51n of the collector 51.

In the present embodiment, for example, although not illustrated, the positive electrode terminal 23 (FIG. 1) is located at the center of one end (the wall 20b, FIG. 1) in the axial direction in the casing 20, and the negative electrode terminal 24 (FIG. 1) is located at the center of the other end (the wall 20d, FIG. 1) in the axial direction in the casing 20. The positive electrode terminal 23 and the negative electrode terminal 24 are electrically connected to the positive electrode lead 26 and the negative electrode lead 27, respectively.

### <Nineteenth Embodiment>

FIG. 71 is a schematic illustrative plan view of the electrode assembly 25 during a manufacturing process in the nineteenth embodiment. As illustrated in FIG. 71, in the present embodiment, concave cut parts 25d are depressed toward the axial center of the base material 60 at the axial ends 60a and 60b of the base material 60. The cut part 25d has an approximately V-shape, for example, as viewed from the Z direction (the direction normal to FIG. 71). This cut part 25d forms a depression 51j facing the cut part 25d. The depression 51j of a groove form that is depressed toward the axial center of the base material 60 and extends between opposite ends 60c and 60d of the base material 60 in the first intersecting direction. The collector 51 of the form illustrated in one of the first to eighteenth embodiments is formed in the base material 60 having such cut parts 25d, for example.

### <Twentieth Embodiment>

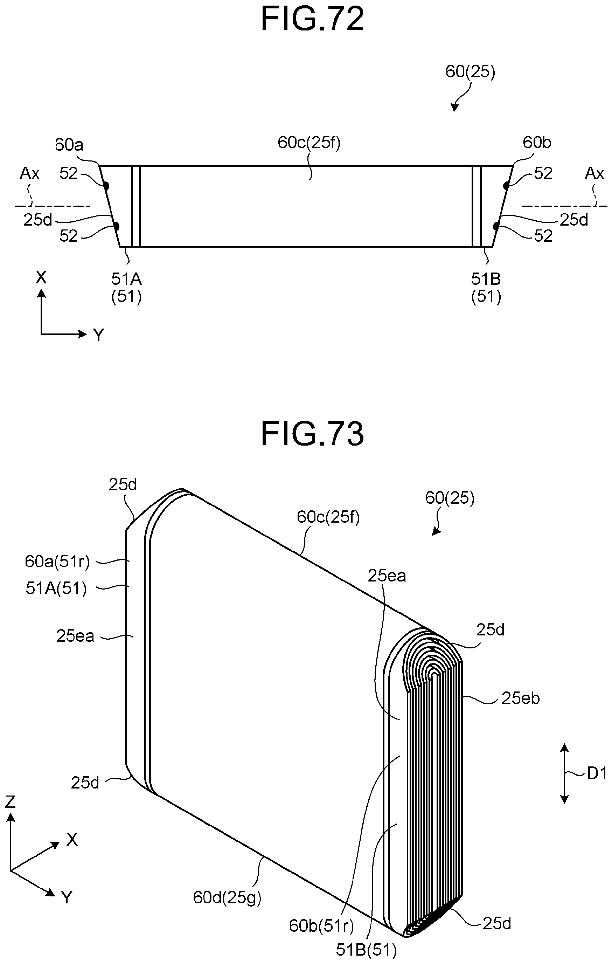

FIG. 72 is a schematic illustrative plan view of the electrode assembly 25 during a manufacturing process in the twentieth embodiment. As illustrated in FIG. 72, in the present embodiment, cut parts 25d inclined relative to the axis Ax are formed at the ends 60a and 60b in the axial direction of the base material 60. As an example, the cut part 25d is inclined relative to the axis Ax such that the distance from the center in the axial direction of the base material 60 increases toward the X direction. In the base material 60 having such cut parts 25d, for example, the shape of the collector 51 according to any one of the first to eighteenth embodiments is formed.

### <Twenty-First Embodiment>

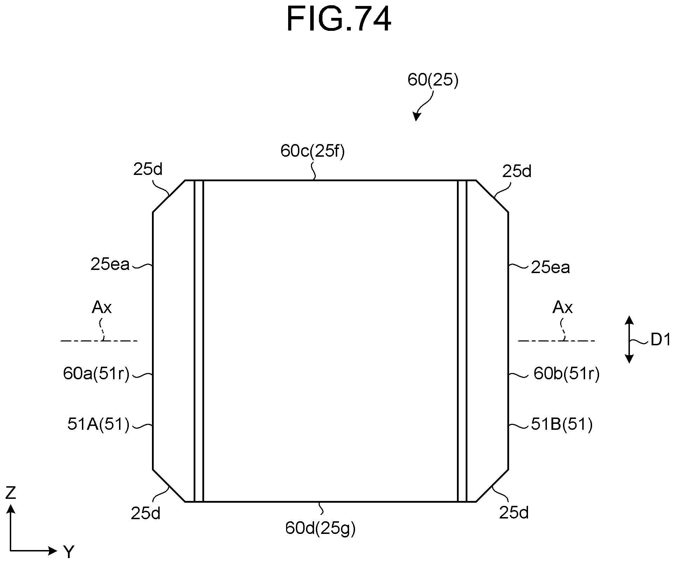

FIG. 73 is a schematic illustrative perspective view of the electrode assembly 25 during a manufacturing process in the twenty-first embodiment. FIG. 74 is a schematic illustrative plan view of the electrode assembly 25 during a manufacturing process in the twenty-first embodiment.

As illustrated in FIGS. 73 and 74, in the present embodiment, respective given parts of four corners of the base material 60 are cut off to form four cut parts 25d. The cut part 25d is inclined relative to the axis Ax. The cut part 25d is inclined relative to the axis Ax such that the distance from the axis Ax increases from the end 60a, 60b of the base material 60 toward the center in the axial direction of the base material 60. In the base material 60 having such cut parts 25d, for example, the shape of the collector 51 according to any one of the seventh embodiment illustrated in FIGS. 46 and 47, the eighth embodiment illustrated in FIG. 48, the ninth embodiment illustrated in FIGS. 49 and 50, and the tenth embodiment illustrated in FIGS. 51 and 52 is formed.

In the foregoing embodiments, the positive electrode lead 26 and the negative electrode lead 27 have one lead connection 26c, 27c. However, it is not limited to such an example. For example, the positive electrode lead 26 and the negative electrode lead 27 may each have two lead connections 26c, 27c that sandwich the collector connection 51q.

### <Twenty-Second Embodiment>

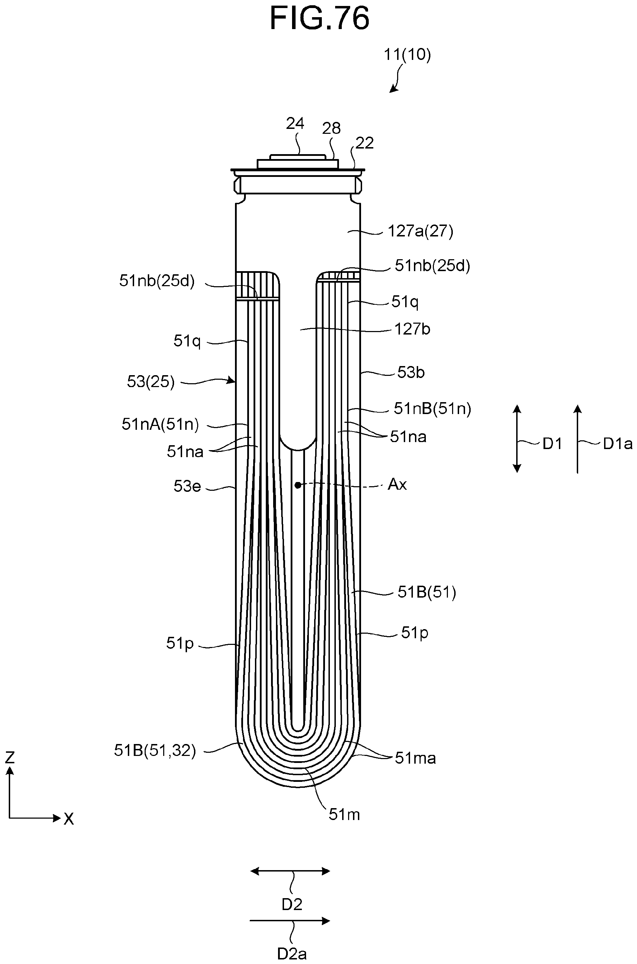

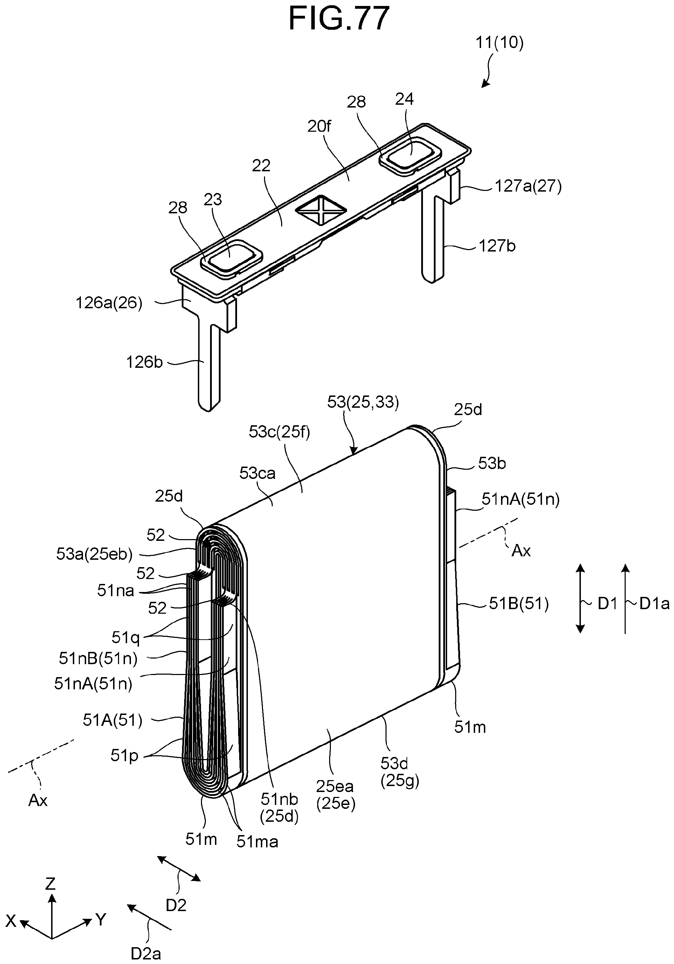

FIG. 75 is a schematic illustrative front view of the cover assembly 11 in the twenty-second embodiment. FIG. 76 is a schematic illustrative side view of the cover assembly 11 in the twenty-second embodiment. FIG. 77 is a schematic illustrative exploded perspective view of the cover assembly 11 in the twenty-second embodiment.

As illustrated in FIGS. 75 to 77, the battery 10 of the present embodiment includes a casing 20, a positive electrode terminal 23, a negative electrode terminal 24, an electrode assembly 25, a positive electrode lead 26, and a negative electrode lead 27, as in the first embodiment. The end 53c of the winding 53 in the electrode assembly 25 in the present embodiment is an exemplary one end, and the end 53d of the winding 53 is an exemplary other end. The differences between the battery 10 in the present embodiment and the battery 10 in the first embodiment will be mainly described below. Hereinafter, a pair of collector-tab groups 51n are also referred to as a collector-tab group 51nA and a collector-tab group 51nB. In the present embodiment, the first direction D1a is an exemplary first direction, and the second direction D2a is an exemplary second direction.

### [Electrode Assembly 25]

The bases 51ma of the positive collector 51A and the negative collector 51B have U-shape, and the base groups 51m have a U-shape. The base group 51m is also referred to as an R-shape part.

With the axis Ax set between the pair of collector-tab groups 51n, the pair of collector-tab groups 51n is spaced apart from each other in the second intersecting direction D2 (second direction D2a) and extends from the base group 51m in the first direction D1a. The pair of collector-tab groups 51nA and 51nB is connected through the base group 51m. In the base group 51m, the positive electrode 31 or the negative electrode 32 is folded back from one of the pair of collector-tab groups 51nA and 51nB to the other.

Each collector-tab group 51n includes a plurality of collector tabs 51na laminated on each other in the second direction D2a (second intersecting direction D2). The collector tabs 51na of the positive collector 51A are part of the positive electrode 31. The collector tabs 51na of the positive collector 51A extend from the base 51ma of the base group 51m of the positive collector 51A in the first direction D1a. The collector tabs 51na of the collector-tab group 51n of the negative collector 51B are part of the negative electrode 32. The collector tabs 51na of the negative collector 51B extend from the bases 51ma of the base group 51m of the negative collector 51B in the first direction D1a.

As illustrated in FIGS. 76 and 77, the collector-tab group 51n includes a width-varying part 51p connected to the base group 51m and a collector connection 51q connected to the width-varying part 51p. The width-varying part 51p extends in the first direction D1a from the base group 51m. In the second direction D2a (second intersecting direction D2), the width-varying part 51p decreases in width in the first direction D1a.

In the first direction D1a the collector connection 51q extends from the end of the width-varying part 51p. In the second direction D2a (the second intersecting direction D2) the collector connection 51q is smaller in maximum width than the winding 53. In the axial direction, the collector connection 51q is located inside the outer periphery 53e (FIG. 76) of the winding 53.

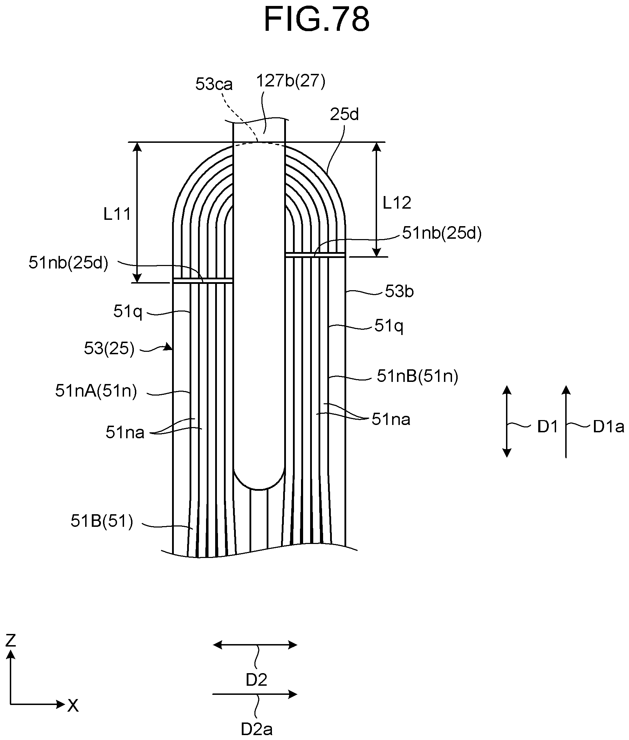

FIG. 78 is a partial schematic illustrative side view of the cover assembly 11 in the twenty-second embodiment. As illustrated in FIG. 78, the respective ends 51nb of the pair of collector-tab groups 51nA and 51nB are misaligned with each other in the first direction D1a (first intersecting direction D1). That is, in the first direction D1a (first intersecting direction D1), the shortest distance L11 between the end 51nb of the collector-tab group 51nA and the turnback top 53ca at the end 53c of the winding 53 is different from the shortest distance L12 between the end 51nb of the collector-tab group 51nB and the top 53ca of the winding 53. Although either of the shortest distance L11 of the collector-tab group 51nA and the shortest distance L12 of the collector-tab group 51nB may be relatively long, FIG. 78 illustrates an example that the shortest distance L11 of the collector-tab group 51nA is longer than the shortest distance L12 of the collector-tab group 51nB. With reference to the base group 51m as configured above, one of the pair of collector-tab groups 51nA and 51nB is larger than the other in terms of amount of extension (length) from the base group 51m.

In the collector connection 51q, the collector tabs 51na are joined together. As illustrated in FIGS. 75 and 76, the collector connections 51q are juxtaposed to and electrically connected to the positive electrode lead 26 or the negative electrode lead 27 in the second direction D2a (second intersecting direction D2). Specifically, the positive electrode lead 26 or the negative electrode lead 27 is inserted between the pair of collector connections 51q of the pair of collector-tab groups 51n for electrical connection therebetween. The collector connections 51q are joined (welded) to the positive electrode lead 26 or the negative electrode lead 27, for example, by ultrasonic welding.

In the present embodiment, part of the substrate 25e, the turnback 25f, and part of the turnback 25g are included in the winding 53, and another part of the substrate 25e and another part of the turnback 25g are included in the collector 51. Specifically, another part of the substrate 25e constitutes the collector-tab group 51n of the collector 51, and another part of the turnback 25g constitutes the base group 51m of the collector 51. As can be understood from the above, in the present embodiment, the positive electrode 31 and the negative electrode 32 are folded back at a part other than the collector-tab groups 51n in the electrode assembly 25. That is, each collector-tab group 51n (collector tabs 51na) is not folded back.

As illustrated in FIG. 77, the electrode assembly 25 are provided with cut parts 25d. The cut parts 25d are located at the ends 53a and 53b of the winding 53 and the collectors 51 (the ends 51nb of the collector-tab groups 51n). The cut part 25d is formed by melt-cutting the base material 60 (FIG. 8) of the electrode assembly 25, for example, by irradiation of laser light during manufacturing of the electrode assembly 25.

As illustrated in FIG. 77, the cut parts 25d of the electrode assembly 25 are provided with the joints 52. In the present embodiment, the joints 52 are also located in the collector-tab groups 51n of the collector 51 (the ends 51nb of the collector-tab groups 51n), for example.

### [Positive Electrode Lead 26, Negative Electrode Lead 27]

As illustrated in FIG. 75, the positive electrode lead 26 extends from the wall 20f in the casing 20 in the opposite direction to the first direction D1a. The positive electrode lead 26 extends between the positive collector 51A of the electrode assembly 25 and the positive electrode terminal 23 to electrically connect the positive collector 51A and the positive electrode terminal 23.

As illustrated in FIG. 77, the positive electrode lead 26 includes a base 126a, a lead connection 126b, and a stationary part (not illustrated). The positive electrode lead 26 can be formed by folding and molding a metal sheet. The stationary part is located along the inner surface of the cover member 22 and is fixed to the positive electrode terminal 23. The base 126a extends from the stationary part in the opposite direction to the first direction D1a. The base 126a has a flat plate shape extending in the opposite direction to the first direction D1a and in the second direction D2a. The lead connection 126b extends in the opposite direction to the first direction D1a from the center of the base 126a in the second direction D2a (second intersecting direction D2). In the second direction D2a (second intersecting direction D2), the lead connection 126b is smaller in width than the base 126a. The number of the lead connections 126b is one. The lead connection 126b is located between the pair of collector connections 51q of the positive collector 51A and joined to the pair of collector connections 51q. The positive electrode lead 26 is formed of a conductive material such as a metal material. The lead connection 126b is an exemplary connection.

As illustrated in FIG. 75, the negative electrode lead 27 extends in the opposite direction to the first direction D1a from the wall 20f in the casing 20. The negative electrode lead 27 extends between the negative collector 51B of the electrode assembly 25 and the negative electrode terminal 24 to electrically connect the negative collector 51B and the negative electrode terminal 24.

As illustrated in FIG. 77, the negative electrode lead 27 includes a base 127a, a lead connection 127b, and a stationary part (not illustrated). The negative electrode lead 27 can be formed by folding and molding a metal sheet. The stationary part is located along the inner surface of the cover member 22 and is fixed to the negative electrode terminal 24. The base 127a extends from the stationary part in the direction opposite to the first direction D1a. The base 127a has a flat plate shape extending in the opposite direction to the first direction D1a and in the second direction D2a. The lead connection 127b extends in the opposite direction to the first direction D1a from the center of the base 127a in the second direction D2a (second intersecting direction D2). In the second direction D2a (second intersecting direction D2), the lead connection 127b is smaller in width than the base 127a. The number of lead connections 127b is one. The lead connection 127b is located between the pair of collector connections 51q of the negative collector 51B and joined to the pair of collector connection 51q (FIG. 78). The negative electrode lead 27 is formed of a conductive material such as a metal material. The lead connection 127b is an exemplary connection.

### [Manufacturing method of Battery 10]

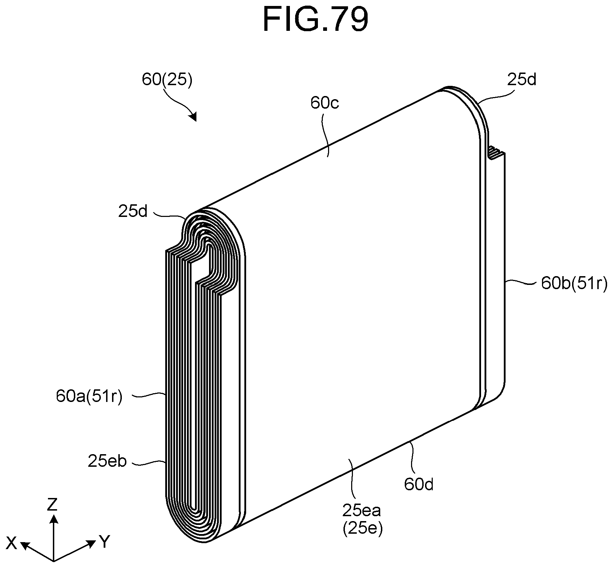

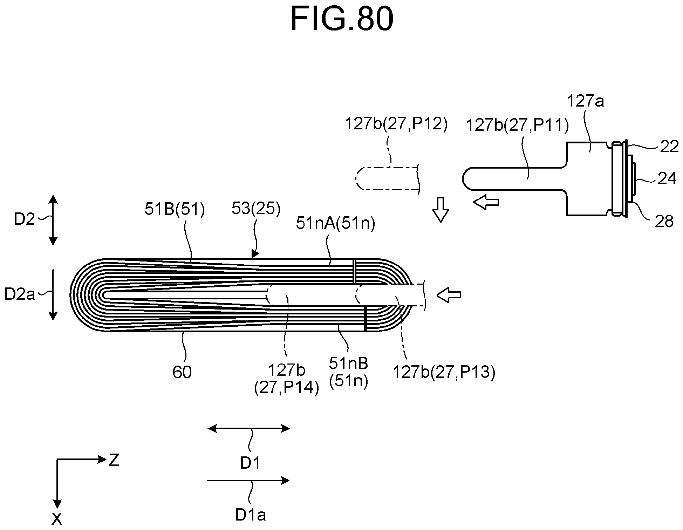

A manufacturing method of the battery 10 will now be described with reference to 79, 80, and etc. FIG. 79 is a schematic illustrative diagram of the electrode assembly 25 during a manufacturing process in the twenty-second embodiment. FIG. 80 is a diagram for explaining a manufacturing method of the battery 10 in the twenty-second embodiment.

As in the first embodiment, first, the base material 60 (FIG. 8) including the electrode assembly 25 is formed.

Next, as illustrated in FIG. 79, a cutter (not illustrated) cuts a given part (removal part) of the base material 60. Specifically, of the four corners of the base material 60, given parts of two top corners are cut off. This forms two cut parts 25d in the base material 60 and protrusions 51r at opposite ends 60a and 60b of the base material 60 in the axial direction. Each protrusion 51r includes part of each of the extension pair 25ea and 25eb and part of the turnback 25g, and does not include the turnback 25f. As described in detail later, the protrusion 51r is processed to form the collector 51 of a shape illustrated in FIG. 77 and others. The base material 60 is thermally cut (melt-cut). For example, a laser emitting device serves as a cutter to irradiate the base material 60 with laser light and heat and melt-cut the base material 60. The joints 52 (FIGS. 77 and 9) are formed at the cut part 25d by melt-cutting. That is, in the present embodiment, for example, the laminated parts B (FIG. 9) are melted by laser light and solidified to form the joints 52, as in the first embodiment. In the present embodiment, the slit S1 is not formed unlike the first embodiment. The slit S1 may be formed in the present embodiment as in the first embodiment.

Next, part of the protrusion 51r is pressed to form the pair of collector connections 51q and the width-varying parts 51p.

Next, the collector connections 51q of the positive collector 51A and the collector connections 51q of the negative collector 51B as well as the lead connection 126b of the positive electrode lead 26 and the lead connection 127b of the negative electrode lead 27 coupled to the cover member 22 are held by the head of an ultrasonic welding device and pressed and welded by ultrasonic vibration (ultrasonic welding). The collector tabs 51na of the collector connection 51q are also welded together.

The insertion method of the lead connections 126b and 127b of the positive electrode lead 26 and the negative electrode lead 27 into the collectors 51 will be described below with reference to FIG. 80. The insertion method of the lead connection 127b of the negative electrode lead 27 into the negative collector 51B is described as a representative. First, the negative electrode lead 27 is placed at a position P11 of the pair of collector-tab groups 51nA and 51nB in the Z direction, offset from the collector-tab group 51nB in the opposite direction to the X direction. Next, the negative electrode lead 27 is moved to a position P12 in the opposite direction to the Z direction so that the tip end of the lead connection 127b and the end 51nb of the collector-tab group 51nB oppose each other in the X direction. The negative electrode lead 27 is moved to a position P13 in the X direction so that the lead connection 127b contacts with the end 51nb of the collector-tab group 51nB. The negative electrode lead 27 is then moved to an attachment position 14 in the Z direction so that the lead connection 127b of the negative electrode lead 27 is inserted by a certain amount between the pair of collector-tab groups 51nA and 51nB, that is, between the pair of collector-tab groups 51n. With the negative electrode lead 27 placed at the attachment position 14, the lead connection 127b and the pair of collector-tab groups 51n are welded together.

Next, the positive electrode lead 26, the negative electrode lead 27, and the electrode assembly 25 united with the cover member 22 are inserted into the accommodating member 21, as in the first embodiment. Then, the cover member 22 is coupled to the accommodating member 21 so as to close the opening (top end opening) of the accommodating member 21. Thereafter, a given amount of electrolyte is poured into the casing 20 through the liquid inlet of the cover member 22.

As described above, in the present embodiment, the joints 52 serve to join the laminated fringes Ba of the electrode assembly 25, as in the first embodiment. Owing to such a structure, for example, vibration applied to the battery 10 is less likely to cause the laminated fringes Ba of the electrode assembly 25 to be misaligned. The electrode assembly 25 can be thus prevented from being deformed. Hence, compared with the electrode assembly 25 including the laminated fringes Ba not joined, the electrode assembly 25 can be enhanced in strength and rigidity, and thus improved in vibration resistance.

Conventionally, batteries are known, which include a wound element including an electrode pair and a separator located between the electrode pair, the electrode pair and the separator laminated and wound around; and collectors located at opposite ends of the wound element, and a lead connected to the collectors. It is preferable to provide a battery of a novel configuration which can reduce the lead in size.

In this respect, in the present embodiment, the pair of collector-tab groups 51n of the collector 51 includes the collector tabs 51na that are part of the positive electrode 31 or the negative electrode 32 (electrode) and extend in the first direction D1a (in the first intersecting direction D1) and are laminated in the second direction D2a (in the second intersecting direction D2). The pair of collector-tab groups 51n is spaced apart from each other in the second direction D2a (in the second intersecting direction D2). The positive electrode lead 26 and the negative electrode lead 27 (lead) are inserted in-between and electrically connected to the pair of collector-tab groups 51n. Owing to such a structure, for example, the positive electrode lead 26 and the negative electrode lead 27 are inserted into one location (lead connection 126b, 127b) between the collector-tab groups 51n. Compared with one collector-tab group held in-between two lead connections in the second direction, the positive electrode lead 26 and the negative electrode lead 27 can be reduced in size. In the positive electrode lead 26 and the negative electrode lead 27 as configured above, the lead connections 126b and 127b can be decreased in axial thickness. This leads to decrease the axial widths of the positive non-layered part 48A and the negative non-layered part 48B, which results in increasing the axial widths of the positive active-material-containing layer 42 and the negative active-material-containing layer 46. Thus, the battery 10 can be increased in capacity.

In the present embodiment, in the first direction D1a (the first intersecting direction D1) the ends 51nb of the pair of collector-tab groups 51n are offset from each other. Owing to such a structure, compared with the ends of the pair of collector-tab groups not offset from each other in the first direction, the pair of collector-tab groups 51n can be stably joined to the lead connections 126b and 127b of the positive electrode lead 26 and the negative electrode lead 27.

Specifically, in the case of the ends of the pair of collector-tab groups not offset in the first direction, the positive electrode and the negative electrode are to be linearly moved in the Z direction and inserted in-between the pair of collector-tab groups. In other words, the positive electrode lead 26 and the negative electrode lead 27 are not movable from the position P12 to the position P13 as described above referring to FIG. 80. For this reason, it is necessary to prevent the tip ends of the positive electrode lead and the negative electrode lead from colliding against the ends of the collector-tab groups in the Z direction and deforming the collector tabs. Thus, the pair of collector-tab groups is to be modified in advance in order to elongate the distance between the pair of collector-tab groups. This makes it difficult to stably join the pair of collector-tab groups and the lead connections of the positive electrode lead and the negative electrode lead. By contrast, according to the present embodiment, in the first direction D1a (the first intersecting direction D1) the ends 51nb of the pair of collector-tab groups 51n are offset from each other. This makes it possible to move the positive electrode lead 26 and the negative electrode lead 27 from the position P12 to the position P13 described above, which eliminates the unnecessity to elongate the distance between the pair of collector-tab groups 51n. Thereby, the pair of collector-tab groups 51n can be stably joined to the lead connections 126b and 127b of the positive electrode lead 26 and the negative electrode lead 27.

In the present embodiment, the joints 52 serve to join the fringes Ba of the laminated parts B in the electrode assembly 25. Owing to such a structure, for example, collision between the tip ends of the positive electrode lead 26 and the negative electrode lead 27 and the ends 51nb of the collector-tab groups 51n is less likely to cause the collector tabs 51na to be deformed. Further, vibration applied to the battery 10 is less likely to cause the laminated parts B to be misaligned. The electrode assembly 25 can be thus prevented from being deformed. Hence, compared with the electrode assembly 25 including the laminated parts B with the fringes Ba not joined, the electrode assembly 25 can be enhanced in strength and rigidity, and thus improved in vibration resistance.

In the present embodiment, the joint 52 partially joins the fringes Ba of the laminated parts B. Owing to such a structure, for example, gas, when occurs between the positive active-material-containing layer 42 and the negative active-material-containing layer 46 in the electrode assembly 25 (winding 53), can be discharged to the outside of the electrode assembly 25 (winding 53) from the gap S between the laminated parts B with no joint 52.

In the present embodiment, the fringe Ba of the laminated part B includes the thick-thickness part 48d being thickest in the non-layered part 48. Owing to such a structure, the thick-thickness part 48d having a relatively high strength can work to enhance the strength of the fringe Ba. This improves the vibration resistance of the electrode assembly 25.

The present embodiment has described the example that the positive electrode lead 26 and the negative electrode lead 27 are joined to the collectors 51 by ultrasonic welding. However, it is not limited thereto. The positive electrode lead 26 and the negative electrode lead 27 may be joined to the collectors 51, for example, by electric resistance welding or friction stir welding.

The present embodiment has described the example that the base material 60 of the electrode assembly 25 is cut by laser light. However, it is not limited to such an example. For example, the base material 60 may be cut by ultrasonic cutting.

### <Twenty-Third Embodiment>

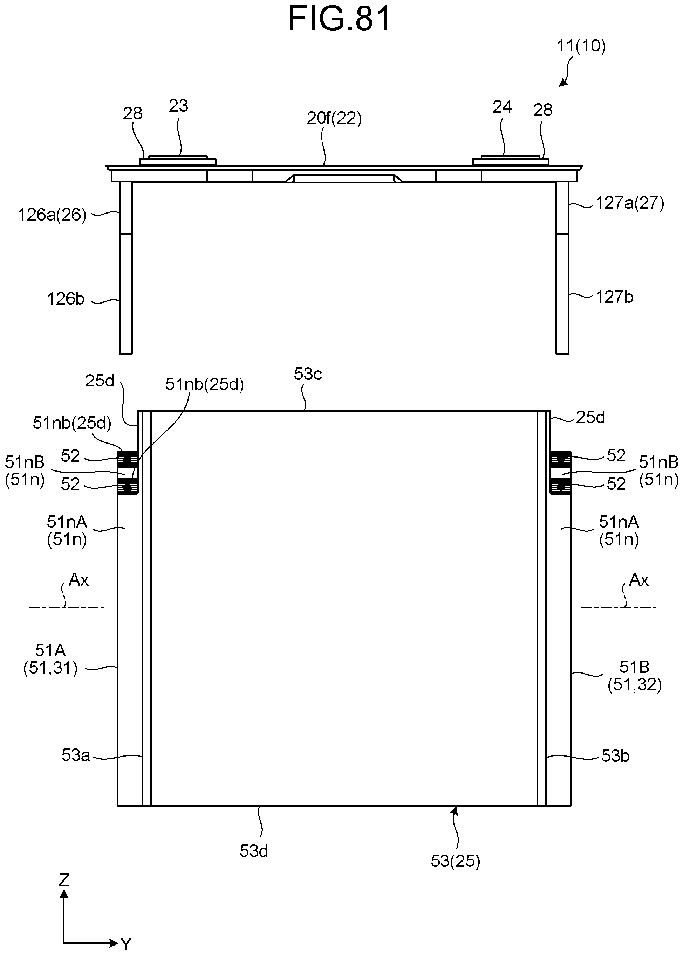

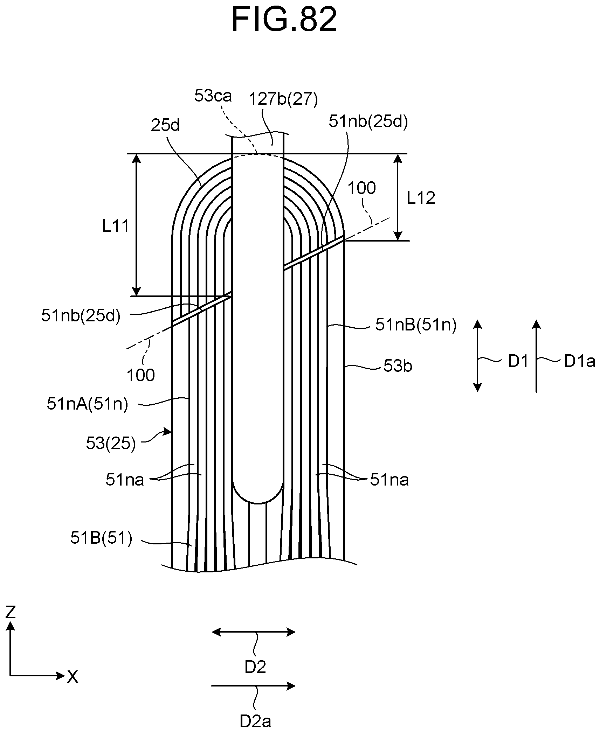

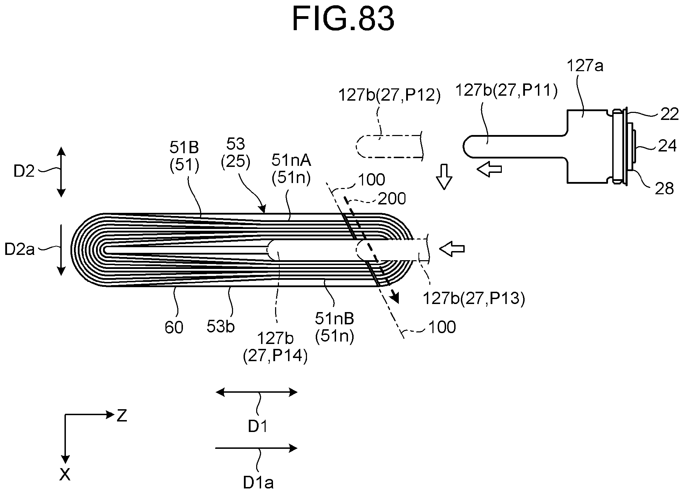

FIG. 81 is a schematic illustrative exploded front view of the cover assembly 11 in the battery 10 in the twenty-third embodiment. FIG. 82 is a partial schematic illustrative side view of the cover assembly 11 in the twenty-third embodiment. FIG. 83 is a diagram for explaining a manufacturing method of the battery 10 in the twenty-third embodiment.

The battery 10 in the present embodiment has a similar configuration to the battery 10 in the twenty-second embodiment. The present embodiment, therefore, achieves similar effects based on a similar configuration to that in the twenty-second embodiment.

However, the present embodiment mainly differs from the twenty-second embodiment in the shape of the pair of collector-tab groups 51n. As illustrated in FIGS. 81 and 82, the ends 51nb in the first direction D1a of the pair of collector-tab groups 51n in the present embodiment extend along one inclined surface 100 (FIG. 82). The inclined surface 100 is a virtual inclined surface that extends in the axial direction and is inclined relative to the first direction D1a and the second direction D2a. As illustrated in FIG. 83, the shape of the pair of collector-tab groups 51n above can be formed by irradiating the base material 60 with laser light 200 along the inclined surface 100. FIG. 83 illustrates the center of laser light 200.

As configured above, for example, the ends 51nb of the pair of collector-tab groups 51n in the first direction D1a can be shaped by single cutting with laser light 200. This can prevent an increase in time and effort involved with the manufacturing of the battery 10.

### <Twenty-Fourth Embodiment>

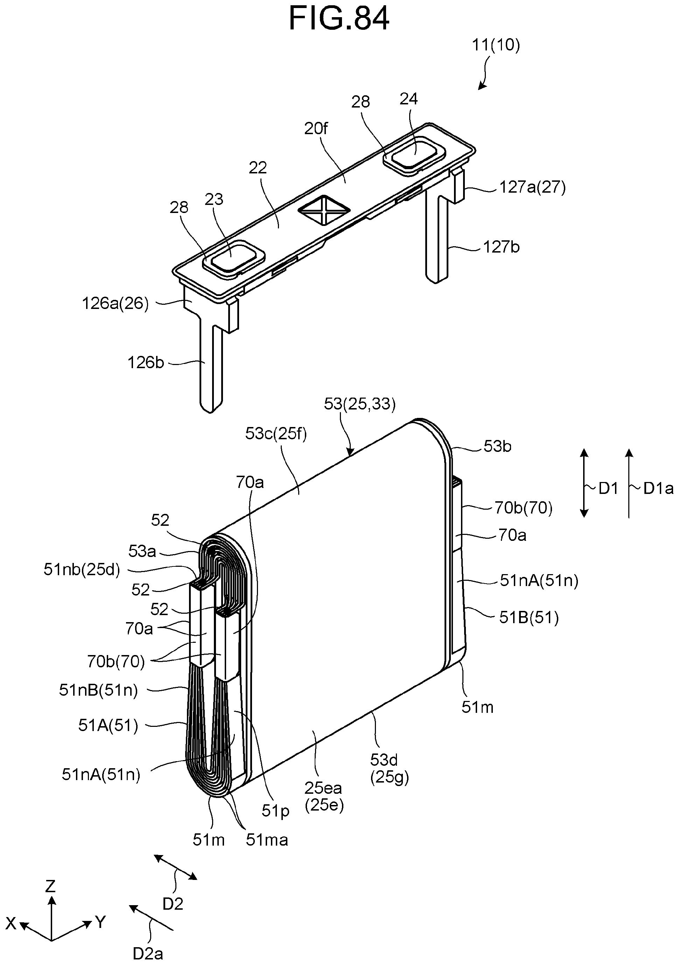

FIG. 84 is a schematic illustrative exploded perspective view of the cover assembly 11 of the battery 10 in the twenty-fourth embodiment. The battery 10 in the present embodiment has a similar configuration to the battery 10 in the twenty-second embodiment. The present embodiment, therefore, achieves similar effects based on a similar configuration to that in the twenty-second embodiment.

However, the present embodiment differs from the twenty-second embodiment in that a pair of collector-tab groups 51n include a holding member 70. The holding member 70 includes a pair of holding plates 70a and a connection plate70b. The holding member 70 can be formed by folding and molding a metal sheet. A pair of holding plates 70a are joined to the collector-tab group 51n, for example, by welding so as to sandwich the collector-tab group 51n in the second direction D2a (second intersecting direction D2). That is, the collector-tab group 51n is located between a pair of holding plates 70a. The connection plate70b is placed on the collector-tab group 51n in the axial direction to connect a pair of holding plates 70a. The lead connections 126b and 127b of the positive electrode lead 26 and the negative electrode lead 27 are inserted between a pair of holding members 70 and joined to the holding plates 70a of the holding members 70, for example, by welding. That is, the lead connections 126b and 127b of the positive electrode lead 26 and the negative electrode lead 27 are electrically connected to the collector-tab groups 51n through the holding members 70. The holding member 70 may be provided for one of the pair of collector-tab groups 51n (for example, the collector-tab group 51nA with a larger amount of extension (length) from the base group 51m).

The holding member 70 is located at the collector-tab group 51n, for example, before cutting for finishing the shape of the collector-tab group 51n. In this case, as an example, the holding member 70 having a finished shape may be attached to the collector-tab group 51n and thereafter the collector-tab group 51n may undergo final cutting to complete shaping. As another example, the holding member 70 with its shape not finished may be attached to the collector-tab group 51n and thereafter the holding member 70 is cut together with the collector-tab group 51n in the cutting for finishing the shape of the collector-tab group 51n, thereby finishing the shape of the holding member 70. As another example, the holding member 70 may be attached to the collector-tab group 51n after the final cutting to complete the shape of the collector-tab group 51n.

As configured above, the holding member 70 can prevent the collector-tab group 51n from spreading out. This can prevent breakage of the metal foil of the positive collector 41 or the negative collector 45 when the lead connection 126b, 127b is inserted between a pair of collector-tab groups 51n.

### <Twenty-Fifth Embodiment>

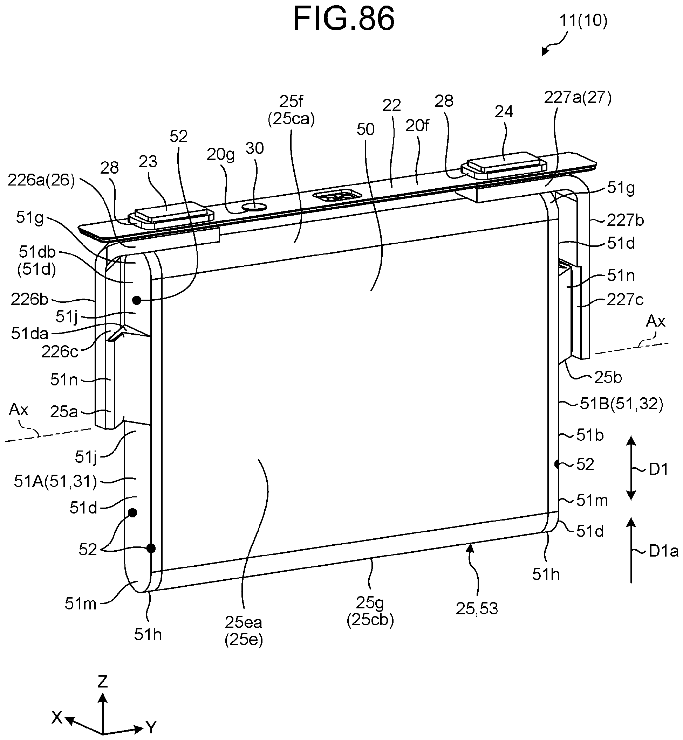

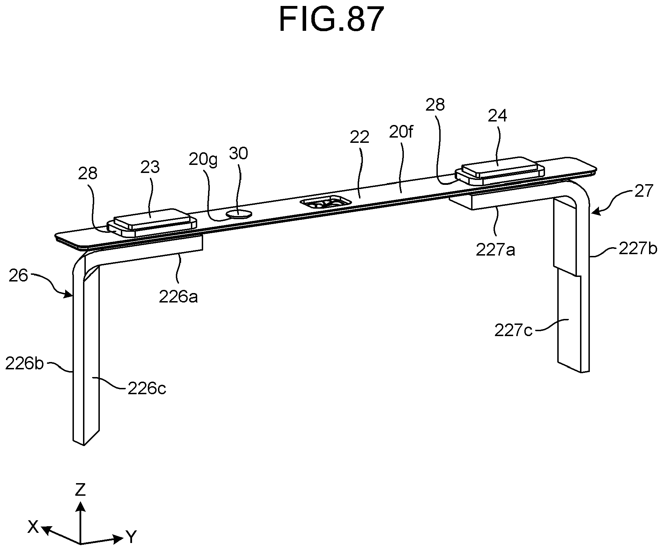

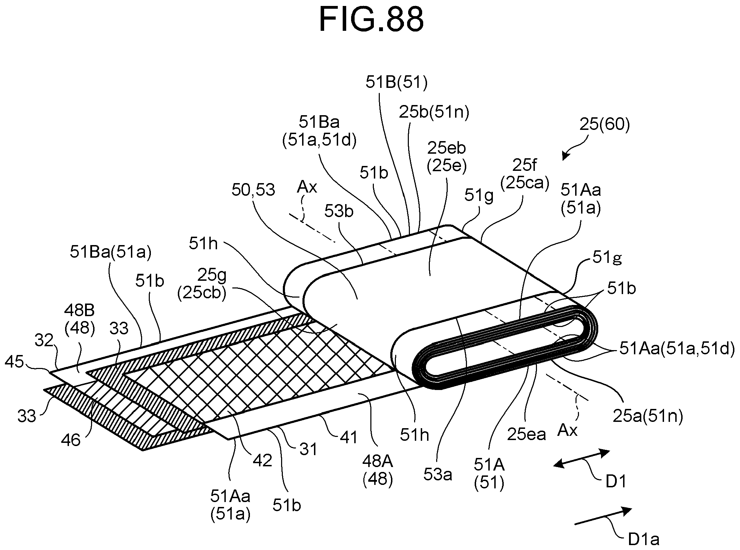

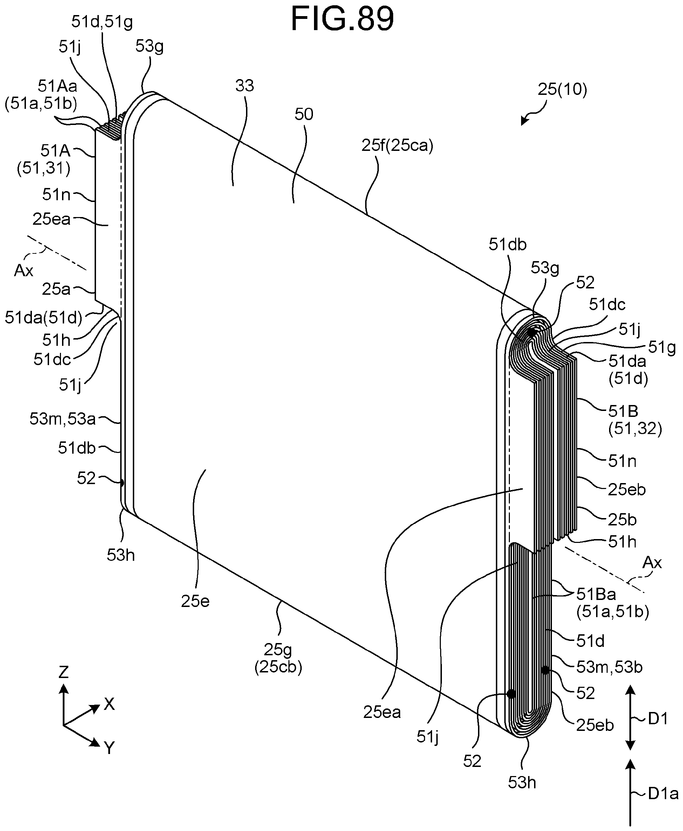

FIG. 85 is a schematic illustrative cross-sectional view of the battery 10 in the present embodiment. FIG. 86 is a schematic illustrative perspective view of the cover assembly 11 in the present embodiment. FIG. 87 is a partial schematic illustrative exploded perspective view of the cover assembly 11 in the present embodiment. FIG. 88 is a schematic illustrative exploded perspective view of the base material 60 of the electrode assembly 25 in the present embodiment and illustrates the base material 60 partially developed. FIG. 89 is a schematic illustrative exploded perspective view of the electrode assembly 25 in the present embodiment and illustrates the collector-tab group 51n of the collector 51 before being folded back. In FIG. 88, the separator 33 is indicated by hatching for the sake of better understanding.

As illustrated in FIGS. 85 to 89, the battery 10 in the present embodiment includes a casing 20, a positive electrode terminal 23, a negative electrode terminal 24, an electrode assembly 25, a positive electrode lead 26, and a negative electrode lead 27, as in the first embodiment. As described above, the electrode assembly 25 is created from the base material 60 illustrated in FIG. 8.

As illustrated in FIGS. 86 and 89, the electrode assembly 25 includes cut parts 51d. As described above, the cut parts 51d are formed by melt-cutting a given removal part from the collector 51 in the base material 60 (FIG. 88) of the electrode assembly 25 during manufacturing of the electrode assembly 25. FIG. 88 depicts an exemplary boundary between the collector-tab group 51n described later and the removal part of the collector 51 by a dashed-dotted line.

The electrode assembly 25 will now be described in more detail. As illustrated in FIGS. 86, 88, and 89, in the winding 53 of the electrode assembly 25, the positive electrode 31, the negative electrode 32, and the separator 33 laminated and wound constitute a power generator 50 having a flat shape. The wound positive non-layered part 48A constitutes the positive collector 51A extending from one end of the power generator 50. That is, the positive collector 51A includes a part of the positive collector 41 on which the positive active-material-containing layer 42 is not laminated (positive non-layered part 48A). As is understood from the above, the positive collector 51A includes the positive electrode 31. The axial end 25a of the electrode assembly 25 matches the ends of the positive collector 41 and the positive non-layered part 48A. The positive collector 51A is electrically connected to the positive electrode terminal 23. The positive collector 51A is an exemplary collector.

The wound negative non-layered part 48B forms a negative collector 51B extending from the other end of the power generator 50. That is, the negative collector 51B includes a part of the negative collector 45 on which the negative active-material-containing layer 46 is not laminated (negative non-layered part 48B). As is understood from the above, the negative collector 51B includes the negative electrode 32. The axial end 25b of the electrode assembly 25 matches the ends of the negative collector 45 and the negative non-layered part 48B. The negative collector 51B is electrically connected to the negative electrode terminal 24. The negative collector 51B is an exemplary collector.

As illustrated in FIGS. 86 and 89, the winding 53 includes a base 53m, and the collector 51 includes a collector-tab group 51n. The base 53m is an axially extending part of the winding 53 from the power generator 50 by a given length and includes part of the substrate 25e and part of a turnback pair 25f and 25g. The base 53m supports the collector-tab group 51n and serves as a base for the collector-tab group 51n. The collector-tab group 51n protrudes from the base 53m in the axial direction. The collector-tab group 51n includes part of the substrate 25e. The collector-tab group 51n is provided with cut parts 51d on both sides in the first intersecting direction D1. The collector-tab group 51n having such a structure includes part of the extension pair 25ea and 25eb and does not include a turnback pair 25f and 25g. That is, in the collector-tab group 51n, the positive electrode 31, the negative electrode 32, and the separator 33 are not folded back. As illustrated in FIG. 85, the collector-tab group 51n of the positive collector 51A is electrically connected to the positive electrode lead 26 through the conductive holding member 70. The holding member 70 is fixed to the collector-tab group 51n of the positive collector 51A while sandwiching the collector-tab group 51n of the positive collector 51A. The collector-tab group 51n of the negative collector 51B is electrically connected to the negative electrode lead 27 through the conductive holding member 71. The holding member 71 is fixed to the collector-tab group 51n of the negative collector 51B while sandwiching the collector-tab group 51n of the negative collector 51B. FIG. 89 depicts an exemplary boundary between the base 53m and the collector-tab group 51n by a dashed-dotted line. FIG. 86 omits depicting the holding members 70 and 71. The base 53m is also referred to as an extension, the collector-tab group 51n is also referred to as a protrusion or a convexity, and the holding member 71 is also referred to as an intervening member. The collector-tab group 51n is an exemplary connection.

As illustrated in FIG. 89, in at least part of the laminated collector tabs 51na of each collector 51, the fringes Ba are aligned with each other. In the present embodiment, the collector tab 51na of the positive collector 51A and the collector tab 51na of the negative collector 51B may be distinctively referred to as a collector tab 51Aa and a collector tab 51Ba, respectively.

As illustrated in FIGS. 85 and 86, each collector 51 is bent. Specifically, the collector-tab group 51n of the positive collector 51A is bent relative to the power generator 50 in a third direction D21 (FIG. 85) intersecting the first intersecting direction D1 and the axial direction, relative to the base 53m and the power generator 50. The third direction D21 is inclined to the first intersecting direction D1 and the axial direction. The collector-tab group 51n of the negative collector 51B is bent in a fourth direction D31 (FIG. 85) intersecting the first intersecting direction D1 and the axial direction relative to the base 53m and the power generator 50. The fourth direction D31 is orthogonal to the first intersecting direction D1 and the axial direction. The third direction D21 and the fourth direction D31 are an exemplary second direction.

As illustrated in FIGS. 86 and 89, each collector 51 includes cut parts 51d. The cut parts 51d include the fringes Ba of the collector tabs 51na.

The present embodiment includes four cut parts 51d. More specifically, one cut part 51d extends between the axial end 25a of the positive collector 51A and one end 53g of the base 53m continuous to the positive collector 51A in the first intersecting direction D1. One cut part 51d extends between the axial end 25a of the positive collector 51A and the other end 53h of the base 53m continuous to the positive collector 51A in the first intersecting direction D1. One cut part 51d extends between the axial end 25b of the negative collector 51B and one end 53g of the base 53m continuous to the negative collector 51B in the first intersecting direction D1. One cut part 51d extends between the axial end 25b of the negative collector 51B and the other end 53h of the base 53m continuous to the negative collector 51B in the first intersecting direction D1. Thus, in the present embodiment, the cut parts 51d are located at the opposite ends 51g and 51h of the collector 51 in the first intersecting direction D1. In the present embodiment, the collector 51 is provided with the cut part 51d at at least one (as an example, both) of opposite ends 51g and 51h in the first intersecting direction D1.

The cut part 51d includes a first extension 51da extending in the axial direction and a second extension 51db extending in the first intersecting direction D1. The first extension 51da is included in the collector-tab group 51n of the collector 51. More specifically, the first extension 51da is made of the end of the collector-tab group 51n in the first intersecting direction D1. The second extension 51db is included in the base 53m of the winding 53. More specifically, the second extension 51db is made of an exposed part of the end of the base 53m at which the collector-tab group 51n is located. A connection 51dc of a curved shape connects between the first extension 51da and the second extension 51db. The connection 51dc is also referred to as a corner.

The cut parts 51d define depressions 51j facing the cut part 51d in the electrode assembly 25. The depressions 51j are depressed toward the axial center of the electrode assembly 25. The depressions 51j are also referred to as cutouts, dents, and missing parts.

Each cut part 51d is provided with a joint 52. The joint 52 is located in at least one or more of the first extension 51da, the second extension 51db, and the connection 51dc. The joint 52 faces the depression 51j.

As illustrated in FIGS. 86 and 89, the electrode assembly 25 is provided with joints 52. The joints 52 join the fringes Ba of the laminated parts B of the collector 51 in the electrode assembly 25. The joints 52 may serve to join the fringes Ba of the laminated collector tabs 51na of the collector 51. The joints 52 are formed by melting and solidifying the fringes Ba at the time of melt-cutting a given removal part from the collector 51 in the base material 60 (FIG. 85). That is, the joints 52 are included in the cut part 51d, forming the fringes Ba. The joints 52 partially join the laminated fringes Ba. In the present embodiment, the joints 52 are spaced apart from each other. Each base 53m may include the joints 52 separately. That is, the joints 52 may be included in each collector 51 separately. The number and locations of the joints 52 illustrated in FIGS. 86 and 89 are merely exemplary and not limited to such an example. The number of joints 52 may be one

As illustrated in FIG. 85, in the collector-tab group 51n of the positive collector 51A, as an example, the laminated collector tabs 51Aa and the connecting surface 226c of the positive electrode lead 26 are joined together by ultrasonic welding. In the collector-tab group 51n of the negative collector 51B, as an example, the laminated collector tabs 51Ba and the connecting surface 227c of the negative electrode lead 27 are joined together by ultrasonic welding.

As illustrated in FIGS. 85 to 87, the positive electrode lead 26 extends between the positive collector 51A of the electrode assembly 25 and the positive electrode terminal 23 to electrically connect the positive collector 51A and the positive electrode terminal 23. The positive electrode lead 26 includes walls 226a and 226b. The positive electrode lead 26 can be formed by folding and molding a metal sheet. The wall 226a stands along the inner surface of the cover member 22 and is coupled to the positive electrode terminal 23. The wall 226b has a strip shape and extends vertically (Z direction) and in the third direction D21 in the casing 20. The upper end of the wall 226b is connected to the wall 226a. The wall 226b has a connecting surface 226c. The connecting surface 226c extends vertically (Z direction) and in the third direction D21 in the casing 20. The connecting surface 226c is joined to the collector-tab group 51n of the positive collector 51A. At least in the part of the collector-tab group 51n joined to the connecting surface 226c, the laminated collector tabs 51na are joined together. The connecting surface 226c and the positive collector 51A as well as the laminated collector tabs 51na are joined by, for example, ultrasonic welding. The positive electrode lead 26 is formed of a conductive material such as a metal material. The walls 226a and 226b are also referred to as joints or parts, and the connecting surface 226c is also referred to as a joint surface or a welded surface.

The negative electrode lead 27 extends between the negative collector 51B of the electrode assembly 25 and the negative electrode terminal 24 to electrically connect the negative collector 51B and the negative electrode terminal 24. The negative electrode lead 27 includes walls 227a and 227b. The negative electrode lead 27 can be formed by folding and molding a metal sheet. The wall 227a stands along the inner surface of the cover member 22 and is coupled to the negative electrode terminal 24. The wall 227b has a strip shape and extends vertically (Z direction) and in the fourth direction D31 in the casing 20. The upper end of the wall 227b is connected to the wall 227a. The wall 227b has a connecting surface 227c. The connecting surface 227c extends vertically (Z direction) and in the fourth direction D31 in the casing 20. The connecting surface 227c is joined to the collector-tab group 51n of the negative collector 51B. At least in a part of the collector-tab group 51n joined to the connecting surface 227c, the laminated collector tabs 51na are joined together. The connecting surface 227c and the negative collector 51B as well as the laminated collector tabs 51na are joined by, for example, ultrasonic welding. The negative electrode lead 27 is formed of a conductive material such as a metal material. The walls 227a and 227b are also referred to as joints or parts, and the connecting surface 227c is also referred to as a joint surface or a welded surface.

The casing 20 includes insulating members 55 and 56 formed of an insulating material. The insulating member 55 is located between the positive collector 51A and the positive electrode lead 26 and the casing 20 and is fixed to the inner surface of the casing 20. The insulating member 56 is located between the negative collector 51B and the negative electrode lead 27 and the casing 20 and is fixed to the inner surface of the casing 20. The insulating members 55 and 56 serve to separate the positive collector 51A, the positive electrode lead 26, the negative collector 51B, and the negative electrode lead 27 from the casing 20. In other words, the positive collector 51A, the positive electrode lead 26, the negative collector 51B, and the negative electrode lead 27 are not electrically connected to the casing 20.

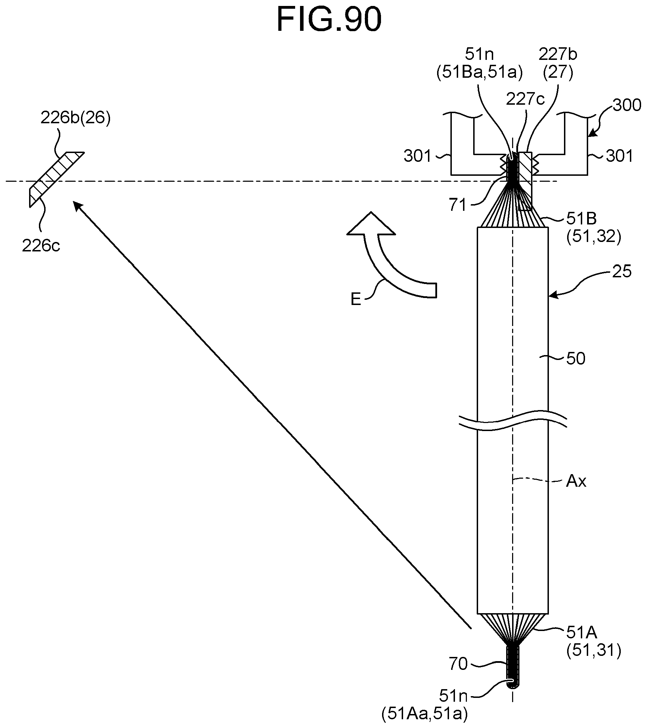

A manufacturing method of the battery 10 will now be described with reference to FIGS. 88, 89, 90, and others. FIG. 90 illustrates a manufacturing method of the battery 10 in the present embodiment.

As illustrated in FIG. 88, the positive electrode 31, the negative electrode 32, and the separator 33 interposed between the positive electrode 31 and the negative electrode 32 are laminated and wound around the axis Ax to form the base material 60 including the electrode assembly 25. Then, a cutter (not illustrated) cuts given removal parts of the base material 60 (FIG. 89). The cut parts 51d are formed by the cutting. The base material 60 is cut by thermally cutting (melt-cutting) the collector 51 (positive non-layered part 48A, negative non-layered part 48B). For example, in the present embodiment, a laser emitting device serves as a cutter that irradiates the collectors 51 (the positive non-layered part 48A and the negative non-layered part 48B) with laser light to heat and melt-cut the collectors 51 (the positive non-layered part 48A and the negative non-layered part 48B). By melt-cutting the joint 52 (FIG. 89) is formed in the cut part 51d of the electrode assembly 25. That is, in the present embodiment, the joint 52 is formed by melting and solidifying the laminated collector tabs 51na of the collector 51 with laser light.

Next, as illustrated in FIG. 90, the positive collector 51A and the negative collector 51B as well as the positive electrode lead 26 and the negative electrode lead 27 coupled to the cover member 22 are clamped by a head 301 of an ultrasonic welding device 300 and pressed and welded by ultrasonic vibration (ultrasonic welding). The head 301 includes a horn and an anvil.

Specifically, the collector-tab group 51n of the negative collector 51B is ultrasonic-welded to the connecting surface 227c of the negative electrode lead 27 fixed to the negative electrode terminal 24 and the cover member 22. In this case, the head 301 clamps the collector-tab group 51n of the negative collector 51B, the holding member 71 fixed to the connecting surface 227c of the negative electrode lead 27, and the negative electrode lead 27, and applies ultrasonic vibration and pressure thereto for welding. The collector-tab group 51n of the negative collector 51B is thereby electrically connected to the negative electrode lead 27. The holding member 71 functions to bundle the collector tabs 51na of the collector-tab group 51n before joining.

Next, while the collector-tab group 51n of the negative collector 51B and the negative electrode lead 27 are clamped by the head 301, the collector-tab group 51n of the positive collector 51A and the power generator 50 (winding 53) are folded back in the direction of arrow E in FIG. 90. Thereby, the collector-tab group 51n of the positive collector 51A held by the holding member 70 comes into contact with the connecting surface 226c of the positive electrode lead 26.

Next, the collector-tab group 51n of the positive collector 51A is ultrasonic-welded to the connecting surface 226c of the positive electrode lead 26 fixed to the positive electrode terminal 23 and the cover member 22. Specifically, the head 301 for ultrasonic welding clamps the collector-tab group 51n of the positive collector 51A, the holding member 70 fixed to the connecting surface 226c of the positive electrode lead 26, and the positive electrode lead 26 and applies ultrasonic vibration and pressure thereto for welding. Thereby, the collector-tab group 51n of the positive collector 51A is electrically connected to the positive electrode lead 26. The holding member 70 functions to bundle the collector tabs 51na of the collector-tab group 51n before joining.

Next, the positive electrode lead 26, the negative electrode lead 27, and the electrode assembly 25 united with the cover member 22 are inserted into the accommodating member 21. The cover member 22 is then coupled to the accommodating member 21 so as to close the opening (top end opening) of the accommodating member 21. A given amount of electrolyte is poured into the casing 20 through the liquid inlet 20g of the cover member 22. The given amount is, for example, an amount sufficient to soak the electrode assembly 25 in the casing 20 with the electrolyte. The liquid inlet 20g is then sealed by a cover 30.

As described above, in the manufacturing method of the battery 10 in the present embodiment, the base material 60 of the electrode assembly 25 is cut to form the cut parts 51d and the joints 52, and then the collector-tab group 51n of the collector 51 is bent.

The angle of the connecting surface 226c of the positive electrode lead 26 will now be described. The connecting surface 226c of the positive electrode lead 26 is set at a given angle relative to the axial direction after assembly of the battery 10. Because of this, depending on the angle of the connecting surface 226c, the head 301 may come into contact with the power generator 50 (winding 53) or the collector-tab group 51n of the positive collector 51A. The angle of the connecting surface 226c relative to the axial direction is therefore set under a certain condition.

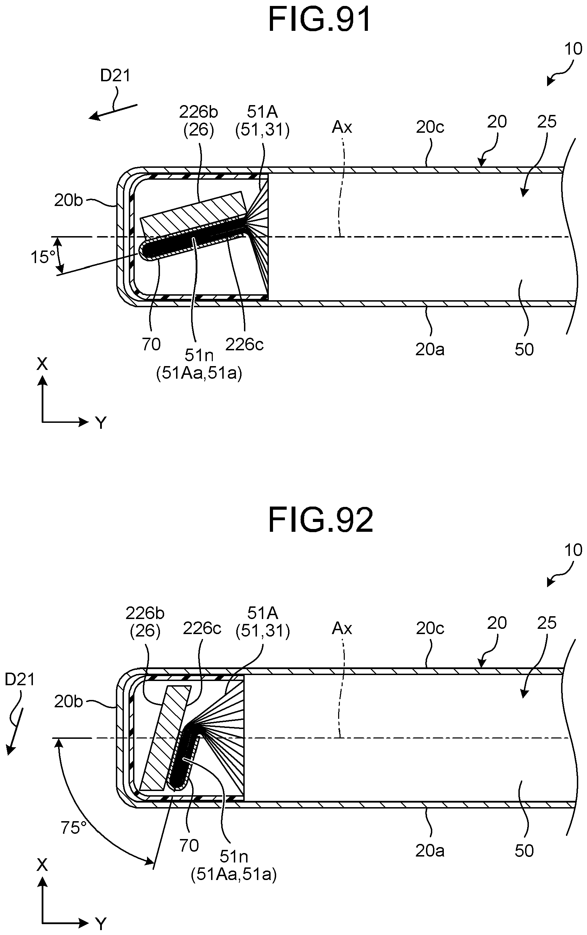

FIG. 91 is a diagram for explaining the battery 10 in the present embodiment and illustrates an exemplary angle of the connecting surface 226c. In this example, the connecting surface 226c is set at a 15-degree angle relative to the axial direction. This creates a sufficient space for the ultrasonic welding head 301 to clamp the positive electrode lead 26 and the holding member 70 holding the collector-tab group 51n of the positive collector 51A. The battery 10 can thus ensure the cross section of the conduction path and a larger space for the power generator 50 (winding 53). Setting the angle of the connecting surface 226c relative to the axial direction to 15 degrees or more can enlarge the space for the power generator 50.

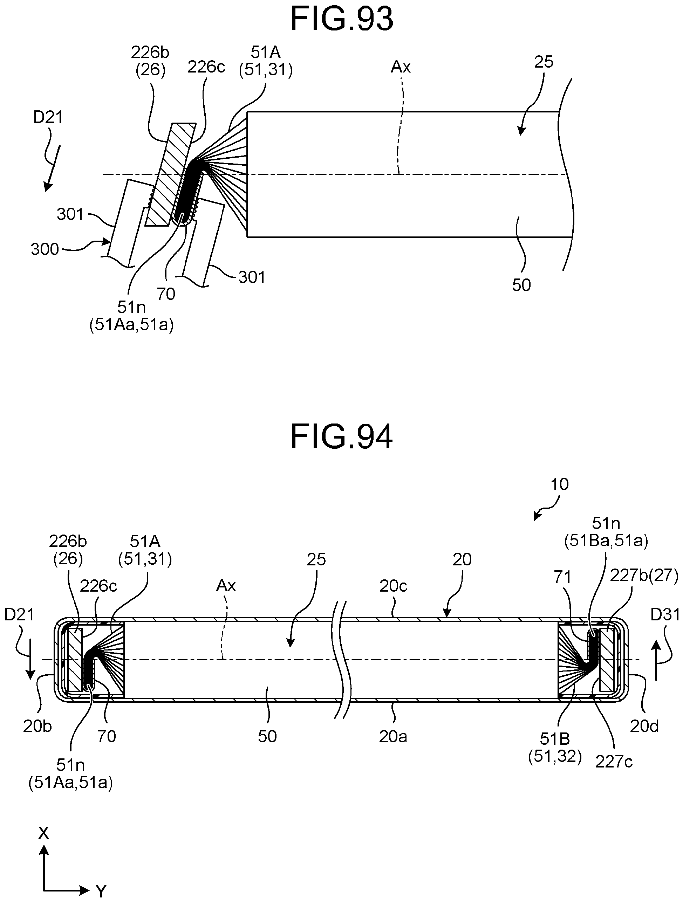

FIG. 92 and FIG. 93 are diagrams for explaining the battery 10 in the present embodiment. FIG. 92 illustrates another example of the angle of the connecting surface 226c, and FIG. 93 illustrates an example that the collector-tab group 51n of the positive collector 51A and the positive electrode lead 26 are clamped by the head 301. In the example in FIGS. 92 and 94, the connecting surface 226c is set at a 75-degree angle relative to the axial direction. This creates a minimum space for the head 301 of a given size to clamp the positive electrode lead 26 and the holding member 70 holding the collector-tab group 51n of the positive collector 51A. The battery 10 can thus ensure the cross section of the conduction path and a larger space for the power generator 50 (winding 53). At 75 degrees or more angle of the connecting surface 226c relative to the axial direction, the head 301 of a given size may come into contact with the power generator 50 (winding 53) or the collector-tab group 51n of the positive collector 51A.

Based on the above, in the present embodiment, as an example, the third direction D21 is set at an angle of 15 to 75 degrees, both inclusive, relative to the axial direction. In this case, setting the angle of the connecting surface 226c relative to the axial direction to 75 degrees can ensure a larger space for the power generator 50 (winding 53) than setting the angle to 15 degrees. That is, setting the angle of the connecting surface 226c relative to the axial direction to a larger angle to an extent that the head 301 comes into no contact with the power generator 50 (winding 53) or the collector-tab group 51n of the positive collector 51A makes it possible to ensure a larger space for the power generator 50 (winding 53).

As described above, in the present embodiment, the joint 52 joins the laminated fringes Ba of the electrode assembly 25, as in the first embodiment. Owing to such a structure, for example, vibration applied to the battery 10 is less likely to cause the laminated fringes Ba of the electrode assembly 25 to be misaligned. The electrode assembly 25 can be thus prevented from being deformed. Hence, compared with the laminated fringes Ba of the electrode assembly 25 not joined, the electrode assembly 25 can be enhanced in strength and rigidity, and thus improved in vibration resistance.

Conventionally, batteries are known, which include an electrode assembly formed by laminating and winding an electrode pair of a sheet form and a separator located between the electrode pair; and a bent collector located at an end of the electrode assembly, and a lead connected to the collector. It is preferable to provide a battery of a novel configuration that can exert higher energy density and is easy to assemble.

In this respect, in the present embodiment, the collector 51 includes the collector-tab group 51n electrically connected to the connecting surface 226c, 127c and including part of the extension pair 25ea and 25eb and no turnback pair 25f and 25g. Owing to such a structure, for example, the collector-tab group 51n including no turnbacks 25f and 25g can be easily bent during manufacturing of the battery 10, compared with the collector-tab group 51n with the turnbacks 25f and 25g. This can improve shape accuracy of the collector-tab group 51n. The collector-tab group 51n can be easily connected to the positive electrode lead 26 and the negative electrode lead 27. In other words, the assembly of the battery 10 can be facilitated. The collector-tab group 51n can be easily bent at a larger bend angle (folding angle), compared with the collector-tab group 51n including the turnbacks 25f and 25g. This leads to shortening the distance between the power generator 50 (winding 53) and the walls 20c and 20d of the casing 20. The battery 10 can thus ensure the cross section of the conduction path and a larger space for the power generator 50 (winding 53).

In the present embodiment, the connecting surface 226c of the positive electrode lead 26 extends in the third direction D21 (second direction) intersecting the first intersecting direction D1 and the axial direction, and the connecting surface 227c of the negative electrode lead 27 extends in the fourth direction D31 (second direction) intersecting the first intersecting direction D1 and the axial direction. The collector-tab group 51n of the positive collector 51A joined to the connecting surface 226c extending in the third direction D21 is bent in the third direction D21. The collector-tab group 51n of the negative collector 51B joined to the connecting surface 227c extending in the fourth direction D31 is bent in the fourth direction D31. Such a structure serves to decrease the space necessary for placing the positive electrode lead 26 and the negative electrode lead 27. That is, the distance between the power generator 50 and the wall 20c, 20d of the casing 20 can be shortened. The battery 10 can thus ensure the cross section of the conduction path and a larger space for the power generator 50 (winding 53). Consequently, the battery 10 can be greatly increased in capacity and output at the same time.

As described above, the present embodiment can provide the battery 10 that can exert higher energy density and is easy to assemble, and the manufacturing method of such a battery 10.

In the present embodiment, the joint 52 joins the laminated fringes Ba of the electrode assembly 25 in the collector 51 of the electrode assembly 25. Owing to such a structure, for example, vibration applied to the battery 10 is less likely to cause the laminated parts B (collector tabs 51na) of the electrode assembly 25 (the base 53m and the collector tabs 51na) to be misaligned. This can make the collector 51 and the electrode assembly 25 less deformable. Hence, compared with the fringes Ba of the electrode assembly 25 not joined, the collector 51 and the electrode assembly 25 can be enhanced in strength and rigidity, and thus improved in vibration resistance.

The present embodiment has described the example that the connecting surface 227c of the negative electrode lead 27 is orthogonal to the axial direction, and the connecting surface 226c of the positive electrode lead 26 is inclined to the axial direction. However, it is not limited to such an example. The connecting surface 226c of the positive electrode lead 26 may be orthogonal to the axial direction, and the connecting surface 227c of the negative electrode lead 27 may be bent relative to the axial direction. That is, the third direction D21 may be orthogonal to the first intersecting direction D1 and the axial direction, and the fourth direction D31 may be inclined to the first intersecting direction D1 and the axial direction. Thus, the positive electrode lead 26 and the negative electrode lead 27 may be reverse in terms of shape to that in the present embodiment. In this case, the shapes of the collector-tab group 51n of the positive collector 51A and the collector-tab group 51n of the negative collector 51B are reverse to the ones in the present embodiment.

The present embodiment has described the example that the positive electrode lead 26 and the negative electrode lead 27 are joined to the collectors 51 by ultrasonic welding. However, it is not limited to such an example. The positive electrode lead 26 and the negative electrode lead 27 may be joined to the collectors 51 by any method as long as it can enable electrical connection and ensure the cross section of the conduction path. For example, electric resistance welding or friction stir welding may be applied. Ultrasonic welding, electric resistance welding, and friction stir welding are exemplary joining methods of clamping and welding an intended joint.

The present embodiment has described the example that the angle of the connecting surface 226c relative to the axial direction is set to 15 to 75 degrees, both inclusive. However, it is not limited to such an example. The angle condition is defined by the size of the head 301, and the angle may be set to any angle as long as the head 301 can clamp the intended joint.

For example, as illustrated in FIG. 94, the connecting surface 226c may be set at a 90-degree angle relative to the axial direction. That is, the connecting surface 226c may be orthogonal to the axial direction, as with the connecting surface 227c. In this case, the third direction D21 and the fourth direction D31 are both orthogonal to the axial direction. In this case, the battery 10 can ensure the cross section of the conduction path and a relatively large space for the power generator 50.

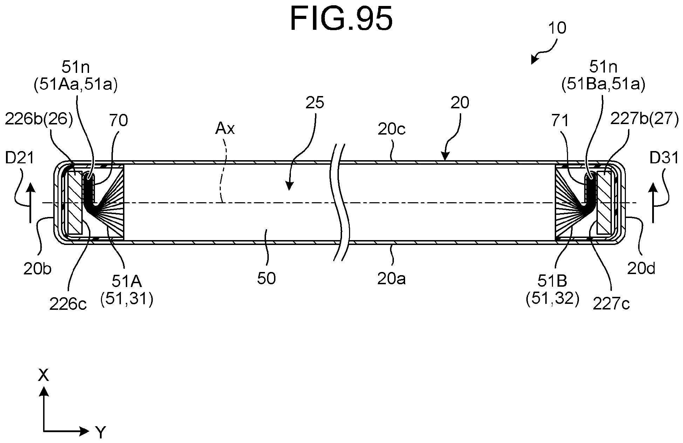

The present embodiment has described the example of welding the collector-tab group 51n of the negative collector 51B and the negative electrode lead 27, and then folding the power generator 50 and welding the collector-tab group 51n of the positive collector 51A and the positive electrode lead 26. However, it is not limited to such a procedure. For example, the positive electrode lead 26 and the negative electrode lead 27 may be attached and welded to cover the collector-tab group 51n of the positive collector 51A and the collector-tab group 51n of the negative collector 51B. In this case, as illustrated in FIG. 95, the collector-tab group 51n of the positive collector 51A and the collector-tab group 51n of the negative collector 51B are inflected in the same direction and welded to the positive electrode lead 26 and the negative electrode lead 27, respectively. With such a structure, the battery 10 can also ensure the cross section of the conduction path and a relatively large space for the power generator 50.

The present embodiment has described the example that the connecting surfaces 226c and 127c of the positive electrode lead 26 and the negative electrode lead 27 both extend in the second direction (the third direction D21 or the fourth direction D31) intersecting the first intersecting direction D1 and the axial direction. However, it is not limited to such an example. For example, either of the connecting surfaces 226c and 127c of the positive electrode lead 26 and the negative electrode lead 27 may extend in the second direction (the third direction D21 or the fourth direction D31) intersecting the first intersecting direction D1 and the axial direction.

The present embodiment has described the example that the base material 60 of the electrode assembly 25 is cut with laser light. However, it is not limited to such an example. For example, the base material 60 may be cut by ultrasonic cutting. The cutter may include a press device that can press the ends of the base material 60 including the collectors 51 of the electrode assembly 25. The press device presses the ends of the base material 60 to be able to shorten the distance and the gap between the collector tabs 51na, which can facilitate focusing of laser light. In addition, the collector tabs 51na can be easily melt together. The cutting takt time can be shortened.

The present embodiment has described the example that the collector tabs 51na of the collector-tab group 51n are bundled by the holding member 70, 71 and then are bent. However, it is not limited to such an example. For example, the collector-tab group 51n may be bent and then the collector tabs 51na may be bundled by the holding member 70, 71.

The present embodiment has described the example that the collector 51 includes, at the ends in the first intersecting direction D1, the cut parts 51d. However, the collector 51 including the cut part 51d at either of the opposite ends 51g and 51h (top end or bottom end) in the first intersecting direction D1 is still more bendable than the one including no cut part 51d.

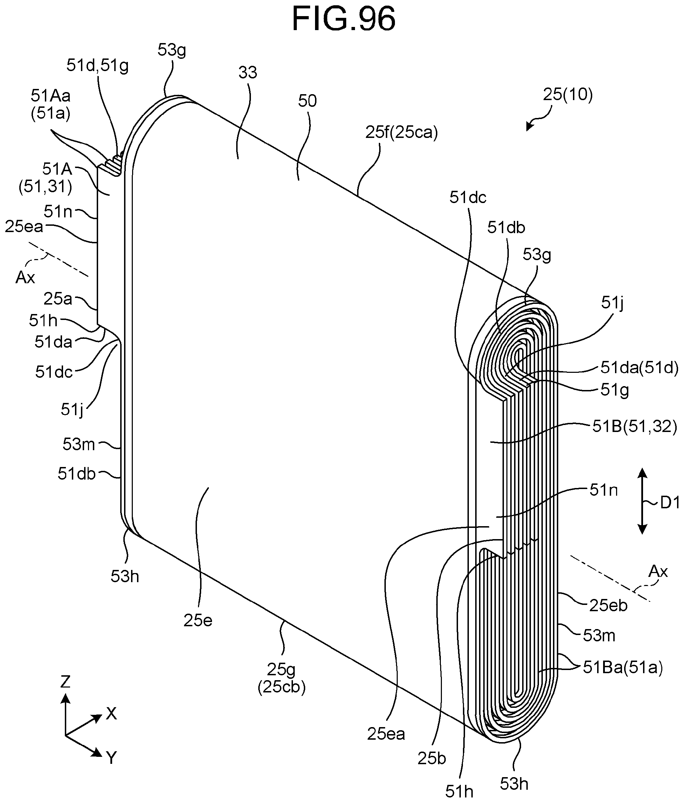

The twenty-sixth to thirtieth embodiments illustrated in FIGS. 96 to 104 will be described below. The batteries 10 in the twenty-sixth to thirtieth embodiments have a similar configuration to the battery 10 in the twenty-fifth embodiment. The twenty-sixth to thirtieth embodiments therefore achieve similar effects based on a similar configuration to that of the twenty-fifth embodiment.

### <Twenty-Sixth Embodiment>

FIG. 96 is a schematic illustrative cross-sectional view of the electrode assembly 25 of the battery 10 in the twenty-sixth and illustrates a state before the collector-tab group 51n of the collector 51 is folded. As illustrated in FIG. 96, the present embodiment mainly differs from the twenty-fifth embodiment in the shape of the collector-tab group 51n of the collector 51.

Specifically, the collector-tab group 51n of each collector 51 in the present embodiment includes one (for example, 25ea) of the extension pair 25ea and 25eb of the substrate 25e of the electrode assembly 25. The collector-tab group 51n does not include a turnback pair 25f and 25g, as in the twenty-fifth embodiment. Although not illustrated in FIG. 96, the cut part 51d is provided with a joint 52, as in the twenty-fifth embodiment.

In the present embodiment, in the manufacturing method of the battery 10, the base material 60 (FIG. 88) is cut by a laser emission device while a shield plate (not illustrated) capable of blocking laser light is inserted in a given position of the base material 60 (FIG. 88). Such a shield plate can adjust the number of sheets cut by laser light. The shield plate may be formed of, for example, a metal material. The metal material may be, for example, tungsten. Tungsten is a material having the highest melting point of metal materials and can achieve a higher output of laser light. The shield plate may be used in embodiments other than the present embodiment.

### <Twenty-Seventh Embodiment>

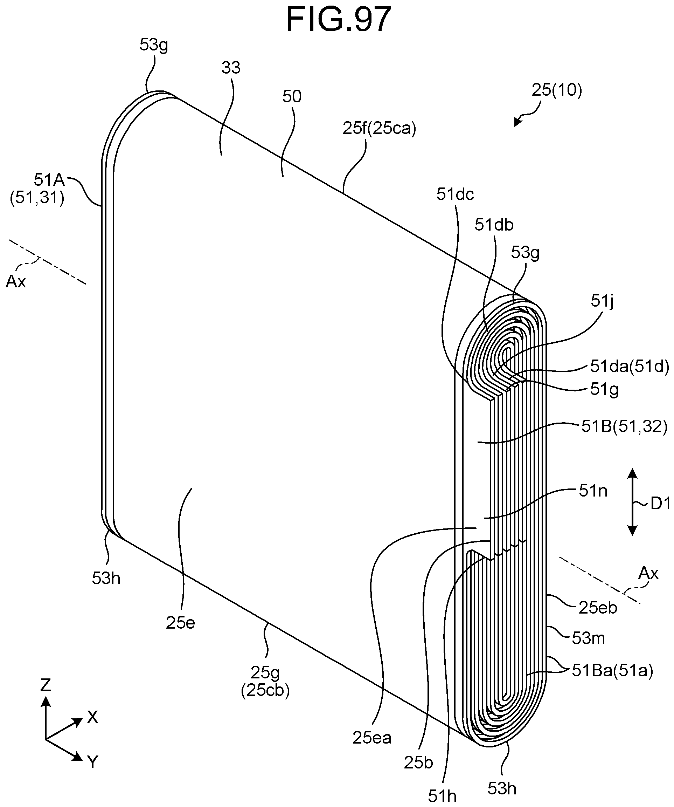

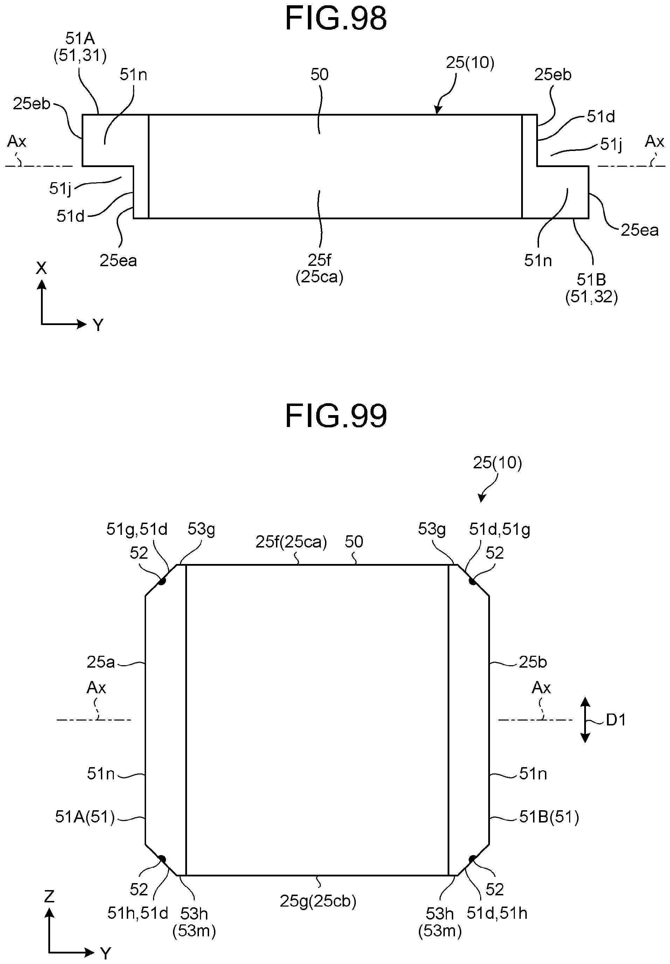

FIG. 97 is a schematic illustrative cross-sectional view of the electrode assembly 25 of the battery 10 in the present embodiment and illustrates a state before the collector-tab group 51n of the collector 51 is folded. FIG. 98 is a schematic illustrative plan view of the electrode assembly 25 in the present embodiment and illustrates a state in which the collector-tab group 51n of the collector 51 is folded. As illustrated in FIGS. 97 and 98, the present embodiment mainly differs from the twenty-fifth embodiment in the shape of the collector-tab group 51n of the collector 51.

Specifically, the collector-tab group 51n of the positive collector 51A in the present embodiment includes one (for an example, 25eb) of the extension pair 25ea and 25eb of the substrate 25e of the electrode assembly 25, and the collector-tab group 51n of the negative collector 51B includes the other (for an example, 25ea) of the extension pair 25ea and 25eb of the substrate 25e of the electrode assembly 25. Each collector-tab group 51n does not include a turnback pair 25f and 25g, as in the twenty-fifth embodiment. Although not illustrated in FIGS. 97 and 98, the cut part 51d is provided with a joint 52, as in the twenty-fifth embodiment.

### <Twenty-Eighth Embodiment>

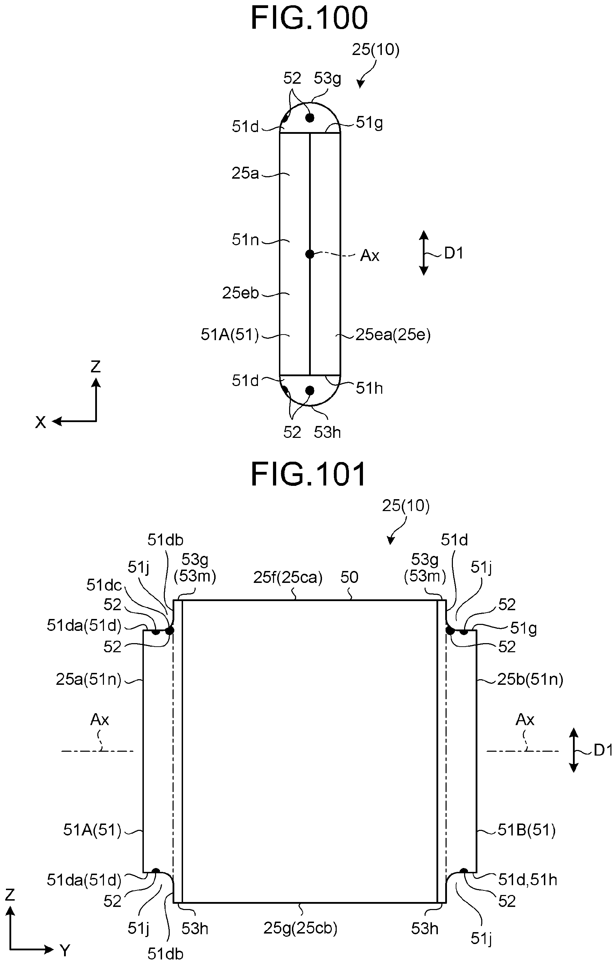

FIG. 99 is a schematic illustrative front view of the electrode assembly 25 of the battery 10 in the present embodiment. FIG. 100 is a schematic illustrative side view of the electrode assembly 25 of the battery 10 in the present embodiment. As illustrated in FIGS. 99 and 100, the present embodiment mainly differs from the twenty-fifth embodiment in the shape of the cut part 51d located at the collector 51.

The shape of four cut parts 51d is located at four corners of the electrode assembly 25. The cut part 51d is inclined relative to the axis Ax. The cut part 51d is provided with a joint 52, as in the twenty-fifth embodiment.

### <Twenty-Ninth Embodiment>

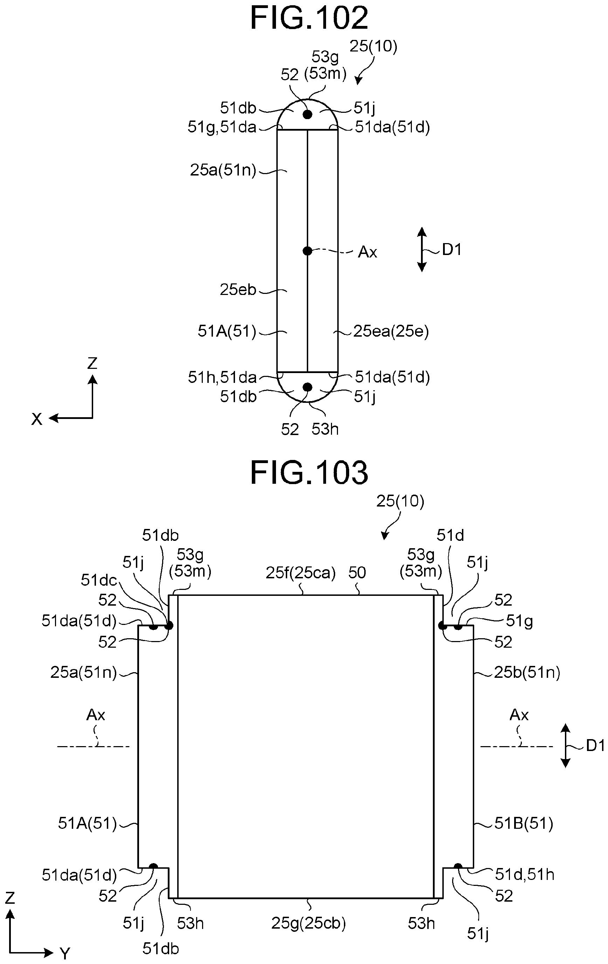

FIG. 101 is a schematic illustrative front view of the electrode assembly 25 of the battery 10 in the present embodiment. FIG. 102 is a schematic illustrative side view of the electrode assembly 25 of the battery 10 in the present embodiment. As illustrated in FIGS. 101 and 102, the present embodiment mainly differs from the twenty-fifth embodiment in length (width) in the first intersecting direction D1 of each collector-tab group 51n of the collector 51. Specifically, in the first intersecting direction D1 the collector-tab group 51n in the present embodiment is longer in length than the collector-tab group 51n in the twenty-fifth embodiment. The cut part 51d includes a joint 52, as in the twenty-fifth embodiment.

### <Thirtieth Embodiment>

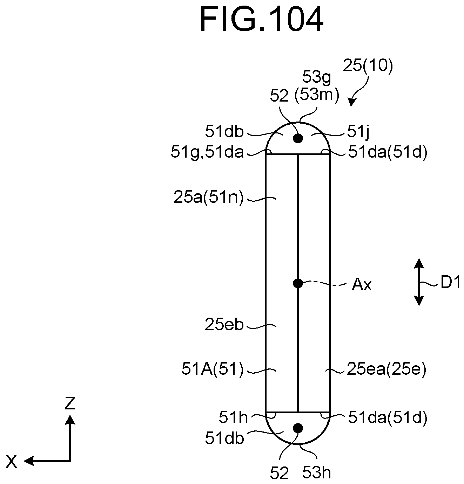

FIG. 103 is a schematic illustrative front view of the electrode assembly 25 of the battery 10 in the thirtieth embodiment. FIG. 104 is a schematic illustrative side view of the electrode assembly 25 of the battery 10 in the thirtieth embodiment.

As illustrated in FIGS. 103 and 104, the present embodiment mainly differs from the twenty-fifth embodiment in length (width) in the first intersecting direction D1 of each collector-tab group 51n of the collector 51, as in the twenty-ninth embodiment. In the present embodiment, the connection 51dc of the cut part 51d is formed approximately at the right angle. The cut part 51d is provided with a joint 52, as in the twenty-fifth embodiment.

Additional embodiments are described below.
(1) A battery includes an electrode assembly housed in the casing and including a winding and a collector, the winding including an electrode pair of a sheet form with mutually different polarities and a separator located between the electrode pair, the electrode pair and the separator laminated and wound around an axis, the collector being located at each of opposite ends of the winding in a direction of the axis; a terminal supported by the casing and provided for each collector; and a lead that electrically connects the terminal and the electrode assembly. The collector includes a base group of a plurality of bases that is part of the electrode, extends along the axis from an axial end of the winding, and is placed on the top of each other, and a collector-tab group of a plurality of collector tabs that is part of the electrode, extends from the bases in a first intersecting direction intersecting the axis, and is placed on the top of each other, at least one or more of the collector tabs being separated from the winding. The collector-tab group includes a collector connection juxtaposed to and electrically connected to the lead in a second intersecting direction intersecting the axis. In the second intersecting direction the collector connection is narrower in maximum width than the winding. The electrodes are folded back at a location other than the collector-tab group in the electrode assembly.
(2) A battery includes an electrode assembly including a winding and a collector. The winding includes an electrode pair of a sheet form with mutually different polarities and a separator located between the electrode pair, the electrode pair and the separator laminated and wound around an axis, and has one end and the other end opposite to the one end in a first direction intersecting the axis, and a turnback of the electrodes and the separator at the one end and the other end. The collector is located at each of opposite ends of the winding in a direction of the axis. The battery further includes a casing including a wall covering the one end, and accommodating the electrode assembly; a terminal supported by the wall and provided for each collector; and a lead extending from the wall in an opposite direction to the first direction and electrically connecting the terminal and the collector. The collector includes a pair of collector-tab groups of a plurality of collector tabs that is part of the electrode, extends in the first direction, and is placed on the top of each other in a second direction intersecting the axis and the first direction. The pair of collector-tab groups is spaced apart from each other in the second direction. In the first direction, respective ends of the pair of collector-tab groups are misaligned with each other. The lead is inserted between and electrically connected to the pair of collector-tab groups.
(3) A battery includes an electrode assembly including an electrode pair of a sheet form having mutually different polarities and a separator located between the electrode pair, the electrode pair and the separator laminated and wound around an axis; a terminal pair; a lead pair each having a connecting surface and being connected to the different terminals; and a collector pair located at opposite ends of the electrode assembly in an direction of the axis, and electrically connected to the connecting surfaces of the different leads. The electrode assembly includes the extension pair and a turnback pair. The extension pair is located between opposite ends of the electrode assembly in a first direction orthogonal to the axial direction and extends from the electrodes in the first direction. The turnback pair is located at opposite ends of the electrode assembly in the first direction and formed by folding back the electrodes from one of the extension pair to the other. The collector includes a connection electrically connected to the connecting surface, including part of the extension pair, and not including the turnback pair. At least one of the connecting surfaces of the lead pair extends in an intersecting direction intersecting the first direction and the axis. The connection is joined to the connecting surface extending in the intersecting direction and is bent in the intersecting direction.

While certain embodiments have been described, these embodiments have been presented by way of example only, and are not intended to limit the scope of the inventions. Indeed, the embodiments described herein may be embodied in different other forms; various omissions, substitutions, combinations, and changes may be made without departing from the spirit of the inventions. The above embodiments are incorporated in the scope and spirit of the inventions and in the accompanying claims and their equivalents. Specifications (structure, kind, direction, shape, size, length, width, thickness, height, number, arrangement, position, material, etc.) of the elements can be modified and carried out as appropriate.

## Claims

1. A battery comprising:
a casing;
a terminal supported by the casing;
an electrode assembly housed in the casing, the electrode assembly comprising
an electrode pair of a sheet form having different polarities from each other,
a separator located between the electrode pair, the electrode pair and the separator laminated and wound around an axis, and;
a collector located at an axial end of the electrode assembly, electrically connected to the terminal, and comprising a plurality of collector tabs, the collector tabs being part of one of the electrodes and laminated on each other with no other electrode and no separator placed in-between; and
a joint that joins fringes of the laminated collector tabs, wherein
the collector includes a cut part including the fringes,
the cut part includes the joint,
the electrode assembly comprises
an extension pair located between opposite ends of the electrode assembly in a first intersecting direction, and extending from the electrodes in the first intersecting direction intersecting a direction of the axis, and
a turnback pair located at opposite ends of the electrode assembly in the first intersecting direction and formed by folding back the electrodes from one of the extension pair to the other, and
the collector includes a connection electrically connected to the terminal, including part of the extension pair, and not including at least one of the turnback pair.

2. The battery according to claim 1, further comprising
a lead that electrically connects the terminal and the electrode assembly, wherein
the electrode assembly comprises a winding in which the electrode pair and the separator located between the electrode pair are laminated and wound around the axis,
the collector is located at each of opposite ends of the winding in the direction of the axis,
the terminal is provided for each of the collectors, the collector comprises
a base group of bases being part of the electrode, extending in the direction of the axis from an axial end of the winding, and placed on the top of each other, and
a collector-tab group of collector tabs being part of the electrode, extending from the bases in the first intersecting direction, and placed on the top of each other, at least one or more of the collector tabs being separated from the winding,
the collector-tab group includes a collector connection that is aligned with and electrically connected to the lead in a second intersecting direction intersecting the direction of the axis and the first intersecting direction;
the collector connection is narrower in maximum width than the winding in the second intersecting direction, and
part of the electrodes is folded back, the part corresponding to the electrode assembly excluding the collector-tab group.

3. The battery according to claim 2, wherein
the collector tabs are all separated from the winding.

4. The battery according to claim 2 or 3, wherein
the number of the bases is equal to or greater than the number of windings of the electrode in the winding.

5. The battery according to any one of claims 2 to 4, wherein
the electrode assembly comprises
an extension pair located between opposite ends of the winding in the first intersecting direction, and extending from the electrodes in the first intersecting direction, and
a turnback pair located at opposite ends of the winding in the first intersecting direction and formed by folding back the electrodes from one of the extension pair to the other, and
the base group does not include at least one of the turnback pair, and the collector-tab group does not include the turnback pair.

6. The battery according to any one of claims 2 to 5, wherein
the lead includes one lead connection juxtaposed to the collector connection in the second intersecting direction.

7. The battery according to claim 6, wherein
in the direction of the axis, the lead connection is located inside an outer periphery of the winding.

8. The battery according to claim 1, further comprising a lead, wherein
the electrode assembly comprises
a winding with one end and the other end opposite to the one end in the first intersecting direction intersecting the axis, formed by laminating and winding around the axis the electrode pair and the separator located between the electrode pair, in which at the one and other ends the electrode pair and the separator are folded back, the electrode pair being of a sheet form and having different polarities from each other, and
a collector located at each of opposite ends of the winding in the direction of the axis,
the casing includes a wall that covers the one end,
the terminal is supported by the wall and provided for each collector,
the lead extends from the wall oppositely to the first intersecting direction to electrically connect the terminal and the collector,
the collector comprises a pair of collector-tab groups of the collector tabs, the pair of collector-tab groups being spaced apart from each other in a second intersecting direction intersecting the direction of the axis and the first intersecting direction,
one ends of the pair of collector-tab groups are misaligned with each other in the first intersecting direction, and
the lead is inserted into to the pair of collector-tab groups for electrical connection.

9. The battery according to claim 8, wherein
the collector-tab group includes a joint at the one end in the first intersecting direction, the joint serving to join fringes of the laminated collector tabs.

10. The battery according to claim 8 or 9, wherein
the one ends of the pair of collector-tab groups in the first intersecting direction extend in the direction of the axis and are along an inclined face inclined relative to the first intersecting direction and the second intersecting direction.

11. The battery according to any one of claims 8 to 10, further comprising
a holding member that holds the collector-tab group in the second intersecting direction.

12. The battery according to claim 1, further comprising:
a terminal pair;
a lead pair each having a connecting surface, and being connected to the terminals different from each other; and
a collector pair located at opposite ends of the electrode assembly in the direction of the axis, the collector pair electrically connected to the connecting surfaces of the leads different from each other, wherein
the connection is electrically connected to the connecting surfaces, includes part of the extension pair, and does not include the turnback pair,
at least one of the connecting surfaces of the lead pair extends in a second direction intersecting the first intersecting direction and the direction of the axis, and
the connection is joined to the connecting surfaces extending in the second direction and bent in the second direction.

13. The battery according to claim 12, wherein
the collectors each include cut parts at opposite ends in the first intersecting direction.

14. The battery according to claim 12 or 13, wherein
at least one of the leads extends in the second direction orthogonal to the direction of the axis.

15. The battery according to any one of claims 12 to 14, wherein
In the second direction, the lead extends at an angle of 15 degrees or more to 75 degrees or less relative to the direction of the axis.

16. The battery according to any one of claims 12 to 15, wherein
each of the lead pair extends in the second direction orthogonal to the direction of the axis.

17. The battery according to any one of claims 2 to 4, wherein
the electrodes each comprises
a collector assembly, and
an active material-containing layer containing an active material and laminated on part of the collector assembly,
the winding includes the active material-containing layer,
the collector is made of a non-layered part of the collector assembly, the non-layered part on which the active material-containing layer is not laminated, and
the non-layered part includes, at a fringe, a thick-thickness part being thickest in thickness in the non-layered part.

18. The battery according to claim 17, wherein
the non-layered part includes
a first part extending from the active material-containing layer,
the fringe, and
a thickness-varying part of a thickness which increases as further away from the first part, and
a second part including the thick-thickness part, and
the thick-thickness part is 1.2 times or more larger in thickness than the first part.

19. A manufacturing method of a battery, the battery comprising a casing; a terminal pair supported by the casing; a lead pair each having a connecting surface and connected to the terminals different from each other; an electrode assembly comprising an electrode pair of a sheet form having different polarities from each other, a separator located between the electrode pair, the electrode pair and the separator laminated and wound around an axis; a collector pair located at opposite ends of the electrode assembly in a direction of the axis, the collectors each including a plurality of collector tabs being part of the electrode and laminated with no other electrode and no separator placed in-between, the collectors being electrically connected to the connecting surfaces of the leads different from each other; and a joint that joins fringes of the laminated collector tabs, wherein the collectors each include a cut part including the fringes; the cut part includes the joint; the electrode assembly includes an extension pair and a turnback pair, the extension pair being located between opposite ends of the electrode assembly in a first intersecting direction intersecting the direction of the axis and extending from the electrodes in the first intersecting direction, the turnback pair being located at opposite ends of the electrode assembly in the first intersecting direction and formed by folding back the electrodes from one of the extension pair to the other; the collector includes a connection electrically connected to the terminal, including part of the extension pair, and not including at least one of the turnback pair; the connection is electrically connected to the connecting surfaces, includes part of the extension pair, and does not include the turnback pair; at least one of the connecting surfaces of the lead pair extends in a second direction intersecting the first intersecting direction and the direction of the axis;
the connection is joined to the connecting surfaces extending in the second direction and bent in the second direction, and the connection includes cut parts at opposite ends in the first intersecting direction, the method comprising
bending the connection after cutting a base material of the electrode assembly to form the cut parts.
